(19) Europäisches Patentamt / European Patent Office / Office européen des brevets

(11) **EP 3 957 700 B1**

(12) **EUROPEAN PATENT SPECIFICATION**

(45) Date of publication and mention
of the grant of the patent:
**29.05.2024 Bulletin 2024/22**

(21) Application number: **20791124.9**

(22) Date of filing: **16.04.2020**

(51) International Patent Classification (IPC):
**C09K 5/04** (2006.01)   **F25B 1/00** (2006.01)
**B60H 1/32** (2006.01)

(52) Cooperative Patent Classification (CPC):
**C09K 5/045;** C09K 2205/106; C09K 2205/126;
C09K 2205/40; F25B 1/00; F25B 2400/121

(86) International application number:
**PCT/JP2020/016787**

(87) International publication number:
**WO 2020/213697 (22.10.2020 Gazette 2020/43)**

(54) **COMPOSITION INCLUDING REFRIGERANT, USE THEREOF, REFRIGERATOR HAVING SAME, AND METHOD FOR OPERATING SAID REFRIGERATOR**

ZUSAMMENSETZUNG, DIE EIN KÜHLMITTEL ENTHÄLT, DEREN VERWENDUNG, KÜHLSCHRANK DAMIT UND VERFAHREN ZUM BETRIEB DIESES KÜHLSCHRANKS

COMPOSITION CONTENANT UN RÉFRIGÉRANT, SON UTILISATION, RÉFRIGÉRATEUR LA PRÉSENTANT, ET PROCÉDÉ DE FONCTIONNEMENT DUDIT RÉFRIGÉRATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.04.2019   JP 2019078133**

(43) Date of publication of application:
**23.02.2022 Bulletin 2022/08**

(60) Divisional application:
**24169656.6 / 4 375 098**

(73) Proprietor: **DAIKIN INDUSTRIES, LTD.**
**Osaka-Shi, Osaka 530-0001 (JP)**

(72) Inventors:
• **ITANO, Mitsushi**
**Osaka-Shi, Osaka 5300001 (JP)**

• **KARUBE, Daisuke**
**Osaka-Shi, Osaka 5300001 (JP)**
• **YOTSUMOTO, Yuuki**
**Osaka-Shi, Osaka 5300001 (JP)**
• **OHKUBO, Shun**
**Osaka-Shi, Osaka 5300001 (JP)**
• **TAKAKUWA, Tatsuya**
**Osaka-Shi, Osaka 5300001 (JP)**

(74) Representative: **Hoffmann Eitle**
**Patent- und Rechtsanwälte PartmbB**
**Arabellastraße 30**
**81925 München (DE)**

(56) References cited:
**WO-A1-2015/015881     WO-A1-2015/186557**
**WO-A1-2015/186670     WO-A1-2015/186671**

**Description**

Technical Field

The present disclosure relates to a composition comprising a refrigerant, use of the composition, a refrigerating machine having the composition, and a method for operating the refrigerating machine.

Background Art

R410A is currently used as an air conditioning refrigerant for, e.g., home air conditioners. R410A is a two-component mixed refrigerant of difluoromethane ($CH_2F_2$: HFC-32 or R32) and pentafluoroethane ($C_2HF_5$: HFC-125 or R125), and is a pseudo-azeotropic composition.
However, the global warming potential (GWP) of R410A is 2088. Due to growing concerns about global warming, R32, which has a GWP of 675, has been increasingly used.
For this reason, various low-GWP mixed refrigerants that can replace R410A have been proposed (PTL 1).

Citation List

Patent Literature

PTL 1: WO2015/186557

Summary of Invention

Technical Problem

The present inventors performed independent examination and conceived of the idea that no prior art had developed refrigerant compositions that have three types of performance, i.e., a refrigerating capacity (also referred to as "cooling capacity" and "capacity") that is equivalent to or higher than that of R410A, a sufficiently low GWP, and a lower flammability (Class 2L) according to the American Society of Heating, Refrigerating and Air-Conditioning Engineers (ASHRAE) standard. An object of the present disclosure is to solve this unique problem.

Solution to Problem

Item 1.

A composition comprising a refrigerant,

the refrigerant comprising $CO_2$, trans-1,2-difluoroethylene (HFO-1132(E)), difluoromethane (R32), and 2,3,3,3-tetrafluoro-1-propene (R1234yf),
wherein
when the mass% of $CO_2$, R32, HFO-1132(E), and R1234yf based on their sum is respectively represented by w, x, y, and z;

if $0<w\leq1.2$, coordinates (x,y,z) in a ternary composition diagram in which the sum of R32, HFO-1132 (E), and R1234yf is (100-w) mass% are within the range of a figure surrounded by curves IJ, JK, and KL, and straight lines LB", B"D, DC, and CI that connect the following 7 points:

point I (0.0, 72.0, 28.0-w),
point J (18.3, 48.5, 33.2-w),
point K (36.8, 35.6, 27.6-w),
point L (51.7, 28.9, 19.4-w),
point B" ($-1.5278w^2+2.75w+50.5$, 0.0, $1.5278w^2-3.75w+49.5$),
point D ($-2.9167w+40.317$, 0.0, $1.9167w+59.683$), and
point C (0.0, $-4.9167w+58.317$, $3.9167w+41.683$),
or on the above line segments (excluding points on the straight lines B"D and CI);

if $1.2<w\leq4.0$, coordinates (x,y,z) in a ternary composition diagram are within the range of a figure surrounded by curves IJ, JK, and KL, and straight lines LB", B"D, DC, and CI that connect the following 7 points:

point I (0.0, 72.0, 28.0-w),
point J (18.3, 48.5, 33.2-w),
point K (36.8, 35.6, 27.6-w),
point L (51.7, 28.9, 19.4-w),
point B" (51.6, 0.0, 48.4-w),
point D (-2.8226w+40.211, 0.0, 1.8226w+59.789), and
point C (0.0, $0.1081w^2$-5.169w+58.447, $-0.1081w^2$+4.169w+41.553), or
on the above line segments (excluding points on the straight lines B"D and CI); or

if 4.0≤w≤7.0, coordinates (x,y,z) in a ternary composition diagram are within the range of a figure surrounded by curves IJ, JK, and KL, and straight lines LB", B" D, DC, and CI that connect the following 7 points:

point I (0.0, 72.0, 28.0-w),
point J (18.3, 48.5, 33.2-w),
point K (36.8, 35.6, 27.6-w),
point L (51.7, 28.9, 19.4-w),
point B" (51.6, 0.0, 48.4-w),
point D (-2.8w+40.1, 0.0, 1.8w+59.9), and
point C (0.0, $0.0667w^2$-4.9667w+58.3, $-0.0667w^2$+3.9667w+41.7), or on the above line segments (excluding points on the straight lines B"D and CI);

the curve IJ is represented by coordinates (x, $0.0236x^2$-1.716x+72, $-0.0236x^2$+0.716x+28-w),
the curve JK is represented by coordinates (x, $0.0095x^2$-1.2222x+67.676, $-0.0095x^2$+0.2222x+32.324-w), and
the curve KL is represented by coordinates (x, $0.0049x^2$-0.8842x+61.488, $-0.0049x^2$-0.1158x+38.512-w).

Item 2.

A composition comprising a refrigerant,

the refrigerant comprising $CO_2$, trans-1,2-difluoroethylene (HFO-1132(E)), difluoromethane (R32), and 2,3,3,3-tetrafluoro-1-propene (R1234yf),
wherein
when the mass% of $CO_2$, R32, HFO-1132 (E), and R1234yf based on their sum is respectively represented by w, x, y, and z;

if 0<w≤1.2, coordinates (x,y,z) in a ternary composition diagram in which the sum of R32, HFO-1132(E), and R1234yf is (100-w) mass% are within the range of a figure surrounded by curves IJ and JK, and straight lines KF, FC, and CI that connect the following 5 points:

point I (0.0, 72.0, 28.0-w),
point J (18.3, 48.5, 33.2-w),
point K (36.8, 35.6, 27.6-w),
point F (-0.0833w+36.717, -4.0833w+5.1833, 3.1666w+58.0997), and
point C (0.0, -4.9167w+58.317, 3.9167w+41.683), or on the above line segments (excluding points on the straight line CI);

if 1.2<w≤1.3, coordinates (x,y,z) in a ternary composition diagram are within the range of a figure surrounded by curves IJ and JK, and straight lines KF, FC, and CI that connect the following 5 points:

point I (0.0, 72.0, 28.0-w),
point J (18.3, 48.5, 33.2-w),
point K (36.8, 35.6, 27.6-w),
point F (36.6, -3w+3.9, 2w+59.5), and
point C (0.0, $0.1081w^2$-5.169w+58.447, $-0.1081w^2$+4.169w+41.553), or
on the above line segments (excluding points on the straight line CI) ;

if 1.3<w≤4.0, coordinates (x,y,z) in a ternary composition diagram are within the range of a figure surrounded by curves IJ and JK, and straight lines KB', B'D, DC, and CI that connect the following 6 points:

point I (0.0, 72.0, 28.0-w),
point J (18.3, 48.5, 33.2-w),
point K (36.8, 35.6, 27.6-w),
point B' (36.6, 0.0, -w+63.4),
point D (-2.8226w+40.211, 0.0, 1.8226w+59.789), and
point C (0.0, $0.1081w^2$-5.169w+58.447, $-0.1081w^2$+4.169w+41.553), or on the above line segments (excluding points on the straight line CI); or

if 4.0≤w≤7.0, coordinates (x,y,z) in a ternary composition diagram are within the range of a figure surrounded by curves IJ and JK, and straight lines KB', B'D, DC, and CI that connect the following 6 points:

point I (0.0, 72.0, 28.0-w),
point J (18.3, 48.5, 33.2-w),
point K (36.8, 35.6, 27.6-w),
point B' (36.6, 0.0, -w+63.4),
point D (-2.8w+40.1, 0.0, 1.8w+59.9), and
point C (0.0, $0.0667w^2$-4.9667w+58.3, $-0.0667w^2$+3.9667w+41.7),
or on the above line segments (excluding points on the straight line CI);

the curve IJ is represented by coordinates (x, $0.0236x^2$-1.716x+72, $-0.0236x^2$+0.716x+28-w); and
the curve JK is represented by coordinates (x, $0.0095x^2$-1.2222x+67.676, $-0.0095x^2$+0.2222x+32.324-w).

Item 3.

A composition comprising a refrigerant,

the refrigerant comprising $CO_2$, R32, HFO-1132(E), and R1234yf,
wherein
when the mass% of $CO_2$, R32, HFO-1132(E), and R1234yf based on their sum is respectively represented by w, x, y, and z,

if 0<w≤1.2, coordinates (x,y,z) in a ternary composition diagram in which the sum of R32, HFO-1132(E), and R1234yf is (100-w) mass% are within the range of a figure surrounded by curve IJ, and straight lines JE, EC, and CI that connect the following 4 points:

point I (0.0, 72.0, 28.0-w),
point J (18.3, 48.5, 33.2-w),
point E (18.2, $-1.1111w^2$-3.1667w+31.9, $1.1111w^2$+2.1667w+49.9), and point C (0.0, -4.9167w+58.317, 3.9167w+41.683), or on the above line segments (excluding points on the straight line CI);

if 1.2<w≤4.0, coordinates (x,y,z) in a ternary composition diagram are within the range of a figure surrounded by curve IJ, and straight lines JE, EC, and CI that connect the following 4 points:

point I (0.0, 72.0, 28.0-w),
point J (18.3, 48.5, 33.2-w),
point E (-0.0365w+18.26, $0.0623w^2$-4.5381w+31.856,
$-0.0623w^2$+3.5746w+49.884), and
point C (0.0, $0.1081w^2$-5.169w+58.447, $-0.1081w^2$+4.169w+41.553), or on the above line segments (excluding points on the straight line CI); or

if 4.0≤w≤7.0, coordinates (x,y,z) in a ternary composition diagram are within the range of a figure surrounded by curve IJ, and straight lines JE, EC, and CI that connect the following 4 points:

point I (0.0, 72.0, 28.0-w),
point J (18.3, 48.5, 33.2-w),

point E (18.1, $0.0444w^2-4.3556w+31.411$, $-0.0444w^2+3.3556w+50.489$), and
point C (0.0, $0.0667w^2-4.9667w+58.3$, $-0.0667w^2+3.9667w+41.7$), or
on the above line segments (excluding points on the straight line CI), and
the curve IJ is represented by coordinates (x, $0.0236x^2-1.716x+72$, $-0.0236x^2+0.716x+28-w$).

Item 4.

A composition comprising a refrigerant,

the refrigerant comprising $CO_2$, R32, HFO-1132(E), and R1234yf,
wherein
when the mass% of $CO_2$, R32, HFO-1132(E), and R1234yf based on their sum is respectively represented by w, x, y, and z,

if $0<w\leq0.6$, coordinates (x,y,z) in a ternary composition diagram in which the sum of R32, HFO-1132(E), and R1234yf is (100-w) mass% are within the range of a figure surrounded by curves GO and OP, and straight lines PB'', B''D, and DG that connect the following 5 points:

point G ($-5.8333w^2-3.1667w+22.2$, $7.0833w^2+1.4167w+26.2$, $-1.25w^2+0.75w+51.6$),
point O (36.8, $0.8333w^2+1.8333w+22.6$, $-0.8333w^2-2.8333w+40.6$),
point P (51.7, $1.1111w^2+20.5$, $-1.1111w^2-w+27.8$),
point B" ($-1.5278w^2+2.75w+50.5$, 0.0, $1.5278w^2-3.75w+49.5$), and
point D ($-2.9167w+40.317$, 0.0, $1.9167w+59.683$), or on the above line segments (excluding points on the straight line B"D);

if $0.6<w\leq1.2$, coordinates (x,y,z) in a ternary composition diagram are within the range of a figure surrounded by curves GN, NO, and OP, and straight lines PB", B"D, and DG that connect the following 6 points:

point G ($-5.8333w^2-3.1667w+22.2$, $7.0833w^2+1.4167w+26.2$, $-1.25w^2+0.75w+51.6$),
point N (18.2, $0.2778w^2+3w+27.7$, $-0.2778w^2-4w+54.1$),
point O (36.8, $0.8333w^2+1.8333w+22.6$, $-0.8333w^2-2.8333w+40.6$),
point P (51.7, $1.1111w^2+20.5$, $-1.1111w^2-w+27.8$),
point B" ($-1.5278w^2+2.75w+50.5$, 0.0, $1.5278w^2-3.75w+49.5$), and
point D ($-2.9167w+40.317$, 0.0, $1.9167w+59.683$), or on the above line segments (excluding points on the straight line B"D);

if $0<w\leq0.6$, the curve GO is represented by coordinates (x, $(0.00487w^2-0.0059w+0.0072)x^2+(-0.279w^2+0.2844w-0.6701)x+3.7639w^2-0.2467w+37.512$, 100-w-x-y);
if $0.6<w\leq1.2$, the curve GN is represented by coordinates (x, $(0.0122w^2-0.0113w+0.0313)x^2+(-0.3582w^2+0.1624w-1.4551)x+2.7889w^2+3.7417w+43.824$, 100-w-x-y);
if $0.6<w\leq1.2$, the curve NO is represented by coordinates (x, $(0.00487w^2-0.0059w+0.0072)x^2+(-0.279w^2+0.2844w-0.6701)x+3.7639w^2-0.2467w+37.512$, 100-w-x-y);
if $0<w\leq1.2$, the curve OP is represented by coordinates (x, $(0.0074w^2-0.0133w+0.0064)x^2+(-0.5839w^2+1.0268w-0.7103)x+11.472w^2-17.455w+40.07$, 100-w-x-y) ;
if $1.2<w\leq4.0$, coordinates (x,y,z) in a ternary composition diagram are within the range of a figure surrounded by curves MW, WN, NO, and OP, and straight lines PB", B"D, DC, and CM that connect the following 8 points:

point M (0.0, $-0.3004w^2+2.419w+55.53$, $0.3004w^2-3.419w+44.47$),
point W (10.0, $-0.3645w^2+3.5024w+34.422$, $0.3645w^2-4.5024w+55.578$),
point N (18.2, $-0.3773w^2+3.319w+28.26$, $0.3773w^2-4.319w+53.54$),
point O (36.8, $-0.1392w^2+1.4381w+24.475$, $0.1392w^2-2.4381w+38.725$),
point P (51.7, $-0.2381w^2+1.881w+20.186$, $0.2381w^2-2.881w+28.114$),
point B" (51.6, 0.0, $-w+48.4$),
point D ($-2.8226w+40.211$, 0.0, $1.8226w+59.789$), and
point C (0.0, $0.1081w^2-5.169w+58.447$, $-0.1081w^2+4.169w+41.553$), or on the above line segments (excluding points on the straight lines B"D and CM);

the curve MW is represented by coordinates (x, $(0.0043w^2-0.0359w+0.1509)x^2+(-0.0493w^2+0.4669w-3.6193)x-$

$0.3004w^2+2.419w+55.53$, 100-w-x-y),

the curve WN is represented by coordinates $(x, (0.0055w^2-0.0326w+0.0665)x^2+(-0.1571w^2+0.8981w-2.6274)x+0.6555w^2-2.2153w+54.044$, 100-w-x-y),

the curve NO is represented by coordinates $(x, (-0.00062w^2+0.0036w+0.0037)x^2+(0.0375w^2-0.239w-0.4977)x-0.8575w^2+6.4941w+36.078$, 100-w-x-y), and

the curve OP is represented by coordinates $(x, (-0.000463w^2+0.0024w-0.0011)x^2+(0.0457w^2-0.2581w-0.075)x-1.355w^2+8.749w+27.096$, 100-w-x-y) ; or

if $4.0\leq w\leq7.0$, coordinates (x,y,z) in a ternary composition diagram are within the range of a figure surrounded by curves MW, WN, NO, and OP, and straight lines PB", B"D, DC, and CM that connect the following 8 points:

point M $(0.0, -0.0667w^2+0.8333w+58.133, 0.0667w^2-1.8333w+41.867)$,
point W $(10.0, -0.0667w^2+1.1w+39.267, 0.0667w^2-2.1w+50.733)$,
point N $(18.2, -0.0889w^2+1.3778w+31.411, 0.0889w^2-2.3778w+50.389)$,
point O $(36.8, -0.0444w^2+0.6889w+25.956, 0.0444w^2-1.6889w+37.244)$,
point P $(51.7, -0.0667w^2+0.8333w+21.633, 0.0667w^2-1.8333w+26.667)$,
point B" $(51.6, 0.0, -w+48.4)$,
point D $(-2.8w+40.1, 0.0, 1.8w+59.9)$, and
point C $(0.0, 0.0667w^2-4.9667w+58.3, -0.0667w^2+3.9667w+41.7)$, or on the above line segments (excluding points on the straight lines B"D and CM) ;

the curve MW is represented by coordinates $(x, (0.00357w^2-0.0391w+0.1756)x^2+(-0.0356w^2+0.4178w-3.6422)x-0.0667w^2+0.8333w+58.103$, 100-w-x-y),

the curve WN is represented by coordinates $(x, (-0.002061w^2+0.0218w-0.0301)x^2+(0.0556w^2-0.5821w-0.1108)x-0.4158w^2+4.7352w+43.383$, 100-w-x-y),

the curve NO is represented by coordinates $(x, 0.0082x^2+(0.0022w^2-0.0345w-0.7521)x-0.1307w^2+2.0247w+42.327$, 100-w-x-y), and

the curve OP is represented by coordinates $(x, (-0.0006258w^2+0.0066w-0.0153)x^2+(0.0516w^2-0.5478w+0.9894)x-1.074w^2+11.651w+10.992$, 100-w-x-y).

Item 5.

A composition comprising a refrigerant,

the refrigerant comprising $CO_2$, R32, HFO-1132(E), and R1234yf,
wherein
when the mass% of $CO_2$, R32, HFO-1132(E), and R1234yf based on their sum is respectively represented by w, x, y, and z,

if $0<w\leq0.6$, coordinates (x,y,z) in a ternary composition diagram in which the sum of R32, HFO-1132(E), and R1234yf is (100-w) mass% are within the range of a figure surrounded by a curve GO, and straight lines OF and FG that connect the following 3 points:

point G $(-5.8333w^2-3.1667w+22.2, 7.0833w^2+1.4167w+26.2, -1.25w^2+0.75w+51.6)$,
point O $(36.8, 0.8333w^2+1.8333w+22.6, -0.8333w^2-2.8333w+40.6)$, and
point F $(-0.0833w+36.717, -4.0833w+5.1833, 3.1666w+58.0997)$, or
the above line segments;
the curve GO is represented by coordinates $(x, (0.00487w^2-0.0059w+0.0072)x^2+(-0.279w^2+0.2844w-0.6701)x+3.7639w^2-0.2467w+37.512$, 100-w-x-y);

if $0.6<w\leq1.2$, coordinates (x,y,z) in a ternary composition diagram are within the range of a figure surrounded by curves GN and NO, and straight lines OF and FG that connect the following 4 points:

point G $(-5.8333w^2-3.1667w+22.2, 7.0833w^2+1.4167w+26.2, -1.25w^2+0.75w+51.6)$,
point N $(18.2, 0.2778w^2+3.0w+27.7, -0.2778w^2-4.0w+54.1)$,
point O $(36.8, 0.8333w^2+1.8333w+22.6, -0.8333w^2-2.8333w+40.6)$, and
point F $(-0.0833w+36.717, -4.0833w+5.1833, 3.1666w+58.0997)$, or
on the above line segments;

if 0.6<w≤1.2, the curve GN is represented by coordinates (x, $(0.0122w^2-0.0113w+0.0313)x^2+(-0.3582w^2+0.1624w-1.4551)x+2.7889w^2+3.7417w+43.824$, 100-w-x-y);

if 0.6<w≤1.2, the curve NO is represented by coordinates (x, $(0.00487w^2-0.0059w+0.0072)x^2+(-0.279w^2+0.2844w-0.6701)x+3.7639w^2-0.2467w+37.512$, 100-w-x-y);

if 1.2<w≤1.3, coordinates (x,y,z) in a ternary composition diagram are within the range of a figure surrounded by curves MW, WN, and NO, and straight lines OF, FC, and CM that connect the following 6 points:

point M (0.0, $-0.3004w^2+2.419w+55.53$, $0.3004w^2-3.419w+44.47$),
point W (10.0, $-0.3645w^2+3.5024w+34.422$, $0.3645w^2-4.5024w+55.578$),
point N (18.2, $-0.3773w^2+3.319w+28.26$, $0.3773w^2-4.319w+53.54$),
point O (36.8, $-0.1392w^2+1.4381w+24.475$, $0.1392w^2-2.4381w+38.725$),
point F (36.6, -3w+3.9, 2w+59.5), and
point C (0.0, $0.1081w^2-5.169w+58.447$, $-0.1081w^2+4.169w+41.553$), or on the above line segments (excluding points on the straight line CM) ;

the curve MW is represented by coordinates (x, $(0.0043w^2-0.0359w+0.1509)x^2+(-0.0493w^2+0.4669w-3.6193)x-0.3004w^2+2.419w+55.53$, 100-w-x-y),

the curve WN is represented by coordinates (x, $(0.0055w^2-0.0326w+0.0665)x^2+(-0.1571w^2+0.89841w-2.6274)x+0.6555w^2-2.2153w+54.044$, 100-w-x-y), and

the curve NO is represented by coordinates (x, $(-0.00062w^2+0.0036w+0.0037)x^2+(0.0375w^2-0.239w-0.4977)x-0.8575w^2+6.4941w+36.078$, 100-w-x-y) ;

if 1.3<w≤4.0, coordinates (x,y,z) in a ternary composition diagram are within the range of a figure surrounded by curves MW, WN, and NO, and straight lines OB', B'D, DC, and CM that connect the following 7 points:

point M (0.0, $-0.3004w^2+2.419w+55.53$, $0.3004w^2-3.419w+44.47$),
point W (10.0, $-0.3645w^2+3.5024w+34.422$, $0.3645w^2-4.5024w+55.578$),
point N (18.2, $-0.3773w^2+3.319w+28.26$, $0.3773w^2-4.319w+53.54$),
point O (36.8, $-0.1392w^2+1.4381w+24.475$, $0.1392w^2-2.4381w+38.725$),
point B' ( 36.6, 0.0, -w+63.4),
point D (-2.8226w+40.211, 0.0, 1.8226w+59.789), and
point C (0.0, $0.1081w^2-5.169w+58.447$, $-0.1081w^2+4.169w+41.553$), or
on the above line segments (excluding points on the straight line CM) ;

the curve MW is represented by coordinates (x, $(0.0043w^2-0.0359w+0.1509)x^2+(-0.0493w^2+0.4669w-3.6193)x-0.3004w^2+2.419w+55.53$, 100-w-x-y),

the curve WN is represented by coordinates (x, $(0.0055w^2-0.0326w+0.0665)x^2+(-0.1571w^2+0.8981w-2.6274)x+0.6555w^2-2.2153w+54.044$, 100-w-x-y), and

the curve NO is represented by coordinates (x, $(-0.00062w^2+0.0036w+0.0037)x^2+(0.0375w^2-0.239w-0.4977)x+(-0.8575w^2+6.4941w+36.078)$, 100-w-x-y); or

if 4.0≤w≤7.0, coordinates (x,y,z) in a ternary composition diagram are within the range of a figure surrounded by curves MW, WN, and NO, and straight lines OB', B'D, DC, and CM that connect the following 7 points:

point M (0.0, $-0.0667w^2+0.8333w+58.133$, $0.0667w^2-1.8333w+41.867$),
point W (10.0, $-0.0667w^2+1.1w+39.267$, $0.0667w^2-2.1w+50.733$),
point N (18. 2, $-0.0889w^2+1.3778w+31.411$, $0.0889w^2-2.3778w+50.389$),
point O (36.8, $-0.0444w^2+0.6889w+25.956$, $0.0444w^2-1.6889w+37.244$),
point B' (36.6, 0.0, -w+63.4),
point D (-2.8w+40. 1, 0.0, 1.8w+59.9), and
point C (0.0, $0.0667w^2-4.9667w+58.3$, $-0.0667w^2+3.9667w+41.7$), or on the above line segments (excluding points on the straight line CM) ;

the curve MW is represented by coordinates (x, $(0.00357w^2-0.0391w+0.1756)x^2+(-0.0356w^2+0.4178w-3.6422)x-0.0667w^2+0.8333w+58.103$, 100-w-x-y),

the curve WN is represented by coordinates (x, $(-0.002061w^2+0.0218w-0.0301)x^2+(0.0556w^2-0.5821w-0.1108)x-0.4158w^2+4.7352w+43.383$, 100-w-x-y), and

the curve NO is represented by coordinates (x, $(0.0082x^2+(0.0022w^2-0.0345w-0.7521)x-0.1307w^2+2.0247w+42.327$, 100-w-x-y) .

Item 6.

A composition comprising a refrigerant,

the refrigerant comprising $CO_2$, R32, HFO-1132(E), and R1234yf,
wherein
when the mass% of $CO_2$, R32, HFO-1132(E), and R1234yf based on their sum is respectively represented by w, x, y, and z,

if $1.2 < w \leq 4.0$, coordinates (x,y,z) in a ternary composition diagram in which the sum of R32, HFO-1132(E), and R1234yf is (100-w) mass% are within the range of a figure surrounded by curves MW and WN, and straight lines NE, EC, and CM that connect the following 5 points:

point M $(0.0, -0.3004w^2+2.419w+55.53, 0.3004w^2-3.419w+44.47)$,
point W $(10.0, -0.3645w^2+3.5024w+34.422, 0.3645w^2-4.5024w+55.578)$,
point N $(18.2, -0.3773w^2+3.319w+28.26, 0.3773w^2-4.319w+53.54)$,
point E $(-0.0365w+18.26, 0.0623w^2-4.5381w+31.856, -0.0623w^2+3.5746w+49.884)$, and
point C $(0.0, 0.1081w^2-5.169w+58.447, -0.1081w^2+4.169w+41.553)$, or on the above line segments (excluding points on the straight line CM) ;

the curve MW is represented by coordinates $(x, (0.0043w^2-0.0359w+0.1509)x^2+(-0.0493w^2+0.4669w-3.6193)x-0.3004w^2+2.419w+55.53, 100-w-x-y)$, and
the curve WN is represented by coordinates $(x, (0.0055w^2-0.0326w+0.0665)x^2+(-0.1571w^2+0.8981w-2.6274)x+0.6555w^2-2.2153w+54.044, 100-w-x-y)$; or
if $4.0 \leq w \leq 7.0$, coordinates (x,y,z) in a ternary composition diagram are within the range of a figure surrounded by curves MW and WN, and straight lines NE, EC, and CM that connect the following 5 points:

point M $(0.0, -0.0667w^2+0.8333w+58.133, 0.0667w^2-1.8333w+41.867)$,
point W $(10.0, -0.0667w^2+1.1w+39.267, 0.0667w^2-2.1w+50.733)$,
point N $(18.2, -0.0889w^2+1.3778w+31.411, 0.0889w^2-2.3778w+50.389)$,
point E $(18.1, 0.0444w^2-4.3556w+31.411, -0.0444w^2+3.3556w+50.489)$, and
point C $(0.0, 0.0667w^2-4.9667w+58.3, -0.0667w^2+3.9667w+41.7)$, or on the above line segments (excluding points on the straight line CM) ;

the curve MW is represented by coordinates $(x, (0.00357w^2-0.0391w+0.1756)x^2+(-0.0356w^2+0.4178w-3.6422)x-0.0667w^2+0.8333w+58.103, 100-w-x-y)$, and
the curve WN is represented by coordinates $(x, (-0.002061w^2+0.0218w-0.0301)x^2+(0.0556w^2-0.5821w-0.1108)x-0.4158w^2+4.7352w+43.383, 100-w-x-y)$ .

Item 7.

The composition according to any one of Items 1 to 6, for use as a working fluid for a refrigerating machine, wherein the composition further comprises a refrigeration oil.

Item 8.

The composition according to any one of Items 1 to 7, for use as an alternative refrigerant for R410A.

Item 9.

Use of the composition according to any one of Items 1 to 7 as an alternative refrigerant for R410A.

Item 10.

A refrigerating machine comprising the composition according to any one of Items 1 to 7 as a working fluid.

Item 11.

A method for operating a refrigerating machine, comprising the step of circulating the composition according to any one of Items 1 to 7 as a working fluid in a refrigerating machine.

Advantageous Effects of Invention

The refrigerant of the present disclosure has three types of performance, i.e., a refrigerating capacity that is equivalent to or higher than that of R410A, a sufficiently low GWP, and a lower flammability (Class 2L) according to the ASHRAE standard.

Brief Description of Drawings

Fig. 1 is a schematic view of an apparatus used for the measurement of burning velocity.
Fig. 2 is a diagram showing points and line segments that define the refrigerant of the present disclosure in a ternary composition diagram in which the sum of R32, HFO-1132(E), and R1234yf is 100 mass%.
Fig. 3 is a diagram showing points and line segments that define the refrigerant of the present disclosure in a ternary composition diagram in which the sum of R32, HFO-1132(E), and R1234yf is 99.4 mass% ($CO_2$ content is 0.6 mass%).
Fig. 4 is a diagram showing points and line segments that define the refrigerant of the present disclosure in a ternary composition diagram in which the sum of R32, HFO-1132(E), and R1234yf is 98.8 mass% ($CO_2$ content is 1.2 mass%).
Fig. 5 is a diagram showing points and line segments that define the refrigerant of the present disclosure in a ternary composition diagram in which the sum of R32, HFO-1132(E), and R1234yf is 98.7 mass% ($CO_2$ content is 1.3 mass%).
Fig. 6 is a diagram showing points and line segments that define the refrigerant of the present disclosure in a ternary composition diagram in which the sum of R32, HFO-1132(E), and R1234yf is 97.5 mass% ($CO_2$ content is 2.5 mass%).
Fig. 7 is a diagram showing points and line segments that define the refrigerant of the present disclosure in a ternary composition diagram in which the sum of R32, HFO-1132(E), and R1234yf is 96 mass% ($CO_2$ content is 4 mass%).
Fig. 8 is a diagram showing points and line segments that define the refrigerant of the present disclosure in a ternary composition diagram in which the sum of R32, HFO-1132(E), and R1234yf is 94.5 mass% ($CO_2$ content is 5.5 mass%).
Fig. 9 is a diagram showing points and line segments that define the refrigerant of the present disclosure in a ternary composition diagram in which the sum of R32, HFO-1132(E), and R1234yf is 93 mass% ($CO_2$ content is 7 mass%).

Description of Embodiments

In order to achieve the above object, the present inventors conducted extensive research and found that a mixed refrigerant comprising $CO_2$, R32, HFO-1132(E), and R1234yf has the characteristics described above.
The present disclosure has been completed as a result of further research based on this finding. The present disclosure includes the following embodiments.

Definition of Terms

In the present specification, the term "refrigerant" includes at least compounds that are specified in ISO 817 (International Organization for Standardization) and that are given a refrigerant number (ASHRAE number) representing the type of refrigerant with "R" at the beginning, and further includes refrigerants that have properties equivalent to those of such refrigerants, even though a refrigerant number is not yet given. Refrigerants are broadly divided into fluorocarbon compounds and non-fluorocarbon compounds in terms of the structure of the compounds. Fluorocarbon compounds include chlorofluorocarbons (CFC), hydrochlorofluorocarbons (HCFC), and hydrofluorocarbons (HFC). Non-fluorocarbon compounds include propane (R290), propylene (R1270), butane (R600), isobutane (R600a), carbon dioxide (R744), ammonia (R717), and the like.
In the present specification, the phrase "composition comprising a refrigerant" at least includes (1) a refrigerant itself (including a mixture of refrigerants), (2) a composition that further comprises other components and that can be mixed with at least a refrigeration oil to obtain a working fluid for a refrigerating machine, and (3) a working fluid for a refrigerating machine containing a refrigeration oil. In the present specification, of these three embodiments, the composition (2) is referred to as a "refrigerant composition" so as to distinguish it from a refrigerant itself (including a mixture of refrigerants). Further, the working fluid for a refrigerating machine (3) is referred to as a "refrigeration-oil-containing working fluid" so as to distinguish it from the "refrigerant composition."

In the present specification, when the term "alternative" is used in a context in which the first refrigerant is replaced with the second refrigerant, the first type of "alternative" means that equipment designed for operation using the first refrigerant can be operated using the second refrigerant under optimum conditions, optionally with changes of only a few parts (at least one of the following: refrigeration oil, gasket, packing, expansion valve, dryer, and other parts) and equipment adjustment. In other words, this type of alternative means that the same equipment is operated with an alternative refrigerant. Embodiments of this type of "alternative" include "drop-in alternative," "nearly drop-in alternative," and "retrofit," in the order in which the extent of changes and adjustment necessary for replacing the first refrigerant with the second refrigerant is smaller.

The term "alternative" also includes a second type of "alternative," which means that equipment designed for operation using the second refrigerant is operated for the same use as the existing use with the first refrigerant by using the second refrigerant. This type of alternative means that the same use is achieved with an alternative refrigerant.

In the present specification, the term "refrigerating machine" refers to machines in general that draw heat from an object or space to make its temperature lower than the temperature of ambient air, and maintain a low temperature. In other words, refrigerating machines refer to conversion machines that gain energy from the outside to do work, and that perform energy conversion, in order to transfer heat from where the temperature is lower to where the temperature is higher.

In the present specification, a refrigerant having a "WCF lower flammability" means that the most flammable composition (worst case of formulation for flammability: WCF) has a burning velocity of 10 cm/s or less according to the US ANSI/ASHRAE Standard 34-2013. Further, in the present specification, a refrigerant having "ASHRAE lower flammability" means that the burning velocity of WCF is 10 cm/s or less, that the most flammable fraction composition (worst case of fractionation for flammability: WCFF), which is specified by performing a leakage test during storage, shipping, or use based on ANSI/ASHRAE 34-2013 using WCF, has a burning velocity of 10 cm/s or less, and that flammability classification according to the US ANSI/ASHRAE Standard 34-2013 is determined to be classified as Class 2L.

1. Refrigerant

1.1 Refrigerant Component

The refrigerant of the present disclosure is a mixed refrigerant comprising $CO_2$, R32, HFO-1132(E), and R1234yf.

The refrigerant of the present disclosure has various properties that are desirable as an R410A-alternative refrigerant, i.e., a refrigerating capacity that is equivalent to those of R410A, a sufficiently low GWP, and a lower flammability.

The refrigerant of the present disclosure is as follows. When the mass% of $CO_2$, R32, HFO-1132(E), and R1234yf based on their sum is respectively represented by w, x, y, and z,

coordinates (x,y,z) in a ternary composition diagram in which the sum of R32, HFO-1132(E), and R1234yf is (100-w) mass% are within the range of a figure surrounded by curves IJ, JK, and KL, and straight lines LB'', B''D, DC, and CI that connect the following 7 points:

point I (0.0, 72.0, 28.0-w),
point J (18.3, 48.5, 33.2-w),
point K (36.8, 35.6, 27.6-w),
point L (51.7, 28.9, 19.4-w),
point B" ($-1.5278w^2+2.75w+50.5$, 0.0, $1.5278w^2-3.75w+49.5$),
point D ($-2.9167w+40.317$, 0.0, $1.9167w+59.683$), and
point C (0.0, $-4.9167w+58.317$, $3.9167w+41.683$), or on the above line segments (excluding points on the straight lines B"D and CI) ;

if $1.2<w\leq4.0$, coordinates (x,y,z) in a ternary composition diagram are within the range of a figure surrounded by curves IJ, JK, and KL, and straight lines LB", B''D, DC, and CI that connect the following 7 points:

point I (0.0, 72.0, 28.0-w),
point J (18.3, 48.5, 33.2-w),
point K (36.8, 35.6, 27.6-w),

point L (51.7, 28.9, 19.4-w),
point B" (51.6, 0.0, 48.4-w),
point D (-2.8226w+40.211, 0.0, 1.8226w+59.789), and
point C (0.0, 0.1081w$^2$-5.169w+58.447, -0.1081w$^2$+4.169w+41.553), or
on the above line segments (excluding points on the straight lines B"D and CI); or

if 4.0≤w≤7.0, coordinates (x,y,z) in a ternary composition diagram are within the range of a figure surrounded by curves IJ, JK, and KL, and straight lines LB", B'' D, DC, and CI that connect the following 7 points:

point I (0.0, 72.0, 28.0-w),
point J (18.3, 48.5, 33.2-w),
point K (36.8, 35.6, 27.6-w),
point L (51.7, 28.9, 19.4-w),
point B'' (51.6, 0.0, 48.4-w),
point D (-2.8w+40.1, 0.0, 1.8w+59.9), and
point C (0.0, 0.0667w$^2$-4.9667w+58.3, -0.0667w$^2$+3.9667w+41.7), or on the above line segments (excluding points on the straight lines B"D and CI);

the curve IJ is represented by coordinates (x, 0.0236x$^2$-1.716x+72, -0.0236x$^2$+0.716x+28-w),
the curve JK is represented by coordinates (x, 0.0095x$^2$-1.2222x+67.676, -0.0095x$^2$+0.2222x+32.324-w), and
the curve KL is represented by coordinates (x, 0.0049x$^2$-0.8842x+61.488, -0.0049x$^2$-0.1158x+38.512-w).

The refrigerant of the present disclosure has a refrigerating capacity ratio of 80% or more and a GWP of 350 or less relative to that of R410A, and further ensures a WCF lower flammability.

The refrigerant of the present disclosure is preferably as follows. When the mass% of $CO_2$, R32, HFO-1132(E), and R1234yf based on their sum is respectively represented by w, x, y, and z,

if 0<w≤1.2, coordinates (x,y,z) in a ternary composition diagram in which the sum of R32, HFO-1132(E), and R1234yf is (100-w) mass% are within the range of a figure surrounded by curves IJ and JK, and straight lines KF, FC, and CI that connect the following 5 points:

point I (0.0, 72.0, 28.0-w),
point J (18.3, 48.5, 33.2-w),
point K (36.8, 35.6, 27.6-w),
point F (-0.0833w+36.717, -4.0833w+5.1833, 3.1666w+58.0997), and
point C (0.0, -4.9167w+58.317, 3.9167w+41.683), or on the above line segments (excluding points on the straight line CI);

if 1.2<w≤1.3, coordinates (x,y,z) in a ternary composition diagram are within the range of a figure surrounded by curves IJ and JK, and straight lines KF, FC, and CI that connect the following 5 points:

point I (0.0, 72.0, 28.0-w),
point J (18.3, 48.5, 33.2-w),
point K (36.8, 35.6, 27.6-w),
point F (36.6, -3w+3.9, 2w+59.5), and
point C (0.0, 0.1081w$^2$-5.169w+58.447, -0.1081w$^2$+4.169w+41.553), or
on the above line segments (excluding points on the straight line CI) ;

if 1.3<w≤4.0, coordinates (x,y,z) in a ternary composition diagram are within the range of a figure surrounded by curves IJ and JK, and straight lines KB', B'D, DC, and CI that connect the following 6 points:

point I (0.0, 72.0, 28.0-w),
point J (18.3, 48.5, 33.2-w),
point K (36.8, 35.6, 27.6-w),
point B' (36.6, 0.0, -w+63.4),
point D (-2.8226w+40.211, 0.0, 1.8226w+59.789), and
point C (0.0, 0.1081w$^2$-5.169w+58.447, -0.1081w$^2$+4.169w+41.553), or on the above line segments (excluding points on the straight line CI); or

if 4.0≤w≤7.0, coordinates (x,y,z) in a ternary composition diagram are within the range of a figure surrounded by curves IJ and JK, and straight lines KB', B'D, DC, and CI that connect the following 6 points:

point I (0.0, 72.0, 28.0-w),
point J (18.3, 48.5, 33.2-w),
point K (36.8, 35.6, 27.6-w),
point B' (36.6, 0.0, -w+63.4),
point D (-2.8w+40.1, 0.0, 1.8w+59.9), and
point C (0.0, $0.0667w^2$-4.9667w+58.3, $-0.0667w^2$+3.9667w+41.7), or on the above line segments (excluding points on the straight line CI) ;

the curve IJ is represented by coordinates (x, $0.0236x^2$-1.716x+72, $-0.0236x^2$+0.716x+28-w), and
the curve JK is represented by coordinates (x, $0.0095x^2$-1.2222x+67.676, $-0.0095x^2$+0.2222x+32.324-w).

When the refrigerant of the present disclosure satisfies the above requirements, it has a refrigerating capacity ratio of 80% or more and a GWP of 250 or less relative to that of R410A, and further ensures a WCF lower flammability.
The refrigerant of the present disclosure is preferably as follows. When the mass% of $CO_2$, R32, HFO-1132(E), and R1234yf based on their sum is respectively represented by w, x, y, and z,

if 0<w≤1.2, coordinates (x,y,z) in a ternary composition diagram in which the sum of R32, HFO-1132(E), and R1234yf is (100-w) mass% are within the range of a figure surrounded by curve IJ, and straight lines JE, EC, and CI that connect the following 4 points:

point I (0.0, 72.0, 28.0-w),
point J (18.3, 48.5, 33.2-w),
point E (18.2, $-1.1111w^2$-3.1667w+31.9, $1.1111w^2$+2.1667w+49.9), and
point C (0.0, -4.9167w+58.317, 3.9167w+41.683), or on the above line segments (excluding points on the straight line CI);

if 1.2<w≤4.0, coordinates (x,y,z) in a ternary composition diagram are within the range of a figure surrounded by curve IJ, and straight lines JE, EC, and CI that connect the following 4 points:

point I (0.0, 72.0, 28.0-w),
point J (18.3, 48.5, 33.2-w),
point E (-0.0365w+18.26, $0.0623w^2$-4.5381w+31.856, $- 0.0623w^2$+3.5746w+49.884), and
point C (0.0, $0.1081w^2$-5.169w+58.447, $-0.1081w^2$+4.169w+41.553), or on the above line segments (excluding points on the straight line CI); or

if 4.0≤w≤7.0, coordinates (x,y,z) in a ternary composition diagram are within the range of a figure surrounded by curves IJ and JK, and straight lines KF, FC, and CI that connect the following 4 points:

point I (0.0, 72.0, 28.0-w),
point J (18.3, 48.5, 33.2-w),
point E (18.1, $0.0444w^2$-4.3556w+31.411, $-0.0444w^2$+3.3556w+50.489), and
point C (0.0, $0.0667w^2$-4.9667w+58.3, $-0.0667w^2$+3.9667w+41.7), or
on the above line segments (excluding points on the straight line CI), and
the curve IJ is represented by coordinates (x, $0.0236x^2$-1.716x+72, $-0.0236x^2$+0.716x+28-w).

When the refrigerant of the present disclosure satisfies the above requirements, it has a refrigerating capacity ratio of 80% or more and a GWP of 125 or less relative to that of R410A, and further ensures a WCF lower flammability.
The refrigerant of the present disclosure is preferably as follows. When the mass% of $CO_2$, R32, HFO-1132(E), and R1234yf based on their sum is respectively represented by w, x, y, and z,

if 0<w≤0.6, coordinates (x,y,z) in a ternary composition diagram in which the sum of R32, HFO-1132(E), and R1234yf is (100-w) mass% are within the range of a figure surrounded by curves GO and OP, and straight lines PB'', B''D, and DG that connect the following 5 points:

point G ($-5.8333w^2$-3.1667w+22.2, $7.0833w^2$+1.4167w+26.2, $-1.25w^2$+0.75w+51.6),

point O (36.8, $0.8333w^2+1.8333w+22.6$, $-0.8333w^2-2.8333w+40.6$),
point P (51.7, $1.1111w^2+20.5$, $-1.1111w^2-w+27.8$),
point B" ($-1.5278w^2+2.75w+50.5$, 0.0, $1.5278w^2-3.75w+49.5$), and
point D ($-2.9167w+40.317$, 0.0, $1.9167w+59.683$), or on the above line segments (excluding points on the straight line B"D);

if $0.6<w\leq1.2$, coordinates (x,y,z) in a ternary composition diagram are within the range of a figure surrounded by curves GN, NO, and OP, and straight lines PB", B"D, and DG that connect the following 6 points:

point G ($-5.8333w^2-3.1667w+22.2$, $7.0833w^2+1.4167w+26.2$, $-1.25w^2+0.75w+51.6$),
point N (18.2, $0.2778w^2+3w+27.7$, $-0.2778w^2-4w+54.1$),
point O (36.8, $0.8333w^2+1.8333w+22.6$, $-0.8333w^2-2.8333w+40.6$),
point P (51.7, $1.1111w^2+20.5$, $-1.1111w^2-w+27.8$),
point B" ($-1.5278w^2+2.75w+50.5$, 0.0, $1.5278w^2-3.75w+49.5$), and
point D ($-2.9167w+40.317$, 0.0, $1.9167w+59.683$), or on the above line segments (excluding points on the straight line B"D);

if $0<w\leq0.6$, the curve GO is represented by coordinates (x, $(0.00487w^2-0.0059w+0.0072)x^2+(-0.279w^2+0.2844w-0.6701)x+3.7639w^2-0.2467w+37.512$, 100-w-x-y);
if $0.6<w\leq1.2$, the curve GN is represented by coordinates (x, $(0.0122w^2-0.0113w+0.0313)x^2+(-0.3582w^2+0.1624w-1.4551)x+2.7889w^2+3.7417w+43.824$ , 100-w-x-y);
if $0.6<w\leq1.2$, the curve NO is represented by coordinates (x, $(0.00487w^2-0.0059w+0.0072)x^2+(-0.279w^2+0.2844w-0.6701)x+3.7639w^2-0.2467w+37.512$, 100-w-x-y);
if $0<w\leq1.2$, the curve OP is represented by coordinates (x, $(0.0074w^2-0.0133w+0.0064)x^2+(-0.5839w^2+1.0268w-0.7103)x+11.472w^2-17.455w+40.07$, 100-w-x-y) ;
if $1.2<w\leq4.0$, coordinates (x,y,z) in a ternary composition diagram are within the range of a figure surrounded by curves MW, WN, NO, and OP, and straight lines PB", B"D, DC, and CM that connect the following 8 points:

point M (0.0, $-0.3004w^2+2.419w+55.53$, $0.3004w^2-3.419w+44.47$),
point W (10.0, $-0.3645w^2+3.5024w+34.422$, $0.3645w^2-4.5024w+55.57$),
point N (18.2, $-0.3773w^2+3.319w+28.26$, $0.3773w^2-4.319w+53.54$),
point O (36.8, $-0.1392w^2+1.4381w+24.475$, $0.1392w^2+O-2.4381w+38.725$),
point P (51.7, $-0.2381w^2+1.881w+20.186$, $0.2381w^2-2.881w+28.114$),
point B" (51.6, 0.0, $-w+48.4$),
point D ($-2.8226w+40.211$, 0.0, $1.8226w+59.789$), and
point C (0.0, $0.1081w^2-5.169w+58.447$, $-0.1081w^2+4.169w+41.553$), or on the above line segments (excluding points on the straight lines B"D and CM);

the curve MW is represented by coordinates (x, $(0.0043w^2-0.0359w+0.1509)x^2+(-0.0493w^2+0.4669w-3.6193)x-0.3004w^2+2.419w+55.53$, 100-w-x-y),
the curve WN is represented by coordinates (x, $(0.0055w^2-0.0326w+0.0665)x^2+(-0.1571w^2+0.8981w-2.6274)x+0.6555w^2-2.2153w+54.044$, 100-w-x-y),
the curve NO is represented by coordinates (x, $(-0.00062w^2+0.0036w+0.0037)x^2+(0.0375w^2-0.239w-0.4977)x-0.8575w^2+6.4941w+36.078$, 100-w-x-y), and
the curve OP is represented by coordinates (x, $(-0.000463w^2+0.0024w-0.0011)x^2+(0.0457w^2-0.2581w-0.075)x-1.355w^2+8.749w+27.096$, 100-w-x-y); or
if $4.0\leq w\leq7.0$, coordinates (x,y,z) in a ternary composition diagram are within the range of a figure surrounded by curves MW, WN, NO, and OP, and straight lines PB", B"D, DC, and CM that connect the following 8 points:

point M (0.0, $-0.0667w^2+0.8333w+58.133$, $0.0667w^2-1.8333w+41.867$),
point W (10.0, $-0.0667w^2+1.1w+39.267$, $0.0667w^2-2.1w+50.733$),
point N (18.2, $-0.0889w^2+1.3778w+31.411$, $0.0889w^2-2.3778w+50.389$),
point O (36.8, $-0.0444w^2+0.6889w+25.956$, $0.0444w^2-1.6889w+37.244$),
point P (51.7, $-0.0667w^2+0.8333w+21.633$, $0.0667w^2-1.8333w+26.667$),
point B" (51.6, 0.0, $-w+48.4$),
point D ($-2.8w+40.1$, 0.0, $1.8w+59.9$), and
point C (0.0, $0.0667w^2-4.9667w+58.3$, $-0.0667w^2+3.9667w+41.7$), or on the above line segments (excluding points on the straight lines B"D and CM) ;

the curve MW is represented by coordinates (x, $(0.00357w^2-0.0391w+0.1756)x^2+(-0.0356w^2+0.4178w-3.6422)x-0.0667w^2+0.8333w+58.103$, 100-w-x-y),

the curve WN is represented by coordinates (x, $(-0.002061w^2+0.0218w-0.0301)x^2+(0.0556w^2-0.5821w-0.1108)x-0.4158w^2+4.7352w+43.383$, 100-w-x-y),

the curve NO is represented by coordinates (x, $0.0082x^2+(0.0022w^2-0.0345w-0.7521)x-0.1307w^2+2.0247w+42.327$, 100-w-x-y), and

the curve OP is represented by coordinates (x, $(-0.0006258w^2+0.0066w-0.0153)x^2+(0.0516w^2-0.5478w+0.9894)x-1.074w^2+11.651w+10.992$, 100-w-x-y). When the refrigerant of the present disclosure satisfies the above requirements, it has a refrigerating capacity ratio of 80% or more and a GWP of 350 or less relative to that of R410A, and further ensures a ASHRAE lower flammability.

The refrigerant of the present disclosure is preferably as follows. When the mass% of $CO_2$, R32, HFO-1132(E), and R1234yf based on their sum is respectively represented by w, x, y, and z,

if 0<w≤0.6, coordinates (x,y,z) in a ternary composition diagram in which the sum of R32, HFO-1132(E), and R1234yf is (100-w) mass% are within the range of a figure surrounded by a curve GO, and straight lines OF and FG that connect the following 3 points:

point G $(-5.8333w^2-3.1667w+22.2, 7.0833w^2+1.4167w+26.2, -1.25w^2+0.75w+51.6)$,
point O $(36.8, 0.8333w^2+1.8333w+22.6, -0.8333w^2-2.8333w+40.6)$, and
point F $(-0.0833w+36.717, -4.0833w+5.1833, 3.1666w+58.0997)$, or
the above line segments;

the curve GO is represented by coordinates (x, $(0.00487w^2-0.0059w+0.0072)x^2+(-0.279w^2+0.2844w-0.6701)x+3.7639w^2-0.2467w+37.512$, 100-w-x-y);

if 0.6<w≤1.2, coordinates (x,y,z) in a ternary composition diagram are within the range of a figure surrounded by curves GN and NO, and straight lines OF and FG that connect the following 4 points:

point G $(-5.8333w^2-3.1667w+22.2, 7.0833w^2+1.4167w+26.2, -1.25w^2+0.75w+51.6)$,
point N $(18.2, 0.2778w^2+3.0w+27.7, -0.2778w^2-4.0w+54.1)$,
point O $(36.8, 0.8333w^2+1.8333w+22.6, -0.8333w^2-2.8333w+40.6)$, and
point F $(-0.0833w+36.717, -4.0833w+5.1833, 3.1666w+58.0997)$, or
on the above line segments;

if 0.6<w≤1.2, the curve GN is represented by coordinates (x, $(0.0122w^2-0.0113w+0.0313)x^2+(-0.3582w^2+0.1624w-1.4551)x+2.7889w^2+3.7417w+43.824$, 100-w-x-y);

if 0.6<w≤1.2, the curve NO is represented by coordinates (x, $(0.00487w^2-0.0059w+0.0072)x^2+(-0.279w^2+0.2844w-0.6701)x+3.7639w^2-0.2467w+37.512$, 100-w-x-y);

if 1.2<w≤1.3, coordinates (x,y,z) in a ternary composition diagram are within the range of a figure surrounded by curves MW, WN, and NO, and straight lines OF, FC, and CM that connect the following 6 points:

point M $(0.0, -0.3004w^2+2.419w+55.53, 0.3004w^2-3.419w+44.47)$,
point W $(10.0, -0.3645w^2+3.5024w+34.422, 0.3645w^2-4.5024w+55.578)$,
point N $(18.2, -0.3773w^2+3.319w+28.26, 0.3773w^2-4.319w+53.54)$,
point O $(36.8, -0.1392w^2+1.4384w+24.475, 0.1392w^2-2.4381w+38.725)$,
point F $(36.6, -3w+3.9, 2w+59.5)$, and
point C $(0.0, 0.1081w^2-5.169w+58.447, -0.1081w^2+4.169w+41.553)$, or on the above line segments (excluding points on the straight line CM);

the curve MW is represented by coordinates (x, $(0.0043w^2-0.0359w+0.1509)x^2+(-0.0493w^2+0.4669w-3.6193)x-0.3004w^2+2.419w+55.53$, 100-w-x-y),

the curve WN is represented by coordinates (x, $(0.0055w^2-0.0326w+0.0665)x^2+(-0.1571w^2+0.8981w-2.6274)x+0.6555w^2-2.2153w+54.044$, 100-w-x-y), and

the curve NO is represented by coordinates (x, $(-0.00062w^2+0.0036w+0.0037)x^2+(0.0375w^2-0.239w-0.4977)x-0.8575w^2+6.4941w+36.078$, 100-w-x-y) ;

if 1.3<w≤4.0, coordinates (x,y,z) in a ternary composition diagram are within the range of a figure surrounded by curves MW, WN, and NO, and straight lines OB', B'D, DC, and CM that connect the following 7 points:

point M (0.0, $-0.3004w^2+2.419w+55.53$, $0.3004w^2-3.419w+44.47$),
point W (10.0, $-0.3645w^2+3.5024w+34.422$, $0.3645w^2-4.5024w+55.578$),
point N (18.2, $-0.3773w^2+3.319w+28.26$, $0.3773w^2-4.319w+53.54$),
point O (36.8, $-0.1392w^2+1.4384w+24.475$, $0.1392w^2-2.4381w+38.725$),
point B' (36.6, 0.0, $-w+63.4$), R
point D ($-2.8226w+40.211$, 0.0, $1.8226w+59.789$), and
point C (0.0, $0.1081w^2-5.169w+58.447$, $-0.1081w^2+4.169w+41.553$), or
on the above line segments (excluding points on the straight line CM) ;

the curve MW is represented by coordinates (x, $(0.0043w^2-0.0359w+0.1509)x^2+(-0.0493w^2+0.4669w-3.6193)x-0.3004w^2+2.419w+55.53$, 100-w-x-y),
the curve WN is represented by coordinates (x, $(0.0055w^2-0.0326w+0.0665)x^2+(-0.1571w^2+0.8981w-2.6274)x+0.6555w^2-2.2153w+54.044$, 100-w-x-y), and
the curve NO is represented by coordinates (x, $(-0.00062w^2+0.0036w+0.0037)x^2+(0.0375w^2-0.239w-0.4977)x+(-0.8575w^2+6.4941w+36.078)$, 100-w-x-y); or
if $4.0 \leq w \leq 7.0$, coordinates (x,y,z) in a ternary composition diagram are within the range of a figure surrounded by curves MW, WN, and NO, and straight lines OB', B'D, DC, and CM that connect the following 7 points:

point M (0.0, $-0.0667w^2+0.8333w+58.133$, $0.0667w^2-1.8333w+41.867$),
point W (10.0, $-0.0667w^2+1.1w+39.267$, $0.0667w^2-2.1w+50.733$),
point N (18. 2, $-0.0889w^2+1.3778w+31.411$, $0.0889w^2-2.3778w+50.389$),
point O (36.8, $-0.0444w^2+0.6889w+25.956$, $0.0444w^2-1.6889w+37.244$),
point B' (36.6, 0.0, $-w+63.4$),
point D ($-2.8w+40. 1$, 0.0, $1.8w+59.9$), and
point C (0.0, $0.0667w^2-4.9667w+58.3$, $-0.0667w^2+3.9667w+41.7$), or on the above line segments (excluding points on the straight line CM);

the curve MW is represented by coordinates (x, $(0.00357w^2-0.0391w+0.1756)x^2+(-0.0356w^2+0.4178w-3.6422)x-0.0667w^2+0.8333w+58.103$, 100-w-x-y),
the curve WN is represented by coordinates (x, $(-0.002061w^2+0.0218w-0.0301)x^2+(0.0556w^2-0.5821w-0.1108)x-0.4158w^2+4.7352w+43.383$, 100-w-x-y), and
the curve NO is represented by coordinates (x, $(0.0082x^2+(0.0022w^2-0.0345w-0.7521)x-0.1307w^2+2.0247w+42.327$, 100-w-x-y). When the refrigerant of the present disclosure satisfies the above requirements, it has a refrigerating capacity ratio of 80% or more and a GWP of 250 or less relative to that of R410A, and further ensures a ASHRAE lower flammability.

The refrigerant of the present disclosure is preferably as follows. When the mass% of $CO_2$, R32, HFO-1132(E), and R1234yf based on their sum is respectively represented by w, x, y, and z,

if $1.2 < w \leq 4.0$, coordinates (x,y,z) in a ternary composition diagram in which the sum of R32, HFO-1132(E), and R1234yf is (100-w) mass% are within the range of a figure surrounded by curves MW and WN, and straight lines NE, EC, and CM that connect the following 5 points:

point M (0.0, $-0.3004w^2+2.419w+55.53$, $0.3004w^2-3.419w+44.47$),
point W (10.0, $-0.3645w^2+3.5024w+34.422$, $0.3645w^2-4.5024w+55.578$),
point N (18.2, $-0.3773w^2+3.319w+28.26$, $0.3773w^2-4.319w+53.54$),
point E ($-0.0365w+18.26$, $0.0623w^2-4.5381w+31.856$, $-0.0623w^2+3.5746w+49.884$), and
point C (0.0, $0.1081w^2-5.169w+58.447$, $-0.1081w^2+4.169w+41.553$), or on the above line segments (excluding points on the straight line CM);

the curve MW is represented by coordinates (x, $(0.0043w^2-0.0359w+0.1509)x^2+(-0.0493w^2+0.4669w-3.6193)x-0.3004w^2+2.419w+55.53$, 100-w-x-y),
the curve WN is represented by coordinates (x, $(0.0055w^2-0.0326w+0.0665)x^2+(-0.1571w^2+0.8981w-2.6274)x+0.6555w^2-2.2153w+54.044$, 100-w-x-y); or
if $4.0 \leq w \leq 7.0$, coordinates (x,y,z) in a ternary composition diagram are within the range of a figure surrounded by curves MW and WN, and straight lines NE, EC, and CM that connect the following 5 points:

point M (0.0, $-0.0667w^2+0.8333w+58.133$, $0.0667w^2-1.8333w+41.867$),

point W (10.0, -0.0667w$^2$+1.1w+39.267, 0.0667w$^2$-2.1w+50.733),
point N (18.2, -0.0889w$^2$+1.3778w+31.411, 0.0889w$^2$-2.3778w+50.389),
point E (18.1, 0.0444w$^2$-4.3556w+31.411, -0.0444w$^2$+3.3556w+50.489), and
point C (0.0, 0.0667w$^2$-4.9667w+58.3, -0.0667w$^2$+3.9667w+41.7), or on the above line segments (excluding points on the straight line CM) ;

the curve MW is represented by coordinates (x, (0.00357w$^2$-0.0391w+0.1756)x$^2$+(-0.0356w$^2$+0.4178w-3.6422)x-0.0667w$^2$+0.8333w+58.103, 100-w-x-y), and

the curve WN is represented by coordinates (x, (-0.002061w$^2$+0.0218w-0.0301)x$^2$+(0.0556w$^2$-0.5821w-0.1108)x-0.4158w$^2$+4.7352w+43.383, 100-w-x-y). When the refrigerant of the present disclosure satisfies the above requirements, it has a refrigerating capacity ratio of 80% or more and a GWP of 125 or less relative to that of R410A, and further ensures a ASHRAE lower flammability.

The refrigerant of the present disclosure may further comprise other additional refrigerants in addition to $CO_2$, R32, HFO-1132(E), and R1234yf as long as the above properties and effects are not impaired. In this respect, the refrigerant according to the present disclosure preferably comprises $CO_2$, R32, HFO-1132(E), and R1234yf in a total amount of 99.5 mass% or more, more preferably 99.75 mass% or more, and still more preferably 99.9 mass% or more, based on the entire refrigerant.

Additional refrigerants are not particularly limited and can be widely selected. The mixed refrigerant may contain one additional refrigerant, or two or more additional refrigerants.

1.2. Use

The refrigerant of the present disclosure can be preferably used as a working fluid in a refrigerating machine.

The composition according to the present disclosure is suitable for use as an alternative refrigerant for R410A.

2. Refrigerant Composition

The refrigerant composition according to the present disclosure comprises at least the refrigerant according to the present disclosure, and can be used for the same use as the refrigerant according to the present disclosure. Moreover, the refrigerant composition according to the present disclosure can be further mixed with at least a refrigeration oil to thereby obtain a working fluid for a refrigerating machine.

The refrigerant composition according to the present disclosure further comprises at least one other component in addition to the refrigerant according to the present disclosure. The refrigerant composition according to the present disclosure may comprise at least one of the following other components, if necessary. As described above, when the refrigerant composition according to the present disclosure is used as a working fluid in a refrigerating machine, it is generally used as a mixture with at least a refrigeration oil. Therefore, it is preferable that the refrigerant composition according to the present disclosure does not substantially comprise a refrigeration oil. Specifically, in the refrigerant composition according to the present disclosure, the content of the refrigeration oil based on the entire refrigerant composition is preferably 0 to 1 mass%, and more preferably 0 to 0.1 mass%.

2.1. Water

The refrigerant composition according to the present disclosure may contain a small amount of water. The water content of the refrigerant composition is preferably 0.1 mass% or less based on the entire refrigerant. A small amount of water contained in the refrigerant composition stabilizes double bonds in the molecules of unsaturated fluorocarbon compounds that can be present in the refrigerant, and makes it less likely that the unsaturated fluorocarbon compounds will be oxidized, thus increasing the stability of the refrigerant composition.

2.2. Tracer

A tracer is added to the refrigerant composition according to the present disclosure at a detectable concentration so that when the refrigerant composition has been diluted, contaminated, or undergone other changes, the tracer can trace the changes.

The refrigerant composition according to the present disclosure may comprise a single tracer, or two or more tracers.

The tracer is not limited, and can be suitably selected from commonly used tracers. It is preferable that a compound that cannot be an impurity inevitably mixed into the refrigerant according to the present disclosure is selected as the tracer.

Examples of tracers include hydrofluorocarbons, hydrochlorofluorocarbons, chlorofluorocarbons, hydrochlorocarbons, fluorocarbons, deuterated hydrocarbons, deuterated hydrofluorocarbons, perfluorocarbons, fluoroethers, brominated compounds, iodinated compounds, alcohols, aldehydes, ketones, and nitrous oxide ($N_2O$). The tracer is particularly preferably a hydrofluorocarbon, a hydrochlorofluorocarbon, a chlorofluorocarbon, a fluorocarbon, a hydrochlorocarbon, a fluorocarbon, or a fluoroether.

Specifically, the following compounds are preferable as the tracer.

FC-14 (tetrafluoromethane, $CF_4$)
HCC-40 (chloromethane, $CH_3Cl$)
HFC-23 (trifluoromethane, $CHF_3$)
HFC-41 (fluoromethane, $CH_3Cl$)
HFC-125 (pentafluoroethane, $CF_3CHF_2$)
HFC-134a (1,1,1,2-tetrafluoroethane, $CF_3CH_2F$)
HFC-134 (1,1,2,2-tetrafluoroethane, $CHF_2CHF_2$)
HFC-143a (1,1,1-trifluoroethane, $CF_3CH_3$)
HFC-143 (1,1,2-trifluoroethane, $CHF_2CH_2F$)
HFC-152a (1,1-difluoroethane, $CHF_2CH_3$)
HFC-152 (1,2-difluoroethane, $CH_2FCH_2F$)
HFC-161 (fluoroethane, $CH_3CH_2F$)
HFC-245fa (1,1,1,3,3-pentafluoropropane, $CF_3CH_2CHF_2$)
HFC-236fa (1,1,1,3,3,3-hexafluoropropane, $CF_3CH_2CF_3$)
HFC-236ea (1,1,1,2,3,3-hexafluoropropane, $CF_3CHFCHF_2$)
HFC-227ea (1,1,1,2,3,3,3-heptafluoropropane, $CF_3CHFCF_3$)
HCFC-22 (chlorodifluoromethane, $CHClF_2$)
HCFC-31 (chlorofluoromethane, $CH_2ClF$)
CFC-1113 (chlorotrifluoroethylene, $CF_2=CClF$)
HFE-125 (trifluoromethyl-difluoromethyl ether, $CF_3OCHF_2$)
HFE-134a (trifluoromethyl-fluoromethyl ether, $CF_3OCH_2F$)
HFE-143a (trifluoromethyl-methyl ether, $CF_3OCH_3$)
HFE-227ea (trifluoromethyl-tetrafluoroethyl ether, $CF_3OCHFCF_3$)
HFE-236fa (trifluoromethyl-trifluoroethyl ether, $CF_3OCH_2CF_3$)

The tracer compound can be present in the refrigerant composition at a total concentration of about 10 parts per million by weight (ppm) to about 1000 ppm. The tracer compound is preferably present in the refrigerant composition at a total concentration of about 30 ppm to about 500 ppm, and most preferably about 50 ppm to about 300 ppm.

2.3. Ultraviolet Fluorescent Dye

The refrigerant composition according to the present disclosure may comprise a single ultraviolet fluorescent dye, or two or more ultraviolet fluorescent dyes.

The ultraviolet fluorescent dye is not limited, and can be suitably selected from commonly used ultraviolet fluorescent dyes.

Examples of ultraviolet fluorescent dyes include naphthalimide, coumarin, anthracene, phenanthrene, xanthene, thioxanthene, naphthoxanthene, fluorescein, and derivatives thereof. The ultraviolet fluorescent dye is particularly preferably either naphthalimide or coumarin, or both.

2.4. Stabilizer

The refrigerant composition according to the present disclosure may comprise a single stabilizer, or two or more stabilizers.

The stabilizer is not limited, and can be suitably selected from commonly used stabilizers.

Examples of stabilizers include nitro compounds, ethers, and amines.

Examples of nitro compounds include aliphatic nitro compounds, such as nitromethane and nitroethane; and aromatic nitro compounds, such as nitro benzene and nitro styrene.

Examples of ethers include 1,4-dioxane.

Examples of amines include 2,2,3,3,3-pentafluoropropylamine and diphenylamine.

Examples of stabilizers also include butylhydroxyxylene and benzotriazole.

The content of the stabilizer is not limited. Generally, the content of the stabilizer is preferably 0.01 to 5 mass%, and more preferably 0.05 to 2 mass%, based on the entire refrigerant.

### 2.5. Polymerization Inhibitor

The refrigerant composition according to the present disclosure may comprise a single polymerization inhibitor, or two or more polymerization inhibitors.
The polymerization inhibitor is not limited, and can be suitably selected from commonly used polymerization inhibitors.
Examples of polymerization inhibitors include 4-methoxy-1-naphthol, hydroquinone, hydroquinone methyl ether, dimethyl-t-butylphenol, 2,6-di-tert-butyl-p-cresol, and benzotriazole.
The content of the polymerization inhibitor is not limited. Generally, the content of the polymerization inhibitor is preferably 0.01 to 5 mass%, and more preferably 0.05 to 2 mass%, based on the entire refrigerant.

### 3. Refrigeration-Oil-Containing Working Fluid

The refrigeration-oil-containing working fluid according to the present disclosure comprises at least the refrigerant or refrigerant composition according to the present disclosure and a refrigeration oil, for use as a working fluid in a refrigerating machine. Specifically, the refrigeration-oil-containing working fluid according to the present disclosure is obtained by mixing a refrigeration oil used in a compressor of a refrigerating machine with the refrigerant or the refrigerant composition. The refrigeration-oil-containing working fluid generally comprises 10 to 50 mass% of refrigeration oil.

### 3.1. Refrigeration Oil

The composition according to the present disclosure may comprise a single refrigeration oil, or two or more refrigeration oils.
The refrigeration oil is not limited, and can be suitably selected from commonly used refrigeration oils. In this case, refrigeration oils that are superior in the action of increasing the miscibility with the mixture and the stability of the mixture, for example, are suitably selected as necessary.
The base oil of the refrigeration oil is preferably, for example, at least one member selected from the group consisting of polyalkylene glycols (PAG), polyol esters (POE), and polyvinyl ethers (PVE).
The refrigeration oil may further contain additives in addition to the base oil. The additive may be at least one member selected from the group consisting of antioxidants, extreme-pressure agents, acid scavengers, oxygen scavengers, copper deactivators, rust inhibitors, oil agents, and antifoaming agents.
A refrigeration oil with a kinematic viscosity of 5 to 400 $mm^2_{/s}$ (5 to 400 cSt) at 40°C is preferable from the standpoint of lubrication.
The refrigeration-oil-containing working fluid according to the present disclosure may further optionally contain at least one additive. Examples of additives include compatibilizing agents described below.

### 3.2. Compatibilizing Agent

The refrigeration-oil-containing working fluid according to the present disclosure may comprise a single compatibilizing agent, or two or more compatibilizing agents.
The compatibilizing agent is not limited, and can be suitably selected from commonly used compatibilizing agents.
Examples of compatibilizing agents include polyoxyalkylene glycol ethers, amides, nitriles, ketones, chlorocarbons, esters, lactones, aryl ethers, fluoroethers, and 1,1,1-trifluoroalkanes. The compatibilizing agent is particularly preferably a polyoxyalkylene glycol ether.

### 4. Method for Operating Refrigerating Machine

The method for operating a refrigerating machine according to the present disclosure is a method for operating a refrigerating machine using the refrigerant according to the present disclosure.
Specifically, the method for operating a refrigerating machine according to the present disclosure comprises the step of circulating the refrigerant according to the present disclosure in a refrigerating machine.
The embodiments are described above; however, it will be understood that various changes in form and detail can be made without departing from the spirit and scope of the claims.

Examples

The present disclosure is described in more detail below with reference to Examples. However, the present disclosure is not limited to the Examples.

The burning velocity of individual mixed refrigerants of $CO_2$, R32, HFO-1132(E), and R1234yf was measured in accordance with the ANSI/ASHRAE Standard 34-2013. A formulation that shows a burning velocity of 10 cm/s was found by changing the concentration of $CO_2$. Tables 1 and 2 show the formulations found.

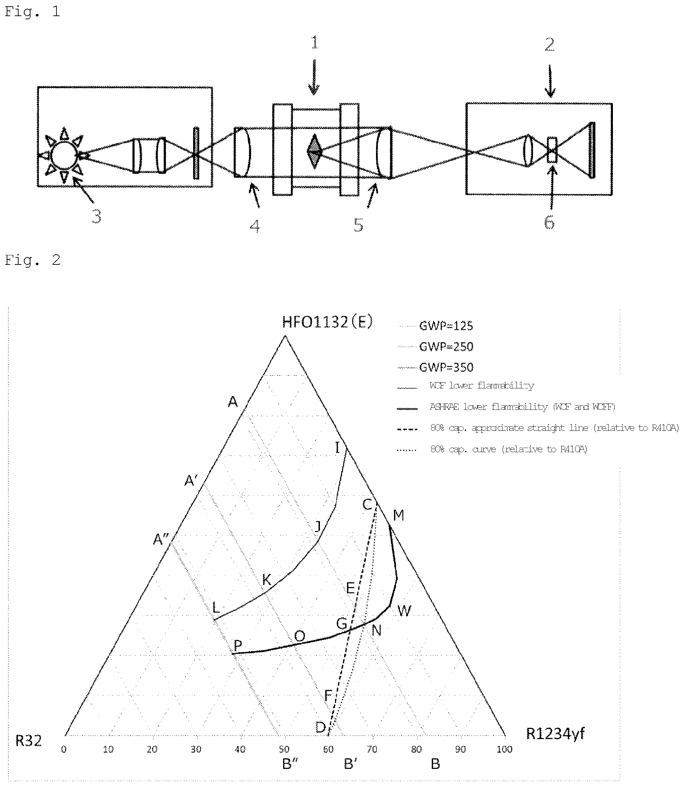

A burning velocity test was performed using the apparatus shown in Fig. 1 in the following manner. First, the mixed refrigerants used had a purity of 99.5% or more, and were degassed by repeating a cycle of freezing, pumping, and thawing until no traces of air were observed on the vacuum gauge. The burning velocity was measured by the closed method. The initial temperature was ambient temperature. Ignition was performed by generating an electric spark between the electrodes in the center of a sample cell. The duration of the discharge was 1.0 to 9.9 ms, and the ignition energy was typically about 0.1 to 1.0 J. The spread of the flame was visualized using a schlieren method. A cylindrical container (inner diameter: 155 mm, length: 198 mm) equipped with two acrylic light-transmission windows was used as the sample cell, and a xenon lamp was used as the light source. Schlieren images of the flame were recorded with a high-speed digital video camera at a frame rate of 600 fps and stored on a PC.

The burning velocity (Su (cm/s)) is the volume of unburned gas in which the flame surface of the unit area is consumed in the unit time, and is calculated according to the following equation.

$$Su=Sb*\rho u/\rho b$$

Sb:     Flame propagation velocity (cm/s)
$\rho u$:     Adiabatic flame temperature (unburned)
$\rho b$:     Adiabatic flame temperature (already burned)

Sb was obtained from schlieren video images, $\rho u$ was the measured temperature, and $\rho b$ was calculated from the heat of the combustion of the combustion gas and the specific heat of constant pressure.

Each WCFF concentration was obtained by using the WCF concentration as the initial concentration and performing a leak simulation using NIST Standard Reference Database REFLEAK Version 4.0.

Table 1

| 0% $CO_2$ | | | | | | | | |
|---|---|---|---|---|---|---|---|---|
| Item | Unit | Comp. Ex. 13 | Comp. Ex. 14 | Comp. Ex. 15 | Comp. Ex. 16 | Comp. Ex. 17 | Comp. Ex. 18 | Comp. Ex. 19 |
| | | I | | J | | K | | L |
| HFO-1132 (E) | mass% | 72.0 | 57.2 | 48.5 | 41.2 | 35.6 | 32.0 | 28.9 |
| R32 | mass% | 0.0 | 10.0 | 18.3 | 27.6 | 36.8 | 44.2 | 51.7 |
| R1234yf | mass% | 28.0 | 32.8 | 33.2 | 31.2 | 27.6 | 23.8 | 19.4 |
| $CO_2$ | mass% | 0.0 | 0.0 | 0.0 | 0.0 | 0.0 | 0.0 | 0.0 |
| Burning velocity (WCF) | cm/s | 10 | 10 | 10 | 10 | 10 | 10 | 10 |

0.6% $CO_2$

| Item | Unit | Comp. Ex. 37 | Ex. 3 | Ex. 4 | Ex. 5 | Ex. 6 | Ex. 7 | Ex. 8 |
|---|---|---|---|---|---|---|---|---|
| | | I | | J | | K | | L |
| HFO-1132 (E) | mass% | 72.0 | 57.2 | 48.5 | 41.2 | 35.6 | 32.0 | 28.9 |
| R32 | mass% | 0.0 | 10.0 | 18.3 | 27.6 | 36.8 | 44.2 | 51.7 |

(continued)

| Item | Unit | Comp. Ex. 37 | Ex. 3 | Ex. 4 | Ex. 5 | Ex. 6 | Ex. 7 | Ex. 8 |
| | | I | | J | | K | | L |
|---|---|---|---|---|---|---|---|---|
| R1234yf | mass% | 27.4 | 32.6 | 32.6 | 30.6 | 27.0 | 23.3 | 10.8 |
| $CO_2$ | mass% | 0.6 | 0.6 | 0.6 | 0.6 | 0.6 | 0.6 | 0.6 |
| Burning velocity (WCF) | cm/s | 10 | 10 | 10 | 10 | 10 | 10 | 10 |

1.2% $CO_2$

| Item | Unit | Comp. Ex.49 | Ex. 16 | Ex. 17 | Ex. 18 | Ex. 19 | Ex.20 | Ex.21 |
| | | I | | J | | K | | L |
|---|---|---|---|---|---|---|---|---|
| HFO-1132 (E) | mass% | 72.0 | 57.2 | 48.5 | 41.2 | 35.6 | 32.0 | 28.9 |
| R32 | mass% | 0.0 | 10.0 | 18.3 | 27.6 | 36.8 | 44.2 | 51.7 |
| R1234yf | mass% | 26.8 | 31.6 | 32.0 | 30.0 | 26.4 | 22.7 | 18.2 |
| $CO_2$ | mass% | 1.2 | 1.2 | 1.2 | 1.2 | 1.2 | 1.2 | 1.2 |
| Burning velocity (WCF) | cm/s | 10 | 10 | 10 | 10 | 10 | 10 | 10 |

1.3% COz

| Item | Unit | Comp. Ex. 59 | Ex.29 | Ex.30 | Ex. 31 | Ex. 32 | Ex. 33 | Ex. 34 |
| | | I | | J | | K | | L |
|---|---|---|---|---|---|---|---|---|
| HFO-1132 (E) | mass% | 72.0 | 57.2 | 48.5 | 41.2 | 35.6 | 32.0 | 28.9 |
| R32 | mass% | 0.0 | 10.0 | 18.3 | 27.6 | 36.8 | 44.2 | 51.7 |
| R1234yf | mass% | 26.7 | 31.5 | 31.9 | 29.9 | 26.3 | 22.6 | 18.1 |
| $CO_2$ | mass% | 1.3 | 1.3 | 1.3 | 1.3 | 1.3 | 1.3 | 1.3 |
| Burning velocity (WCF) | cm/s | 10 | 10 | 10 | 10 | 10 | 10 | 10 |

2.5% $CO_2$

| Item | Unit | Comp. Ex. 69 | Ex. 44 | Ex. 45 | Ex. 46 | Ex. 47 | Ex.48 | Ex.49 |
| | | I | | J | | K | | L |
|---|---|---|---|---|---|---|---|---|
| HFO-1132 (E) | mass% | 72.0 | 57.2 | 48.5 | 41.2 | 35.6 | 32.0 | 28.9 |
| R32 | mass% | 0.0 | 10.0 | 18.3 | 27.6 | 36.8 | 44.2 | 51.7 |
| R1234yf | mass% | 25.5 | 30.3 | 30.7 | 28.7 | 25.1 | 21.3 | 16.9 |
| $CO_2$ | mass% | 2.5 | 2.5 | 2.5 | 2.5 | 2.5 | 2.5 | 2.5 |
| Burning velocity (WCF) | cm/s | 10 | 10 | 10 | 10 | 10 | 10 | 10 |

4.0% $CO_2$

| Item | Unit | Comp. Ex.79 | Ex. 59 | Ex.60 | Ex. 61 | Ex. 62 | Ex. 63 | Ex. 64 |
|---|---|---|---|---|---|---|---|---|
| | | I | | J | | K | | L |
| HFO-1132 (E) | mass% | 72.0 | 57.2 | 48.5 | 41.2 | 35.6 | 32.0 | 28.9 |
| R32 | mass% | 0.0 | 10.0 | 18.3 | 27.6 | 36.8 | 44.2 | 51.7 |
| R1234yf | mass% | 24.0 | 28.8 | 29.2 | 27.2 | 23.6 | 19.8 | 15.4 |
| $CO_2$ | mass% | 4.0 | 4.0 | 4.0 | 4.0 | 4.0 | 4.0 | 4.0 |
| Burning velocity (WCF) | cm/s | 10 | 10 | 10 | 10 | 10 | 10 | 10 |

5.5% $CO_2$

| Item | Unit | Comp. Ex. 89 | Ex. 74 | Ex. 75 | Ex. 76 | Ex. 77 | Ex.78 | Ex.79 |
|---|---|---|---|---|---|---|---|---|
| | | I | | J | | K | | L |
| HFO-1132 (E) | mass% | 72.0 | 57.2 | 48.5 | 41.2 | 35.6 | 32.0 | 28.9 |
| R32 | mass% | 0.0 | 10.0 | 18.3 | 27.6 | 36.8 | 44.2 | 51.7 |
| R1234yf | mass% | 22.5 | 27.3 | 27.7 | 25.7 | 22.1 | 18.3 | 13.9 |
| $CO_2$ | mass% | 5.5 | 5.5 | 5.5 | 5.5 | 5.5 | 5.5 | 5.5 |
| Burning velocity (WCF) | cm/s | 10 | 10 | 10 | 10 | 10 | 10 | 10 |

7.0% $CO_2$

| Item | Unit | Comp. Ex. 99 | Ex. 89 | Ex.90 | Ex. 91 | Ex. 92 | Ex. 93 | Ex. 94 |
|---|---|---|---|---|---|---|---|---|
| | | I | | J | | K | | L |
| HFO-1132 (E) | mass% | 72.0 | 57.2 | 48.5 | 41.2 | 35.6 | 32.0 | 28.9 |
| R32 | mass% | 0.0 | 10.0 | 18.3 | 27.6 | 36.8 | 44.2 | 51.7 |
| R1234yf | mass% | 21.0 | 25.8 | 26.2 | 24.2 | 20.6 | 16.8 | 12.4 |
| $CO_2$ | mass% | 7.0 | 7.0 | 7.0 | 7.0 | 7.0 | 7.0 | 7.0 |
| Burning velocity( WCF) | cm/s | 10 | 10 | 10 | 10 | 10 | 10 | 10 |

Table 2

| | | | Comp. Ex. 20 | Comp. Ex. 21 | Comp. Ex. 22 | Comp. Ex. 23 | Comp. Ex. 24 | Comp. Ex. 25 | Comp. Ex. 26 | Comp. Ex. 27 | Comp. Ex. 28 |
|---|---|---|---|---|---|---|---|---|---|---|---|
| | | | 0% CO$_2$ | | | | | | | | |
| \multicolumn{3}{l}{Item} | | M | | W | | N | | O | | P |
| WCF | HFO-1132 (E) | mass% | 52.6 | 39.2 | 32.4 | 29.3 | 27.7 | 24.5 | 22.6 | 21.2 | 20.5 |
| | R32 | mass% | 0.0 | 5.0 | 10.0 | 14.5 | 18.2 | 27.6 | 36.8 | 44.2 | 51.7 |
| | R1234yf | mass% | 47.4 | 55.8 | 57.6 | 56.2 | 54.1 | 47.9 | 40.6 | 34.6 | 27.8 |
| | CO$_2$ | mass% | 0.0 | 0.0 | 0.0 | 0.0 | 0.0 | 0.0 | 0.0 | 0.0 | 0.0 |
| \multicolumn{3}{l}{Leak condition that results in WCFF} | | storage, shipping, -40°C,0% release, gas phase side | storage, shipping, -40°C,0% release, gas phase side | storage, shipping, -40°C,0% release, gas phase side | storage, shipping, -40°C,0% release, gas phase side | storage, shipping, -40°C,0% release, gas phase side | storage, shipping, -40°C,0% release, gas phase side | storage, shipping, -40°C,0% release, gas phase side | storage, shipping, -40°C,0% release, gas phase side | storage, shipping, -40°C,0% release, gas phase side |
| WCFF | HFO-1132 (E) | mass% | 72.0 | 57.8 | 48.7 | 43.6 | 40.6 | 34.9 | 31.4 | 29.2 | 27.1 |
| | R32 | mass% | 0.0 | 9.5 | 17.9 | 24.2 | 28.7 | 38.1 | 45.7 | 51.1 | 56.4 |
| | R1234yf | mass% | 28.0 | 32.7 | 33.4 | 32.2 | 30.7 | 27.0 | 23.0 | 19.7 | 16.5 |
| | CO$_2$ | mass% | 0.0 | 0.0 | 0.0 | 0.0 | 0.0 | 0.0 | 0.0 | 0.0 | 0.0 |
| \multicolumn{2}{l}{Burning velocity (WCF)} | cm/s | 8 or less | 8 or less | 8 or less | 8 or less | 8 or less | 8 or less | 8 or less | 8 or less | 8 or less |
| \multicolumn{2}{l}{Burning velocity (WCFF)} | cm/s | 10 | 10 | 10 | 10 | 10 | 10 | 10 | 10 | 10 |

EP 3 957 700 B1

0.6% $CO_2$

| | | | Comp. Ex. 35 | Comp. Ex. 38 | Comp. Ex. 39 | Comp. Ex.40 | Ex.1 | Ex.10 | Ex.11 | Ex.12 | Ex.13 |
| --- | --- | --- | --- | --- | --- | --- | --- | --- | --- | --- | --- |
| Item | | | C=M | | W | | N(=E=G ) | | O | | P |
| WCF | HFO-1132(E) | mass % | 55.4 | 42.4 | 35.1 | 31.6 | 29.6 | 26.3 | 24.0 | 22.4 | 20.9 |
| | R32 | mass % | 0.0 | 5.0 | 10.0 | 14.5 | 18.2 | 27.6 | 36.8 | 44.0 | 51.7 |
| | R1234yf | mass % | 44.0 | 52.0 | 54.3 | 53.3 | 51.6 | 45.5 | 38.6 | 33.0 | 26.8 |
| | $CO_2$ | mass % | 0.6 | 0.6 | 0.6 | 0.6 | 0.6 | 0.6 | 0.6 | 0.6 | 0.6 |
| Leak condition that results in WCFF | | | storage, shipping, -40°C, 0% release, gas phase side | storage, shipping, -40°C, 0% release, gas phase side | storage, shipping, -40°C, 0% release, liquid phase side | storage, shipping, -40°C, 0% release, liquid phase side | storage, shipping, -40°C, 0% release, gas phase side | storage, shipping, -40°C, 0% release, gas phase side | storage, shipping, -40°C, 0% release, liquid phase side | storage, shipping, -40°C, 0% release, liquid phase side | storage, shipping, -40°C, 0% release, liquid phase side |
| WCFF | HFO-1132(E) | mass % | 72.0 | 58.6 | 49.7 | 44.5 | 41.3 | 35.8 | 32.1 | 29.8 | 27.8 |
| | R32 | mass % | 0.0 | 8.9 | 16.9 | 23.0 | 27.4 | 36.6 | 44.1 | 49.4 | 54.7 |
| | R1234yf | mass % | 2.7 | 29.1 | 30.2 | 29.4 | 28.3 | 24.8 | 21.1 | 18.2 | 14.9 |
| | $CO_2$ | mass % | 3.3 | 3.4 | 3.2 | 3.1 | 3.0 | 2.8 | 2.7 | 2.6 | 2.6 |
| Burning velocity (WCF) | | cm/s | 8 or less | 8 or less | 8 or less | 8 or less | 8 or less | 8 or less | 8 or less | 8 or less | 8 or less |
| Burning velocity (WCFF) | | cm/s | 10 | 10 | 10 | 10 | 10 | 10 | 10 | 10 | 10 |

1.2% $CO_2$

| | | | Comp. Ex. 50 | Comp. Ex. 51 | Ex. 15 | Ex.22 | Ex.23 | Ex.24 | Ex. 25 | Ex.26 | Ex. 27 |
|---|---|---|---|---|---|---|---|---|---|---|---|
| Item | | | M | | G=W | | N | | O | | P |
| WCF | HFO-1132 (E ) | mass % | 58.0 | 45.2 | 38.1 | 34.0 | 31.7 | 27.9 | 25.4 | 23.7 | 22.1 |
| | R32 | mass % | 0.0 | 5.0 | 10.0 | 14.4 | 18.2 | 27.6 | 36.8 | 44.0 | 51.7 |
| | R1234yf | mass % | 40.8 | 48.6 | 50.7 | 48.9 | 48.9 | 43.3 | 36.0 | 31.1 | 25.0 |
| | $CO_2$ | mass % | 1.2 | 1.2 | 1.2 | 1.2 | 1.2 | 1.2 | 1.2 | 1.2 | 1.2 |
| Leak condition that results in WCFF | | | storage, shipping, -40°C, 0% release, gas phase side | storage, shipping, -40°C, 6% release, gas phase side | storage, shipping, -40°C, 6% release, liquid phase side | storage, shipping, -40°C, 4% release, liquid phase side | storage, shipping, -40°C, 4% release, liquid phase side | storage, shipping, -40°C, 4% release, liquid phase side | storage, shipping, -40°C, 4% release, liquid phase side | storage, shipping, -40°C, 4% release, liquid phase side | storage, shipping, -40°C, 4% release, liquid phase side |
| WCFF | HFO-1132 (E ) | mass % | 72.0 | 59.3 | 50.9 | 45.6 | 42.2 | 36.4 | 32.7 | 30.3 | 28.3 |
| | R32 | mass % | 0.0 | 8.3 | 15.8 | 21.7 | 26.2 | 35.3 | 42.8 | 48.1 | 53.4 |
| | R1234yf | mass % | 24.8 | 28.0 | 28.5 | 27.7 | 26.7 | 23.6 | 20.0 | 17.1 | 13.9 |
| | $CO_2$ | mass % | 3.2 | 4.4 | 4.8 | 5.0 | 4.9 | 4.7 | 4.5 | 4.5 | 4.4 |
| Burning velocity (WCF) | | cm/s | 8 or less | 8 or less | 8 or less | 8 or less | 8 or less | 8 or less | 8 or less | 8 or less | 8 or less |
| Burning velocity (WCFF) | | cm/s | 10 | 10 | 10 | 10 | 10 | 10 | 10 | 10 | 10 |

EP 3 957 700 B1

26

1.3% $CO_2$

| | Item | | Comp. Ex. 60 | Ex. 35 | Ex.36 | Ex.37 | Ex.38 | Ex.39 | Ex.40 | Ex.41 | Ex.42 |
|---|---|---|---|---|---|---|---|---|---|---|---|
| | | | M | | W | | N | | O | | P |
| WCF | HFO-1132 (E) | mass % | 58.2 | 45.5 | 38.4 | 34.3 | 31.9 | 28.1 | 25.6 | 23.9 | 22.3 |
| | R32 | mass % | 0.0 | 5.0 | 10.0 | 14.4 | 18.2 | 27.6 | 36.8 | 44.0 | 51.7 |
| | R1234yf | mass % | 40.5 | 48.2 | 50.3 | 50.0 | 48.6 | 43.0 | 36.3 | 30.8 | 24.7 |
| | $CO_2$ | mass % | 1.3 | 1.3 | 1.3 | 1.3 | 1.3 | 1.3 | 1.3 | 1.3 | 1.3 |
| Leak condition that results in WCFF | | | storage, shipping, -40°C, 0% release, gas phase side | storage, shipping, -40°C, 8% release, gas phase side | storage, shipping, -40°C, 6% release, liquid phase side | storage, shipping, -40°C, 6% release, liquid phase side | storage, shipping, -40°C, 6% release, liquid phase side | storage, shipping, -40°C, 4% release, liquid phase side | storage, shipping, -40°C, 4% release, liquid phase side | storage, shipping, -40°C, 4% release, liquid phase side | storage, shipping, -40°C, 4% release, liquid phase side |
| WCFF | HFO-1132 (E) | mass % | 72.0 | 59.4 | 51.0 | 45.7 | 42.2 | 36.5 | 32.8 | 30.4 | 28.4 |
| | R32 | mass % | 0.0 | 8.2 | 15.8 | 21.5 | 26.0 | 35.1 | 42.6 | 47.9 | 53.2 |
| | R1234yf | mass % | 25.0 | 27.6 | 28.1 | 27.8 | 26.9 | 26.3 | 19.7 | 16.9 | 13.6 |
| | $CO_2$ | mass % | 3.0 | 4.8 | 5.1 | 5.0 | 4.9 | 5.1 | 4.9 | 4.8 | 4.8 |
| Burning velocity (WCF) | | cm/s | 8 or less | 8 or less | 8 or less | 8 or less | 8 or less | 8 or less | 8 or less | 8 or less | 8 or less |
| Burning velocity (WCFF) | | cm/s | 10 | 10 | 10 | 10 | 10 | 10 | 10 | 10 | 10 |

EP 3 957 700 B1

28

Table 3

| 2.5% $CO_2$ | | | | | | | | | | | | |
|---|---|---|---|---|---|---|---|---|---|---|---|---|
| Item | | | Comp. Ex. 70 | Ex.50 | Ex.51 | Ex.52 | Ex.53 | Ex.54 | Ex.55 | Ex.56 | Ex.57 |
| | | | M | | W | | N | | O | | P |
| WCF | HFO-1132(E) | mass% | 59.7 | 48.1 | 40.9 | 36.9 | 34.2 | 29.9 | 27.2 | 25.2 | 23.4 |
| | R32 | mass% | 0.0 | 5.0 | 10.0 | 14.4 | 18.2 | 27.6 | 36.8 | 44.0 | 51.7 |
| | R1234yf | mass% | 37.8 | 44.4 | 46.6 | 46.2 | 45.1 | 40.0 | 33.5 | 28.1 | 22.4 |
| | $CO_2$ | mass% | 2.5 | 2.5 | 2.5 | 2.5 | 2.5 | 2.5 | 2.5 | 2.5 | 2.5 |
| Leak condition that results in WCFF | | | storage, shipping, -40°C, 26% release, gas phase side | storage, shipping, -40°C, 20% release, gas phase side | storage, shipping, -40°C, 20% release, gas phase side | storage, shipping, -40°C, 20% release, gas phase side | storage, shipping, -40°C, 18% release, liquid phase side | storage, shipping, -40°C, 18% release, liquid phase side | storage, shipping, -40°C, 18% release, liquid phase side | storage, shipping, -40°C, 20% release, gas phase side | storage, shipping, -40°C, 22% release, gas phase side |
| WCFF | HFO-1132(E) | mass% | 72.0 | 60.3 | 52.1 | 46.9 | 43.2 | 37.1 | 33.2 | 30.6 | 28.3 |
| | R32 | mass% | 0.0 | 7.5 | 14.6 | 20.2 | 24.7 | 34.1 | 41.8 | 47.6 | 53.4 |
| | R1234yf | mass% | 24.9 | 27.4 | 28.4 | 28.0 | 26.7 | 23.4 | 19.7 | 16.9 | 13.8 |
| | $CO_2$ | mass% | 3.1 | 4.8 | 4.9 | 4.9 | 5.4 | 5.4 | 5.4 | 4.9 | 4.5 |
| Burning velocity (WCF) | | cm/s | 8 or less | 8 or less | 8 or less | 8 or less | 8 or less | 8 or less | 8 or less | 8 or less | 8 or less |
| Burning velocity (WCFF) | | cm/s | 10 | 10 | 10 | 10 | 10 | 10 | 10 | 10 | 10 |

EP 3 957 700 B1

4.0% $CO_2$

| Item | | | Comp. Ex. 80 | Ex.65 | Ex.66 | Ex.67 | Ex.68 | Ex.69 | Ex.70 | Ex.71 | Ex.72 |
|---|---|---|---|---|---|---|---|---|---|---|---|
| | | | M | | W | | N | | O | | P |
| WCF | HFO-1132(E) | mass% | 60.4 | 49.6 | 42.6 | 38.3 | 35.5 | 31.0 | 28.0 | 25.9 | 23.9 |
| | R32 | mass% | 0.0 | 5.0 | 10.0 | 14.4 | 18.2 | 27.6 | 36.8 | 44.0 | 51.7 |
| | R1234yf | mass% | 35.6 | 41.4 | 43.4 | 43.3 | 42.3 | 37.4 | 31.2 | 26.1 | 20.4 |
| | $CO_2$ | mass% | 4.0 | 4.0 | 4.0 | 4.0 | 4.0 | 4.0 | 4.0 | 4.0 | 4.0 |
| Leak condition that results in WCFF | | | storage, shipping, -40°C, 32% release, gas phase side | storage, shipping, -40°C, 26% release, gas phase side | storage, shipping, -40°C, 26% release, gas phase side | storage, shipping, -40°C, 288 release, gas phase side | storage, shipping, -40°C, 26% release, gas phase side | storage, shipping, -40°C, 288 release, gas phase side | storage, shipping, -40°C, 32% release, gas phase side | storage, shipping, -40°C, 32% release, gas phase side | storage, shipping, -40°C, 32% release, gas phase side |
| WCFF | HFO-1132 (E) R32 | mass% mass% | 72.0 0.0 | 60.9 7.1 | 52.9 13.9 | 47.5 19.4 | 43.8 23.9 | 37.4 33.5 | 33.1 41.7 | 30.5 47.6 | 28.1 53.6 |
| | R1234yf | mass% | 24.5 | 27.0 | 28.0 | 27.8 | 26.9 | 23.6 | 20.5 | 17.2 | 13.5 |
| | $CO_2$ | mass% | 3.5 | 5.0 | 5.2 | 5.3 | 5.4 | 5.5 | 4.7 | 4.7 | 4.8 |
| Burning velocity (WCF) | | cm/s | 8 or less | 8 or less | 8 or less | 8 or less | 8 or less | 8 or less | 8 or less | 8 or less | 8 or less |
| Burning velocity (WCFF) | | cm/s | 10 | 10 | 10 | 10 | 10 | 10 | 10 | 10 | 10 |

EP 3 957 700 B1

31

5.5% $CO_2$

| | Item | | Comp. Ex. 90 | Ex.80 | Ex.81 | Eat. 82 | Ex. 83 | Ex. 84 | Ex. 85 | Ex. 86 | Ex. 87 |
|---|---|---|---|---|---|---|---|---|---|---|---|
| | | | M | | W | | N | | O | | P |
| WCF | HFO-1132(E) | mass% | 60.7 | 50.3 | 43.3 | 39.0 | 36.3 | 31.6 | 28.4 | 26.2 | 24.2 |
| | R32 | mass% | 0.0 | 5.0 | 10.0 | 14.4 | 18.2 | 27.6 | 36.8 | 44.0 | 51.7 |
| | R1234yf | mass% | 33.8 | 39.2 | 41.2 | 41.1 | 40.0 | 35.3 | 29.3 | 24.3 | 18.6 |
| | $CO_2$ | mass% | 5.5 | 5.5 | 5.5 | 5.5 | 5.5 | 5.5 | 5.5 | 5.5 | 5.5 |
| Leak condition that results in WCFF | | | storage, shipping, -40°C, 36% release, gas phase side | storage, shipping, -40°C, 34% release, gas phase side | storage, shipping, -40°C, 34% release, gas phase side | storage, shipping, -40°C, 34% release, gas phase side | storage, shipping, -40°C, 34% release, gas phase side | storage, shipping, -40°C, 36% release, gas phase side | storage, shipping, -40°C, 38% release, gas phase side | storage, shipping, -40°C, 40% release, gas phase side | storage, shipping, -40°C, 40% release, gas phase side |
| WCFF | HFO-1132(E) | mass% | 72.0 | 61.2 | 53.2 | 47.8 | 44.2 | 37.6 | 33.2 | 30.3 | 27.9 |
| | R32 | mass% | 0.0 | 6.8 | 13.5 | 19.0 | 23.4 | 33.2 | 41.7 | 47.9 | 54.2 |
| | R1234yf | mass% | 24.0 | 27.0 | 28.1 | 27.7 | 26.8 | 23.9 | 20.2 | 17.3 | 13.3 |
| | $CO_2$ | mass% | 4.0 | 5.0 | 5.2 | 5.5 | 5.6 | 5.3 | 4.9 | 4.5 | 4.6 |
| Burning velocity (WCF) | | cm/s | 8 or less | 8 or less | 8 or less | 8 or less | 8 or less | 8 or less | 8 or less | 8 or less | 8 or less |
| Burning velocity (WCFF) | | cm/s | 10 | 10 | 10 | 10 | 10 | 10 | 10 | 10 | 10 |

EP 3 957 700 B1

33

7.0% $CO_2$

| Item | | | Comp. Ex. 100 | Ex. 95 | Ex. 96 | Ex. 97 | Ex. 98 | Ex. 99 | Ex. 100 | Ex. 101 | Ex. 102 |
|---|---|---|---|---|---|---|---|---|---|---|---|
| | | | M | | W | | N | | O | | P |
| WCF | HFO-1132(E) | mass% | 60.7 | 50.3 | 43.7 | 39.5 | 36.7 | 31.9 | 28.6 | 26.4 | 24.2 |
| | R32 | mass% | 0.0 | 5.0 | 10.0 | 14.4 | 18.2 | 27.6 | 36.8 | 44.0 | 51.7 |
| | R1234yf | mass% | 32.3 | 37.7 | 39.3 | 39.1 | 38.1 | 33.5 | 27.6 | 22.6 | 17.1 |
| | $CO_2$ | mass% | 7.0 | 7.0 | 7.0 | 7.0 | 7.0 | 7.0 | 7.0 | 7.0 | 7.0 |
| Leak condition that results in WCFF | | | storage, shipping, -40°C, 42% release, gas phase side | storage, shipping, -40°C, 34% release, gas phase side | storage, shipping, -40°C, 38% release, gas phase side | storage, shipping, -40°C, 40% release, gas phase side | storage, shipping, -40°C, 40% release, gas phase side | storage, shipping, -40°C, 42% release, gas phase side | storage, shipping, -40°C, 42% release, gas phase side | storage, shipping, -40°C, 42% release, gas phase side | storage, shipping, -40°C, 44% release, gas phase side |
| WCFF | HFO-1132(E) | mass% | 72.0 | 61.2 | 53.4 | 48.1 | 44.4 | 37.7 | 33.2 | 30.4 | 27.8 |
| | R32 | mass% | 0.0 | 6.8 | 13.3 | 18.7 | 23.2 | 33.1 | 41.7 | 47.9 | 54.6 |
| | R1234yf | mass% | 24.4 | 27.0 | 27.8 | 28.1 | 27.1 | 24.1 | 19.8 | 16.3 | 12.7 |
| | $CO_2$ | mass% | 3.6 | 5.0 | 5.5 | 5.1 | 5.3 | 5.1 | 5.3 | 5.4 | 4.9 |
| Burning velocity (WCF) | | cm/s | 8 or less | 8 or less | 8 or less | 8 or less | 8 or less | 8 or less | 8 or less | 8 or less | 8 or less |
| Burning velocity (WCFF) | | cm/s | 10 | 10 | 10 | 10 | 10 | 10 | 10 | 10 | 10 |

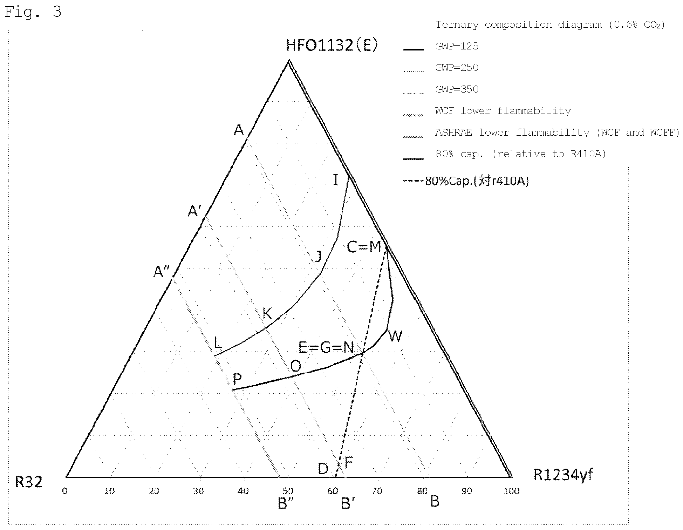

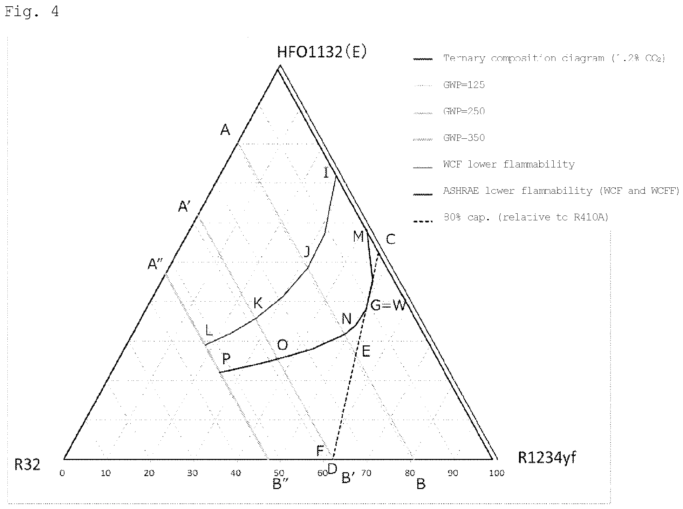

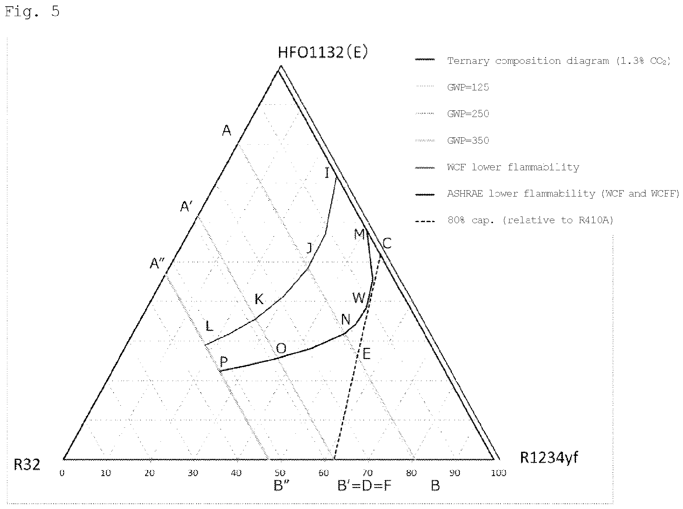

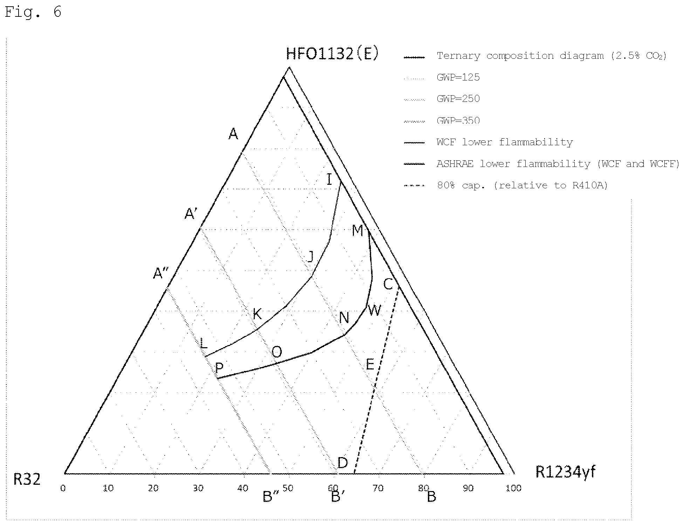

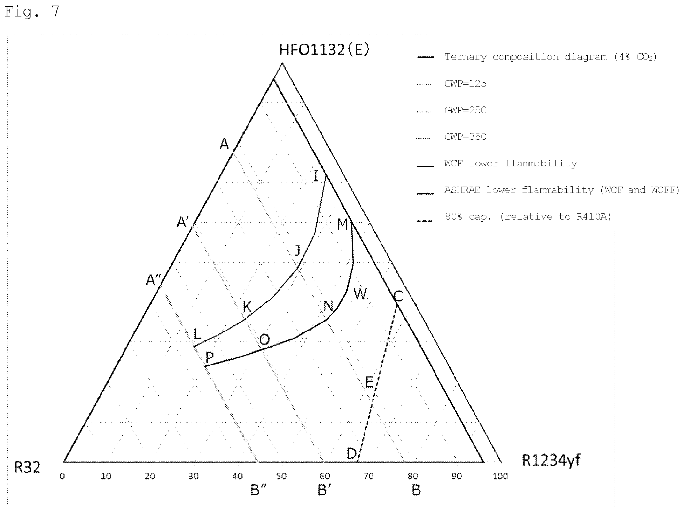

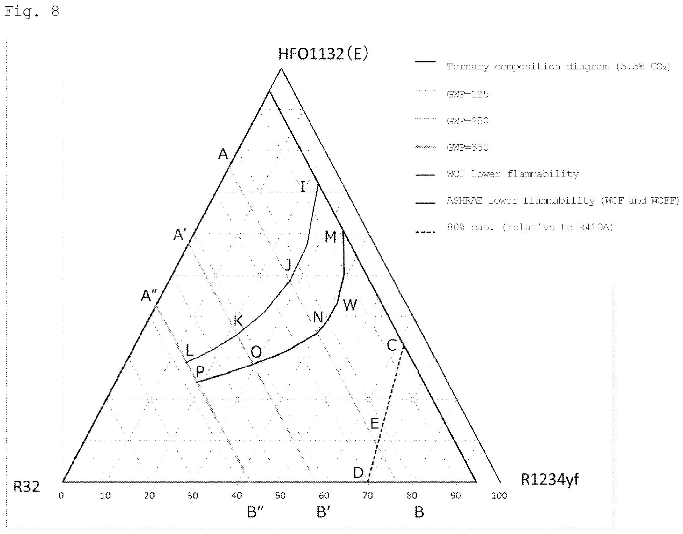

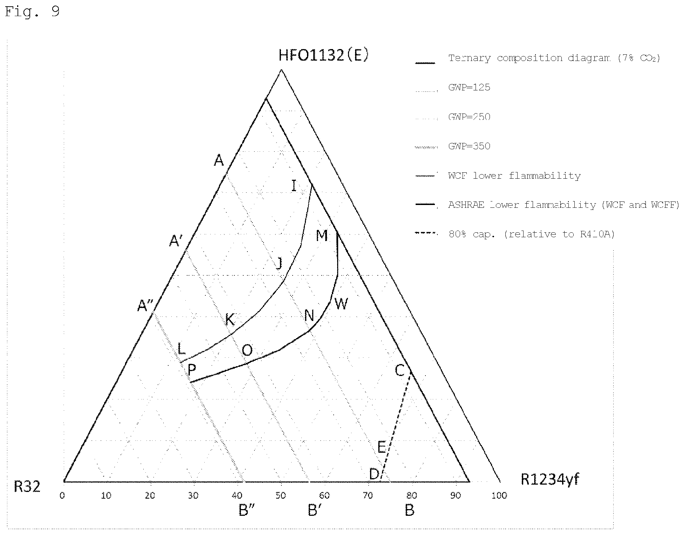

The results indicate that when the mass% of $CO_2$, R32, HFO-1132(E), and R1234yf based on their sum is respectively represented by w, x, y, and z in the ternary composition diagrams of Figs. 2 to 9 in which the sum of R32, HFO-1132(E), and R1234yf is (100-w) mass%, when coordinates(x, y, z) are on or below the straight lines connecting points I, J, K, and L, a WCF lower flammability is achieved.

In the ternary composition diagram of Fig. 2, it is also found that when coordinates (x, y, z) are on or below the straight lines connecting points M, N, O, and P, a ASHRAE lower flammability is achieved.

Mixed refrigerants were prepared by mixing R32, HFO-1132(E), and R1234yf at mass% based on their sum shown in Tables 3 to 10. The coefficient of performance (COP) ratio and the refrigerating capacity ratio of the mixed refrigerants in Tables 3 to 10 relative to those of R410 were determined.

The GWP of compositions each comprising a mixture of R1234yf and R410A (R32 = 50%/R125 = 50%) was evaluated based on the values stated in the Intergovernmental Panel on Climate Change (IPCC), fourth report. The GWP of HFO-1132(E), which was not stated in the report, was assumed to be 1 from HFO-1132a (GWP = 1 or less) and HFO-1123 (GWP = 0.3, described in PTL 1). The refrigerating capacity of compositions each comprising R410A and a mixture of HFO-1132(E), HFO-1123, and R1234yf was determined by performing theoretical refrigeration cycle calculations for the mixed refrigerants using the National Institute of Science and Technology (NIST) and Reference Fluid Thermodynamic and Transport Properties Database (Refprop 9.0) under the following conditions.

Evaporation temperature: 5°C

Condensation temperature: 45°C

Superheating temperature: 5 K

Subcooling temperature: 5 K

$E_{comp}$ (compressive modulus) : 0.7 kWh

Tables 3 to 10 show these values together with the GWP of each mixed refrigerant. Tables 3 to 10 respectively show the cases in which the $CO_2$ concentrations are 0 mass%, 0.6 mass%, 1.2 mass%, 1.3 mass%, 2.5 mass%, 4 mass%, 5.5 mass%, and 7 mass%.

Table 4

| 0% $CO_2$ | | | | | | | | | | |
|---|---|---|---|---|---|---|---|---|---|---|
| Item | Unit | Comp. Ex. 1 | Comp. Ex.2 | Comp. Ex. 3 | Comp. Ex. 4 | Comp. Ex. 5 | Comp. Ex.6 | Comp. Ex. 7 | Comp. Ex.8 | Comp. Ex.9 |
| | | | A | B | A' | B' | A" | B" | C | D |
| HFC7-1132 (E) | mass% | R410A | 81.6 | 0.0 | 63.1 | 0.0 | 48.2 | 0.0 | 58.3 | 0.0 |
| R32 | mass% | | 18.4 | 18.1 | 36.9 | 36.7 | 51.8 | 51.5 | 0.0 | 40.3 |
| R1234yf | mass% | | 0.0 | 81.9 | 0.0 | 63.3 | 0.0 | 49.5 | 41.7 | 59.7 |
| $CO_2$ | mass% | | 0.0 | 0.0 | 0.0 | 0.0 | 0.0 | 0.0 | 0.0 | 0.0 |
| GWP | - | 2088 | 125 | 125 | 250 | 250 | 350 | 350 | 2 | 274 |
| COP ratio | % (relative to R410A) | 100 | 98.7 | 103.6 | 98.7 | 102.3 | 99.2 | 102.1 | 100.3 | 102.2 |
| Refrigerating capacity ratio | % (relative to R410A) | 100 | 105.3 | 62.5 | 109.9 | 77.5 | 112.1 | 87.0 | 80.0 | 80.0 |
| Condensation glide | °C | 0.1 | 0.3 | 6.8 | 0.1 | 4.5 | 0.0 | 2.7 | 2.9 | 4.0 |

| Item | Unit | Comp. Ex. 10 E | Comp. Ex. 11 F | Comp. Ex. 12 G | Comp. Ex. 13 I | Comp. Ex. 14 | Comp. Ex. 15 J | Comp. Ex. 16 | Comp. Ex. 17 K | Comp. Ex. 18 |
|---|---|---|---|---|---|---|---|---|---|---|
| HFO-1132 (E) | mass% | 31.9 | 5.2 | 26.2 | 72.0 | 57.2 | 48.5 | 41.2 | 35.6 | 32.0 |
| R32 | mass% | 18.2 | 36.7 | 22.2 | 0.0 | 10.0 | 18.3 | 27.6 | 36.8 | 44.2 |
| R1234yf | mass% | 49.9 | 58.1 | 51.6 | 28.0 | 32.8 | 33.2 | 31.2 | 27.6 | 23.8 |
| $CO_2$ | mass% | 0.0 | 0.0 | 0.0 | 0.0 | 0.0 | 0.0 | 0.0 | 0.0 | 0.0 |
| GWP | - | 125 | 250 | 152 | 2 | 69 | 125 | 188 | 250 | 300 |
| COP ratio | % (relative to R410A) | 100.3 | 101.8 | 100.5 | 99.9 | 99.5 | 99.4 | 99.5 | 99.6 | 99.8 |
| Refrigerating capacity ratio | % (relative to R410A) | 82.3 | 80.8 | 82.4 | 86.6 | 88.4 | 90.9 | 94.2 | 97.7 | 100.5 |
| Condensation glide | °C | 4.4 | 4.3 | 4.5 | 1.7 | 2.6 | 2.7 | 2.4 | 1.9 | 1.6 |

| Item | Unit | Comp. Ex. 19 | Comp. Ex. 20 | Comp. Ex. 21 | Comp. Ex. 22 | Comp. Ex. 23 | Comp. Ex. 24 | Comp. Ex. 25 | Comp. Ex. 26 | Comp. Ex. 27 | Comp. Ex. 28 |
|---|---|---|---|---|---|---|---|---|---|---|---|
| | | L | M | | W | | N | | O | | P |
| HFO-1132 (E) | mass% | 28.9 | 52.6 | 39.2 | 32.4 | 29.3 | 27.7 | 24.5 | 22.6 | 21.2 | 20.5 |
| R32 | mass% | 51.7 | 0.0 | 5.0 | 10.0 | 14.5 | 18.2 | 27.6 | 36.8 | 44.2 | 51.7 |
| R1234yf | mass% | 19.4 | 47.4 | 55.8 | 57.6 | 56.2 | 54.1 | 47.9 | 40.6 | 34.6 | 27.8 |
| $CO_2$ | mass% | 0.0 | 0.0 | 0.0 | 0.0 | 0.0 | 0.0 | 0.0 | 0.0 | 0.0 | 0.0 |
| GWP | - | 350 | 2 | 36 | 70 | 100 | 125 | 188 | 250 | 300 | 350 |
| COP ratio | % (relative to R410A) | 100.1 | 100.5 | 100.9 | 100.9 | 100.8 | 100.7 | 100.4 | 100.4 | 100.5 | 100.6 |
| Refrigerating capacity ratio | % (relative to R410A) | 103.3 | 77.1 | 74.8 | 75.6 | 77.8 | 80.0 | 85.5 | 91.0 | 95.0 | 99.1 |
| Condensation glide | °C | 1.2 | 3.4 | 4.7 | 5.2 | 5.1 | 4.9 | 4.0 | 3.0 | 2.3 | 1.7 |

Table 5

| 0.6% CO₂ | | | | | | | | | | |
|---|---|---|---|---|---|---|---|---|---|---|
| Item | Unit | Comp. Ex. 29 | Comp. Ex. 30 | Comp. Ex. 31 | Comp. Ex. 32 | Comp. Ex. 33 | Comp. Ex. 34 | Comp. Ex. 35 | Comp. Ex. 36 | Ex. 1 |
| | | A | B | A' | B' | A" | B" | C=M | D | E=G=N |
| HFO-1132 (E) | mass% | 81.0 | 0.0 | 62.5 | 0.0 | 47.6 | 0.0 | 55.4 | 0.0 | 29.6 |
| R32 | mass% | 18.4 | 18.1 | 36.9 | 36.7 | 51.8 | 51.6 | 0.0 | 38.6 | 18.2 |
| R1234yf | mass% | 0.0 | 81.3 | 0.0 | 62.7 | 0.0 | 47.8 | 44.0 | 60.8 | 51.6 |
| CO₂ | mass% | 0.6 | 0.6 | 0.6 | 0.6 | 0.6 | 0.6 | 0.6 | 0.6 | 0.6 |
| GWP | - | 125 | 125 | 250 | 250 | 350 | 350 | 2 | 263 | 125 |
| COP ratio | % (relative to R410A) | 98.4 | 103.4 | 98.4 | 102.1 | 99.0 | 102.0 | 100.1 | 102.1 | 100.2 |
| Refrigerating capacity ratio | % (relative to R410A) | 106.5 | 63.7 | 111.1 | 78.7 | 113.1 | 88.6 | 80.0 | 80.0 | 82.4 |
| Condensation glide | °C | 0.7 | 7.5 | 0.4 | 4.9 | 0.3 | 3.0 | 3.9 | 4.7 | 5.2 |

EP 3 957 700 B1

40

| Item | Unit | Ex.2 | Comp. Ex. 37 | Ex. 3 | Ex. 4 | Ex. 5 | Ex. 6 | Ex. 7 | Ex. 8 | Comp. Ex. 38 |
|---|---|---|---|---|---|---|---|---|---|---|
| | | F | I | | J | | K | | L | |
| HFO-1132 (E) | mass% | 2.7 | 72.0 | 57.2 | 48.5 | 41.2 | 35.6 | 32.0 | 28.9 | 42.4 |
| R32 | mass% | 36.7 | 0.0 | 10.0 | 18.3 | 27.6 | 36.8 | 44.2 | 51.7 | 5.0 |
| R1234yf | mass% | 60.0 | 27.4 | 32.6 | 32.6 | 30.6 | 27.0 | 23.3 | 10.8 | 52.0 |
| $CO_2$ | mass% | 0.6 | 0.6 | 0.6 | 0.6 | 0.6 | 0.6 | 0.6 | 0.6 | 0.6 |
| GWP | - | 250 | 2 | 69 | 125 | 188 | 250 | 300 | 350 | 36 |
| COP ratio | % (relative to R410A) | 101.8 | 99.5 | 99.2 | 99.1 | 99.2 | 99.4 | 99.6 | 99.7 | 100.3 |
| Refrigerating capacity ratio | % (relative to R410A) | 80.4 | 88.1 | 89.7 | 92.3 | 95.5 | 99.0 | 101.7 | 108.2 | 77.9 |
| Condensation glide | °C | 4.8 | 5.2 | 2.4 | 3.2 | 3.1 | 2.8 | 2.3 | 1.9 | 3.9 |

| Item | Unit | Comp. Ex. 39 | Comp. Ex.40 | Ex.9 | Ex.10 | Ex.11 | Ex.12 |
|---|---|---|---|---|---|---|---|
| | | W | | | O | | P |
| HFO-1132 (E) | mass% | 35.1 | 31.6 | 26.3 | 24.0 | 22.4 | 20.9 |
| R32 | mass% | 10.0 | 14.5 | 27.6 | 36.8 | 44.0 | 51.7 |
| R1234yf | mass% | 54.3 | 53.3 | 45.5 | 38.6 | 33.0 | 26.8 |
| $CO_2$ | mass% | 0.6 | 0.6 | 0.6 | 0.6 | 0.6 | 0.6 |
| GWP | - | 70 | 100 | 188 | 250 | 299 | 350 |
| COP ratio | % (relative to R410A) | 100.4 | 100.3 | 100.1 | 100.1 | 100.2 | 100.4 |
| Refrigerating capacity ratio | % (relative to R410A) | 78.5 | 80.4 | 87.8 | 93.0 | 96.8 | 100.5 |
| Condensation glide | °C | 5.1 | 5.5 | 5.4 | 5.1 | 4.2 | 3.2 |

Table 6

| 1.2% CO$_2$ | | | | | | | | | | |
|---|---|---|---|---|---|---|---|---|---|---|
| Item | Unit | Comp. Ex. 41 | Comp. Ex. 42 | Comp. Ex. 43 | Comp. Ex. 44 | Comp. Ex. 45 | Comp. Ex. 46 | Comp. Ex. 47 | Comp. Ex. 48 | Ex.13 |
| | | A | B | A' | B' | A" | B" | C | D | E |
| HFO-1132 (E) | mass% | 80.4 | 0.0 | 61.9 | 0.0 | 47.0 | 0.0 | 52.4 | 0.0 | 26.5 |
| R32 | mass% | 18.4 | 18.1 | 36.9 | 36.6 | 51.8 | 51.6 | 0.0 | 36.8 | 18.2 |
| R1234yf | mass% | 0.0 | 80.7 | 0.0 | 62.2 | 0.0 | 46.9 | 46.4 | 62.0 | 54.1 |
| CO$_2$ | mass% | 1.2 | 1.2 | 1.2 | 1.2 | 1.2 | 1.2 | 1.2 | 1.2 | 1.2 |
| GWP | - | 125 | 125 | 250 | 250 | 350 | 350 | 2 | 251 | 125 |
| COP ratio | % (relative to R410A) | 98.1 | 103.2 | 98.2 | 101.9 | 98.7 | 101.7 | 99.9 | 101.9 | 100.2 |
| Refrigerating capacity ratio | % (relative to R410A) | 107.7 | 65.0 | 112.2 | 79.8 | 114.2 | 89.9 | 80.0 | 80.0 | 82.0 |
| Condensation glide | °C | 1.2 | 8.1 | 0.8 | 5.4 | 0.6 | 3.4 | 4.9 | 5.3 | 6.0 |

EP 3 957 700 B1

| Item | Unit | Ex. 14 | Ex. 15 | Comp. Ex. 49 | Ex. 16 | Ex. 17 | Ex. 18 | Ex. 19 | Ex. 20 | Ex.21 |
|---|---|---|---|---|---|---|---|---|---|---|
| | | F | G=W | I | | J | | K | | L |
| HFO-1132 (E) | mass% | 0.3 | 38.1 | 72.0 | 57.2 | 48.5 | 41.2 | 35.6 | 32.0 | 28.9 |
| R32 | mass% | 36.6 | 10.0 | 0.0 | 10.0 | 18.3 | 27.6 | 36.8 | 44.2 | 51.7 |
| R1234yf | mass% | 61.9 | 50.7 | 26.8 | 31.6 | 32.0 | 30.0 | 26.4 | 22.7 | 18.2 |
| $CO_2$ | mass% | 1.2 | 1.2 | 1.2 | 1.2 | 1.2 | 1.2 | 1.2 | 1.2 | 1.2 |
| GWP | - | 250 | 70 | 2 | 69 | 125 | 188 | 250 | 300 | 350 |
| COP ratio | % (relative to R410A) | 101.9 | 99.9 | 99.2 | 98.9 | 98.8 | 98.9 | 99.1 | 99.4 | 99.6 |
| Refrigerating capacity ratio | % (relative to R410A) | 80.0 | 81.6 | 89.7 | 91.3 | 93.7 | 96.9 | 100.3 | 103.0 | 105.8 |
| Condensation glide | °C | 5.4 | 5.7 | 3.1 | 3.6 | 3.6 | 3.2 | 2.6 | 2.2 | 1.8 |

| Item | Unit | Comp. Ex.50 | Comp. Ex.51 | Ex. 22 | Ex. 23 | Ex. 24 | Ex. 25 | Ex. 26 | Ex.27 |
|---|---|---|---|---|---|---|---|---|---|
| | | M | | | N | | O | | P |
| HFO-1132(E) | mass% | 58.0 | 45.2 | 34.0 | 31.7 | 27.9 | 25.4 | 23.7 | 22.1 |
| R32 | mass% | 0.0 | 5.0 | 14.4 | 18.2 | 27.6 | 36.8 | 44.0 | 51.7 |
| R1234yf | mass% | 40.8 | 48.6 | 48.9 | 48.9 | 43.3 | 36.0 | 31.1 | 25.0 |
| $CO_2$ | mass% | 1.2 | 1.2 | 1.2 | 1.2 | 1.2 | 1.2 | 1.2 | 1.2 |
| GWP | - | 2 | 36 | 100 | 125 | 188 | 250 | 298 | 350 |
| COP ratio | % (relative to R410A) | 99.6 | 99.8 | 99.8 | 99.8 | 99.7 | 99.7 | 99.9 | 100.0 |
| Refrigerating capacity ratio | % (relative to R410A) | 82.9 | 80.9 | 83.6 | 84.9 | 90.0 | 95.3 | 98.7 | 102.4 |
| Condensation glide | °C | 4.3 | 5.4 | 5.6 | 5.4 | 4.4 | 3.4 | 2.8 | 2.2 |

Table 7

| 1.38 $CO_2$ | | | | | | | | | | |
|---|---|---|---|---|---|---|---|---|---|---|
| Item | Unit | Comp. Ex. 52 | Comp. Ex. 53 | Comp. Ex. 54 | Comp. Ex.55 | Comp. Ex. 56 | Comp. Ex. 57 | Comp. Ex. 58 | Ex.28 | Comp. Ex. 59 |
| | | A | B | A' | B'=D=F | A" | B" | C | E | I |
| HFO-1132 (E) | mass% | 80.3 | 0.0 | 61.8 | 0.0 | 46.9 | 0.0 | 51.9 | 26.1 | 72.0 |
| R32 | mass% | 18.4 | 18.1 | 36.9 | 36.6 | 51.8 | 51.6 | 0.0 | 18.2 | 0.0 |
| R1234yf | mass% | 0.0 | 80.6 | 0.0 | 62.1 | 0.0 | 47.1 | 46.8 | 54.4 | 26.7 |
| $CO_2$ | mass% | 1.3 | 1.3 | 1.3 | 1.3 | 1.3 | 1.3 | 1.3 | 1.3 | 1.3 |
| GWP | - | 125 | 125 | 250 | 250 | 350 | 350 | 2 | 125 | 2 |
| COP ratio | % (relative to R410A) | 98.0 | 103.2 | 98.1 | 101.9 | 98.7 | 101.7 | 99.8 | 100.2 | 99.1 |
| Refrigerating capacity ratio | % (relative to R410A) | 107.9 | 65.2 | 112.3 | 80.0 | 114.3 | 90.0 | 80.0 | 82.0 | 89.9 |
| Condensation glide | °C | 1.2 | 8.2 | 0.8 | 5.4 | 0.7 | 3.4 | 5.1 | 6.1 | 3.2 |

| Item | Unit | Ex. 29 | Ex. 30 | Ex. 31 | Ex.32 | Ex.33 | Ex.34 | Comp. Ex.60 | Ex. 35 | Ex. 36 |
|---|---|---|---|---|---|---|---|---|---|---|
| | | | J | | K | | L | M | | W |
| HFO-1132 (E) | mass% | 57.2 | 48.5 | 41.2 | 35.6 | 32.0 | 28.9 | 58.2 | 45.5 | 38.4 |
| R32 | mass% | 10.0 | 18.3 | 27.6 | 36.8 | 44.2 | 51.7 | 0.0 | 5.0 | 10.0 |
| R1234yf | mass% | 31.5 | 31.9 | 29.9 | 26.3 | 22.6 | 18.1 | 40.5 | 48.2 | 50.3 |
| $CO_2$ | mass% | 1.3 | 1.3 | 1.3 | 1.3 | 1.3 | 1.3 | 1.3 | 1.3 | 1.3 |
| GWP | - | 69 | 125 | 188 | 250 | 300 | 350 | 2 | 36 | 70 |
| COP ratio | % (relative to R410A) | 98.9 | 98.8 | 98.9 | 99.1 | 99.3 | 99.6 | 99.5 | 99.8 | 99.8 |
| Refrigerating capacity ratio | % (relative to R410A) | 91.5 | 93.9 | 97.1 | 100.5 | 103.2 | 106.0 | 83.3 | 81.3 | 82.0 |
| Condensation glide | °C | 3.7 | 3.6 | 3.2 | 2.7 | 2.3 | 1.8 | 4.4 | 5.4 | 5.8 |

| Item | Unit | Ex. 37 | Ex. 38 | Ex. 39 | Ex.40 | Ex.41 | Ex. 42 |
|---|---|---|---|---|---|---|---|
| | | | N | | O | | P |
| HFO-1132 (E) | mass% | 34.3 | 31.9 | 28.1 | 25.6 | 23.9 | 22.3 |
| R32 | mass% | 14.4 | 18.2 | 27.6 | 36.8 | 44.0 | 51.7 |
| R1234yf | mass% | 50.0 | 48.6 | 43.0 | 36.3 | 30.8 | 24.7 |
| $CO_2$ | mass% | 1.3 | 1.3 | 1.3 | 1.3 | 1.3 | 1.3 |
| GWP | - | 100 | 125 | 188 | 250 | 298 | 350 |
| COP ratio | % (relative to R410A) | 99.8 | 99.8 | 99.6 | 99.7 | 99.8 | 100.0 |
| Refrigerating capacity ratio | % (relative to R410A) | 83.5 | 85.2 | 90.3 | 95.4 | 99.0 | 102.7 |
| Condensation glide | °C | 6 | 5.4 | 4.5 | 3.5 | 2.9 | 2.3 |

Table 8

| Item | Unit | Comp. Ex. 61 | Comp. Ex. 62 | Comp. Ex. 63 | Comp. Ex. 64 | Comp. Ex. 65 | Comp. Ex. 66 | Comp. Ex. 67 | Comp. Ex. 68 | Ex.43 |
|---|---|---|---|---|---|---|---|---|---|---|
| | | \multicolumn{9}{c}{2.5% $CO_2$} |
| | | A | B | A' | B' | A" | B" | C | D | E |
| HFO-1132 (E) | mass% | 79.1 | 0.0 | 60.6 | 0.0 | 45.7 | 0.0 | 46.2 | 0.0 | 20.9 |
| R32 | mass% | 18.4 | 18.1 | 36.9 | 36.6 | 51.8 | 51.6 | 0.0 | 33.2 | 18.2 |
| R1234yf | mass% | 0.0 | 79.4 | 0.0 | 60.9 | 0.0 | 45.9 | 51.3 | 64.3 | 58.4 |
| $CO_2$ | mass% | 2.5 | 2.5 | 2.5 | 2.5 | 2.5 | 2.5 | 2.5 | 2.5 | 2.5 |
| GWP | - | 125 | 125 | 250 | 250 | 350 | 350 | 3 | 227 | 125 |
| COP ratio | % (relative to R410A) | 97.4 | 102.7 | 97.6 | 101.5 | 98.3 | 101.3 | 99.6 | 101.6 | 100.2 |
| Refrigerating capacity ratio | % (relative to R410A) | 110.3 | 67.8 | 114.5 | 82.5 | 116.4 | 92.5 | 80.0 | 80.0 | 81.7 |
| Condensation glide | °C | 2.0 | 9.5 | 1.5 | 6.3 | 1.3 | 4.1 | 7.1 | 6.9 | 7.6 |

| Item | Unit | Comp. Ex. 69 | Ex. 44 | Ex. 45 | Ex. 46 | Ex. 47 | Ex.48 | Ex. 49 | Comp. Ex. 70 | Ex. 50 |
| --- | --- | --- | --- | --- | --- | --- | --- | --- | --- | --- |
| | | I | | J | | K | | L | M | |
| HFO-1132 (E) | mass% | 72.0 | 57.2 | 48.5 | 41.2 | 35.6 | 32.0 | 28.9 | 59.7 | 48.1 |
| R32 | mass% | 0.0 | 10.0 | 18.3 | 27.6 | 36.8 | 44.2 | 51.7 | 0.0 | 5.0 |
| R1234yf | mass% | 25.5 | 30.3 | 30.7 | 28.7 | 25.1 | 21.3 | 16.9 | 37.8 | 44.4 |
| $CO_2$ | mass% | 2.5 | 2.5 | 2.5 | 2.5 | 2.5 | 2.5 | 2.5 | 2.5 | 2.5 |
| GWP | - | 2 | 69 | 125 | 188 | 250 | 300 | 350 | 2 | 36 |
| COP ratio | % (relative to R410A) | 98.4 | 98.2 | 98.2 | 98.4 | 98.6 | 98.9 | 99.1 | 98.8 | 99.0 |
| Refrigerating capacity ratio | % (relative to R410A) | 93.1 | 94.5 | 96.7 | 99.8 | 103.1 | 105.9 | 108.6 | 87.1 | 85.7 |
| Condensation glide | °C | 4.4 | 4.7 | 4.5 | 3.9 | 3.3 | 2.8 | 2.4 | 5.6 | 6.3 |

| Item | Unit | Ex. 51 | Ex. 52 | Ex. 53 | Ex. 54 | Ex. 55 | Ex. 56 | Ex. 57 |
| --- | --- | --- | --- | --- | --- | --- | --- | --- |
| | | W | | N | | O | | P |
| HFO-1132 (E) | mass% | 40.9 | 36.9 | 34.2 | 29.9 | 27.2 | 25.2 | 23.4 |
| R32 | mass% | 10.0 | 14.4 | 18.2 | 27.6 | 36.8 | 44.0 | 51.7 |
| R1234yf | mass% | 46.6 | 46.2 | 45.1 | 40.0 | 33.5 | 28.1 | 22.4 |
| CO2 | mass% | 2.5 | 2.5 | 2.5 | 2.5 | 2.5 | 2.5 | 2.5 |
| GWP | - | 70 | 99 | 125 | 188 | 250 | 298 | 350 |
| COP ratio | % (relative to R410A) | 99.1 | 99.1 | 99.1 | 99.0 | 99.1 | 99.3 | 99.5 |
| Refrigeratin g capacity ratio | % (relative to R410A) | 86.2 | 87.7 | 89.2 | 94.0 | 98.8 | 102.4 | 105.8 |
| Condensation glide | °C | 6 | 6.3 | 6.0 | 5.0 | 4.0 | 3.4 | 2.8 |

Table 9 4% $CO_2$

| Item | Unit | Comp. Ex. 71 | Comp. Ex. 72 | Comp. Ex. 73 | Comp. Ex. 74 | Comp. Ex. 75 | Comp. Ex. 76 | Comp. Ex. 77 | Comp. Ex. 78 | Ex. 58 |
|---|---|---|---|---|---|---|---|---|---|---|
| | | A | B | A' | B' | A" | B" | C | D | E |
| HFO-1132 (E) | mass% | 77.6 | 0.0 | 59.1 | 0.0 | 44.2 | 0.0 | 39.5 | 0.0 | 14.7 |
| R32 | mass% | 18.4 | 18.1 | 36.9 | 36.6 | 51.8 | 51.6 | 0.0 | 28.9 | 18.1 |
| R1234yf | mass% | 0.0 | 77.9 | 0.0 | 59.4 | 0.0 | 44.4 | 56.5 | 67.1 | 63.2 |
| $CO_2$ | mass% | 4.0 | 4.0 | 4.0 | 4.0 | 4.0 | 4.0 | 4.0 | 4.0 | 4.0 |
| GWP | - | 125 | 125 | 250 | 250 | 350 | 350 | 3 | 198 | 125 |
| COP ratio | % (relative to R410A) | 96.7 | 102.2 | 97.0 | 101.0 | 97.7 | 100.8 | 99.4 | 101.3 | 100.4 |
| Refrigerating capacity ratio | % (relative to R410A) | 113.3 | 71.2 | 117.3 | 85.7 | 118.9 | 95.6 | 80.0 | 80.0 | 81.2 |
| Condensation glide | °C | 3.0 | 10.9 | 2.2 | 7.2 | 2.0 | 5.0 | 9.6 | 8.7 | 9.6 |

| Item | Unit | Comp. Ex. 79 | Ex. 59 | Ex. 60 | Ex. 61 | Ex. 62 | Ex. 63 | Ex. 64 | Comp. Ex. 80 | Ex. 65 |
|---|---|---|---|---|---|---|---|---|---|---|
| | | I | | J | | K | | L | M | |
| HFO-1132(E) | mass% | 72.0 | 57.2 | 48.5 | 41.2 | 35.6 | 32.0 | 28.9 | 60.4 | 49.6 |
| R32 | mass% | 0.0 | 10.0 | 18.3 | 27.6 | 36.8 | 44.2 | 51.7 | 0.0 | 5.0 |
| R1234yf | mass% | 24.0 | 28.8 | 29.2 | 27.2 | 23.6 | 19.8 | 15.4 | 35.6 | 41.4 |
| $CO_2$ | mass% | 4.0 | 4.0 | 4.0 | 4.0 | 4.0 | 4.0 | 4.0 | 4.0 | 4.0 |
| GWP | - | 2 | 69 | 125 | 188 | 250 | 300 | 350 | 2 | 36 |
| COP ratio | % (relative to R410A) | 97.6 | 97.5 | 97.5 | 97.7 | 98.0 | 98.3 | 98.6 | 98.0 | 98.2 |
| Refrigerating capacity ratio | % (relative to R410A) | 97.0 | 98.1 | 100.2 | 103.2 | 106.5 | 109.1 | 111.8 | 91.3 | 90.2 |
| Condensation glide | °C | 5.8 | 5.8 | 5.4 | 4.7 | 4.0 | 3.5 | 3.1 | 6.9 | 7.4 |

(continued)

| Item | Unit | Ex. 66 W | Ex. 67 | Ex. 68 N | Ex. 69 | Ex.70 O | Ex.71 | Ex. 72 P |
|---|---|---|---|---|---|---|---|---|
| HFO-1132 (E) | mass% | 42.6 | 38.3 | 35.5 | 31.0 | 28.0 | 25.9 | 23.9 |
| R32 | mass% | 10.0 | 14.4 | 18.2 | 27.6 | 36.8 | 44.0 | 51.7 |
| R1234yf | mass% | 43.4 | 43.3 | 42.3 | 37.4 | 31.2 | 26.1 | 20.4 |
| $CO_2$ | mass% | 4.0 | 4.0 | 4.0 | 4.0 | 4.0 | 4.0 | 4.0 |
| GWP | - | 70 | 99 | 125 | 188 | 250 | 298 | 350 |
| COP ratio | % (relative to R410A) | 98.3 | 98.3 | 98.3 | 98.3 | 98.5 | 98.7 | 98.9 |
| Refrigeratin g capacity ratio | % (relative to R410A) | 90.7 | 92.0 | 93.4 | 97.9 | 102.5 | 105.9 | 109.3 |
| Condensation glide | °C | 7 | 7.2 | 6.9 | 5.8 | 4.7 | 4.0 | 3.4 |

Table 10

| 5.5% CO$_2$ | | | | | | | | | | |
|---|---|---|---|---|---|---|---|---|---|---|
| Item | Unit | Comp. Ex. 81 | Comp. Ex. 82 | Comp. Ex. 83 | Comp. Ex. 84 | Comp. Ex. 85 | Comp. Ex. 86 | Comp. Ex. 87 | Comp. Ex. 88 | Ex. 73 |
| | | A | B | A' | B' | A" | B" | C | D | E |
| HFO-1132 (E) | mass% | 76.1 | 0.0 | 57.6 | 0.0 | 42.7 | 0.0 | 33.0 | 0.0 | 8.8 |
| R32 | mass% | 18.4 | 18.1 | 36.9 | 36.6 | 51.8 | 51.6 | 0.0 | 24.7 | 18.1 |
| R1234yf | mass% | 0.0 | 76.4 | 0.0 | 57.9 | 0.0 | 42.9 | 61.5 | 69.8 | 67.6 |
| CO$_2$ | mass% | 5.5 | 5.5 | 5.5 | 5.5 | 5.5 | 5.5 | 5.5 | 5.5 | 5.5 |
| GWP | - | 125 | 125 | 250 | 250 | 350 | 350 | 3 | 170 | 125 |
| COP ratio | % (relative to R410A) | 96.0 | 101.8 | 96.4 | 100.5 | 97.2 | 100.3 | 99.4 | 101.2 | 100.6 |
| Refrigerating capacity ratio | % (relative to R410A) | 116.2 | 74.6 | 119.9 | 88.9 | 121.5 | 98.7 | 80.0 | 80.0 | 80.8 |
| Condensation glide | °C | 3.7 | 12.3 | 2.9 | 8.2 | 2.6 | 5.8 | 12.1 | 10.8 | 11.5 |

| Item | Unit | Comp. Ex. 89 | Ex. 74 | Ex.75 | Ex. 76 | Ex. 77 | Ex. 78 | Ex. 79 | Comp. Ex. 90 | Ex. 80 |
| --- | --- | --- | --- | --- | --- | --- | --- | --- | --- | --- |
| | | I | | J | | K | | L | M | |
| HFO-1132(E) | mass% | 72.0 | 57.2 | 48.5 | 41.2 | 35.6 | 32.0 | 28.9 | 60.7 | 50.3 |
| R32 | mass% | 0.0 | 10.0 | 18.3 | 27.6 | 36.8 | 44.2 | 51.7 | 0.0 | 5.0 |
| R1234yf | mass% | 22.5 | 27.3 | 27.7 | 25.7 | 22.1 | 18.3 | 13.9 | 33.8 | 39.2 |
| $CO_2$ | mass% | 5.5 | 5.5 | 5.5 | 5.5 | 5.5 | 5.5 | 5.5 | 5.5 | 5.5 |
| GWP | - | 2 | 69 | 125 | 188 | 250 | 299 | 350 | 2 | 36 |
| COP ratio | % (relative to R410A) | 96.8 | 96.8 | 96.9 | 97.1 | 97.4 | 97.7 | 98.0 | 97.2 | 97.4 |
| Refrigerating capacity ratio | % (relative to R410A) | 100.9 | 101.8 | 103.8 | 106.6 | 109.8 | 112.4 | 115.0 | 95.4 | 94.3 |
| Condensation glide | °C | 6.9 | 6.7 | 6.2 | 5.4 | 4.7 | 4.1 | 3.7 | 8.1 | 8.5 |

| Item | Unit | Ex. 81 | Ex. 82 | Ex. 83 | Ex. 84 | Ex. 85 | Ex. 86 | Ex. 87 |
| --- | --- | --- | --- | --- | --- | --- | --- | --- |
| | | W | | N | | O | | P |
| HFO-1132 (E) | mass% | 43.3 | 39.0 | 36.3 | 31.6 | 28.4 | 26.2 | 24.2 |
| R32 | mass% | 10.0 | 14.4 | 18.2 | 27.6 | 36.8 | 44.0 | 51.7 |
| R1234yf | mass% | 41.2 | 41.1 | 40.0 | 35.3 | 29.3 | 24.3 | 18.6 |
| $CO_2$ | mass% | 5.5 | 5.5 | 5.5 | 5.5 | 5.5 | 5.5 | 5.5 |
| GWP | - | 70 | 99 | 125 | 188 | 250 | 298 | 350 |
| COP ratio | % (relative to R410A) | 97.5 | 97.6 | 97.6 | 97.7 | 97.9 | 98.1 | 98.3 |
| Refrigeratin g capacity ratio | % (relative to R410A) | 94.7 | 95.9 | 97.4 | 101.6 | 106.1 | 109.3 | 112.6 |
| Condensation glide | °C | 8 | 8.1 | 7.6 | 6.5 | 5.4 | 4.7 | 4.0 |

Table 11

| Item | Unit | Comp. Ex. 91 | Comp. Ex. 92 | Comp. Ex. 93 | Comp. Ex. 94 | Comp. Ex. 95 | Comp. Ex. 96 | Comp. Ex. 97 | Comp. Ex. 98 | Ex. 88 |
|---|---|---|---|---|---|---|---|---|---|---|
| | | 7% CO_2 | | | | | | | | |
| | | A | B | A' | B' | A" | B" | C | D | E |
| HFO-1132(E) | mass% | 74.6 | 0.0 | 56.1 | 0.0 | 41.2 | 0.0 | 26.8 | 0.0 | 3.1 |
| R32 | mass% | 18.4 | 18.1 | 36.9 | 36.6 | 51.8 | 51.6 | 0.0 | 20.5 | 18.1 |
| R1234yf | mass% | 0.0 | 74.9 | 0.0 | 56.4 | 0.0 | 41.4 | 66.2 | 72.5 | 71.8 |
| $CO_2$ | mass% | 7.0 | 7.0 | 7.0 | 7.0 | 7.0 | 7.0 | 7.0 | 7.0 | 7.0 |
| GWP | - | 125 | 125 | 250 | 250 | 350 | 350 | 3 | 141 | 125 |
| COP ratio | % (relative to R410A) | 95.3 | 101.3 | 95.8 | 100.0 | 96.7 | 99.8 | 99.5 | 101.1 | 100.9 |
| Refrigerating capacity ratio | % (relative to R410A) | 119.0 | 78.0 | 122.6 | 92.2 | 124.0 | 101.9 | 80.0 | 80.0 | 80.3 |
| Condensation glide | °C | 4.4 | 13.6 | 3.4 | 9.0 | 3.1 | 6.5 | 14.6 | 13.0 | 13.3 |

| Item | Unit | Comp. Ex. 99 | Ex. 89 | Ex. 90 | Ex. 91 | Ex. 92 | Ex. 93 | Ex. 94 | Comp. Ex. 100 | Ex. 95 |
|---|---|---|---|---|---|---|---|---|---|---|
| | | I | | J | | K | | L | M | |
| HFO-1132(E) | mass% | 72.0 | 57.2 | 48.5 | 41.2 | 35.6 | 32.0 | 28.9 | 60.7 | 50.3 |
| R32 | mass% | 0.0 | 10.0 | 18.3 | 27.6 | 36.8 | 44.2 | 51.7 | 0.0 | 5.0 |
| R1234yf | mass% | 21.0 | 25.8 | 26.2 | 24.2 | 20.6 | 16.8 | 12.4 | 32.3 | 37.7 |
| $CO_2$ | mass% | 7.0 | 7.0 | 7.0 | 7.0 | 7.0 | 7.0 | 7.0 | 7.0 | 7.0 |
| GWP | - | 2 | 69 | 125 | 188 | 250 | 299 | 350 | 2 | 36 |
| COP ratio | % (relative to R410A) | 96.0 | 96.1 | 96.2 | 96.5 | 96.8 | 97.1 | 97.5 | 96.5 | 96.7 |
| Refrigerating capacity ratio | % (relative to R410A) | 104.7 | 105.5 | 107.3 | 110.0 | 113.1 | 115.6 | 118.2 | 99.2 | 98.0 |
| Condensation glide | °C | 7.9 | 7.5 | 6.9 | 6.0 | 5.3 | 4.7 | 4.2 | 9.2 | 9.4 |

| Item | Unit | Ex. 96 | Ex. 97 | Ex. 98 | Ex. 99 | Ex.100 | Ex.101 | Ex.102 |
|---|---|---|---|---|---|---|---|---|
| | | W | | N | | O | | P |
| HFO-1132 (E) | mass% | 43.7 | 39.5 | 36.7 | 31.9 | 28.6 | 26.4 | 24.2 |
| R32 | mass% | 10.0 | 14.4 | 18.2 | 27.6 | 36.8 | 44.0 | 51.7 |
| R1234yf | mass% | 39.3 | 39.1 | 38.1 | 33.5 | 27.6 | 22.6 | 17.1 |
| $CO_2$ | mass% | 7.0 | 7.0 | 7.0 | 7.0 | 7.0 | 7.0 | 7.0 |
| GWP | - | 70 | 99 | 125 | 188 | 250 | 298 | 350 |
| COP ratio | % (relative to R410A) | 96.9 | 96.9 | 97.0 | 97.1 | 97.3 | 97.5 | 97.8 |
| Refrigerating capacity ratio | % (relative to R410A) | 98.6 | 99.7 | 101.1 | 105.2 | 109.5 | 112.7 | 115.8 |
| Condensation glide | °C | 9 | 8.8 | 8.4 | 7.1 | 6.0 | 5.2 | 4.6 |

Table 12

| Item | Unit | Comp. Ex. 101 | Comp. Ex. 102 | Comp. Ex. 103 | Ex. 103 | Ex. 104 | Comp. Ex. 104 | Comp. Ex. 105 | Comp. Ex. 106 |
|---|---|---|---|---|---|---|---|---|---|
| HFO-1132 (E) | mass% | 10.0 | 10.0 | 10.0 | 10.0 | 10.0 | 10.0 | 10.0 | 10.0 |
| R32 | mass% | 78.8 | 68.8 | 58.8 | 48.8 | 38.8 | 28.8 | 18.8 | 8.8 |
| R1234yf | mass% | 10.0 | 20.0 | 30.0 | 40.0 | 50.0 | 60.0 | 70.0 | 80.0 |
| $CO_2$ | mass% | 1.2 | 1.2 | 1.2 | 1.2 | 1.2 | 1.2 | 1.2 | 1.2 |
| GWP | - | 532 | 465 | 398 | 331 | 264 | 197 | 130 | 63 |
| COP ratio | % (relative to R410A) | 101.3 | 101.2 | 101.1 | 101.0 | 101.0 | 101.3 | 102.0 | 102.8 |

(continued)

| Item | Unit | Comp. Ex. 101 | Comp. Ex. 102 | Comp. Ex. 103 | Ex. 103 | Ex. 104 | Comp. Ex. 104 | Comp. Ex. 105 | Comp. Ex. 106 |
|---|---|---|---|---|---|---|---|---|---|
| Refrigerating capacity ratio | % (relative to R410A) | 108.5 | 104.1 | 99.2 | 93.6 | 87.2 | 80.1 | 72.2 | 63.1 |
| Condensation glide | °C | 1.1 | 1.6 | 2.2 | 3.1 | 4.3 | 5.8 | 7.4 | 8.4 |

| Item | Unit | Comp. Ex. 107 | Comp. Ex. 108 | Ex. 105 | Ex. 106 | Ex. 107 | Comp. Ex. 109 | Comp. Ex. 110 | Comp. Ex. 111 |
|---|---|---|---|---|---|---|---|---|---|
| HFO-1132(E) | mass% | 20.0 | 20.0 | 20.0 | 20.0 | 20.0 | 20.0 | 20.0 | 30.0 |
| R32 | mass% | 68.8 | 58.8 | 48.8 | 38.8 | 28.8 | 18.8 | 8.8 | 58.8 |
| R1234yf | mass% | 10.0 | 20.0 | 30.0 | 40.0 | 50.0 | 60.0 | 70.0 | 10.0 |
| $CO_2$ | mass% | 1.2 | 1.2 | 1.2 | 1.2 | 1.2 | 1.2 | 1.2 | 1.2 |
| GWP | - | 465 | 398 | 331 | 264 | 197 | 130 | 62 | 398 |
| COP ratio | % (relative to R410A) | 100.6 | 100.5 | 100.4 | 100.3 | 100.4 | 100.9 | 101.8 | 100.0 |
| Refrigerating capacity ratio | % (relative to R410A) | 108.6 | 103.9 | 98.6 | 92.6 | 85.8 | 78.2 | 69.6 | 108.3 |
| Condensation glide | °C | 1.1 | 1.7 | 2.5 | 3.5 | 4.8 | 6.4 | 7.7 | 1.2 |

| Item | Unit | Ex. 108 | Ex. 109 | Ex. 110 | Ex. 111 | Comp. Ex. 112 | Comp. Ex. 113 | Comp. Ex. 114 | Ex. 112 |
|---|---|---|---|---|---|---|---|---|---|
| HFO-1132(E) | mass% | 30.0 | 30.0 | 30.0 | 30.0 | 30.0 | 40.0 | 40.0 | 40.0 |
| R32 | mass% | 48.8 | 38.8 | 28.8 | 18.8 | 8.8 | 48.8 | 38.8 | 28.8 |
| R1234yf | mass% | 20.0 | 30.0 | 40.0 | 50.0 | 60.0 | 10.0 | 20.0 | 30.0 |
| $CO_2$ | mass% | 1.2 | 1.2 | 1.2 | 1.2 | 1.2 | 1.2 | 1.2 | 1.2 |
| GWP | - | 331 | 263 | 196 | 129 | 62 | 330 | 263 | 196 |
| COP ratio | % (relative to R410A) | 99.9 | 99.8 | 99.8 | 100.1 | 100.8 | 99.4 | 99.3 | 99.3 |
| Refrigerating capacity ratio | % (relative to R410A) | 103.2 | 97.5 | 91.0 | 83.7 | 75.6 | 107.5 | 102.0 | 95.8 |
| Condensation glide | °C | 1.8 | 2.7 | 3.8 | 5.2 | 6.6 | 1.3 | 2.0 | 2.9 |

| Item | Unit | Ex. 113 | Ex. 114 | Comp. Ex. 115 | Comp. Ex. 116 | Comp. Ex. 117 | Ex. 115 | Comp. Ex. 118 | Comp. Ex. 119 |
|---|---|---|---|---|---|---|---|---|---|
| HFO-1132 (E) | mass% | 40.0 | 40.0 | 50.0 | 50.0 | 50.0 | 50.0 | 60.0 | 60.0 |
| R32 | mass% | 18.8 | 8.8 | 38.8 | 28.8 | 18.8 | 8.8 | 28.8 | 18.8 |
| R1234yf | mass% | 40.0 | 50.0 | 10.0 | 20.0 | 30.0 | 40.0 | 10.0 | 20.0 |
| $CO_2$ | mass% | 1.2 | 1.2 | 1.2 | 1.2 | 1.2 | 1.2 | 1.2 | 1.2 |
| GWP | - | 129 | 62 | 263 | 196 | 129 | 62 | 195 | 128 |
| COP ratio | % (relative to R410A) | 99.5 | 100.0 | 99.0 | 98.9 | 99.0 | 99.4 | 98.7 | 98.7 |
| Refrigerating capacity ratio | % (relative to R410A) | 88.9 | 81.1 | 106.2 | 100.3 | 93.7 | 86.2 | 104.5 | 98.2 |
| Condensation glide | °C | 4.1 | 5.4 | 1.4 | 2.2 | 3.2 | 4.3 | 1.5 | 2.4 |

| Item | Unit | Comp. Ex. 120 | Comp. Ex. 121 | Comp. Ex. 122 | Comp. Ex. 123 | Ex. 116 | Ex. 117 | Ex. 118 | Ex. 119 |
|---|---|---|---|---|---|---|---|---|---|
| HFO-1132(E) | mass% | 60.0 | 70.0 | 70.0 | 80.0 | 15.0 | 15.0 | 15.0 | 15.0 |
| R32 | mass% | 8.8 | 18.8 | 8.8 | 8.8 | 48.8 | 46.3 | 43.8 | 41.3 |
| R1234yf | mass% | 30.0 | 10.0 | 20.0 | 10.0 | 35.0 | 37.5 | 40.0 | 42.5 |
| $CO_2$ | mass% | 1.2 | 1.2 | 1.2 | 1.2 | 1.2 | 1.2 | 1.2 | 1.2 |
| GWP | - | 61 | 128 | 61 | 61 | 331 | 314 | 297 | 281 |
| COP ratio | % (relative to R410A) | 99.0 | 98.5 | 98.8 | 98.6 | 100.7 | 100.7 | 100.6 | 100.6 |
| Refrigerating capacity ratio | % (relative to R410A) | 91.0 | 102.4 | 95.5 | 99.7 | 96.1 | 94.7 | 93.1 | 91.6 |
| Condensation glide | °C | 3.3 | 1.7 | 2.5 | 1.9 | 2.8 | 3.0 | 3.3 | 3.6 |

| Item | Unit | Ex. 120 | Ex. 121 | Ex. 122 | Ex. 123 | Ex. 124 | Ex. 125 | Ex. 126 | Ex. 127 |
|---|---|---|---|---|---|---|---|---|---|
| HFO-1132(E) | mass% | 15.0 | 15.0 | 15.0 | 15.0 | 15.0 | 17.5 | 17.5 | 17.5 |
| R32 | mass% | 38.8 | 36.3 | 33.8 | 31.3 | 28.8 | 48.8 | 46.3 | 43.8 |
| R1234yf | mass% | 45.0 | 47.5 | 50.0 | 52.5 | 55.0 | 32.5 | 35.0 | 37.5 |
| $CO_2$ | mass% | 1.2 | 1.2 | 1.2 | 1.2 | 1.2 | 1.2 | 1.2 | 1.2 |
| GWP | - | 264 | 247 | 230 | 214 | 197 | 331 | 314 | 297 |

(continued)

| Item | Unit | Ex. 120 | Ex. 121 | Ex. 122 | Ex. 123 | Ex. 124 | Ex. 125 | Ex. 126 | Ex. 127 |
|---|---|---|---|---|---|---|---|---|---|
| COP ratio | % (relative to R410A) | 100.6 | 100.7 | 100.7 | 100.7 | 100.8 | 100.5 | 100.5 | 100.5 |
| Refrigerating capacity ratio | % (relative to R410A) | 89.9 | 88.3 | 86.6 | 84.8 | 83.0 | 97.4 | 95.9 | 94.4 |
| Condensation glide | °C | 3.9 | 4.2 | 4.6 | 4.9 | 5.3 | 2.6 | 2.9 | 3.1 |

Table 13

| Item | Unit | Ex. 128 | Ex. 129 | Ex. 130 | Ex. 131 | Ex. 132 | Ex. 133 | Ex. 134 | Ex. 135 |
|---|---|---|---|---|---|---|---|---|---|
| HFO-1132(E) | mass% | 17.5 | 17.5 | 17.5 | 17.5 | 17.5 | 17.5 | 17.5 | 20.0 |
| R32 | mass% | 41.3 | 38.8 | 36.3 | 33.8 | 31.3 | 28.8 | 26.3 | 46.3 |
| R1234yf | mass% | 40.0 | 42.5 | 45.0 | 47.5 | 50.0 | 52.5 | 55.0 | 32.5 |
| $CO_2$ | mass% | 1.2 | 1.2 | 1.2 | 1.2 | 1.2 | 1.2 | 1.2 | 1.2 |
| GWP | - | 281 | 264 | 247 | 230 | 213 | 197 | 180 | 314 |
| COP ratio | % (relative to R410A) | 100.5 | 100.5 | 100.5 | 100.5 | 100.6 | 100.6 | 100.7 | 100.4 |
| Refrigerating capacity ratio | % (relative to R410A) | 92.9 | 91.3 | 89.6 | 87.9 | 86.2 | 84.4 | 82.6 | 97.1 |
| Condensation glide | °C | 3.4 | 3.7 | 4.0 | 4.3 | 4.7 | 5.1 | 5.4 | 2.7 |

| Item | Unit | Ex. 136 | Ex. 137 | Ex. 138 | Ex. 139 | Ex. 140 | Ex. 141 | Ex. 142 | Ex. 143 |
|---|---|---|---|---|---|---|---|---|---|
| HFO-1132 (E) | mass% | 20.0 | 20.0 | 20.0 | 20.0 | 20.0 | 20.0 | 22.5 | 22.5 |
| R32 | mass% | 43.8 | 41.3 | 36.3 | 33.8 | 31.3 | 26.3 | 46.3 | 43.8 |
| R1234yf | mass%% | 35.0 | 37.5 | 42.5 | 45.0 | 47.5 | 52.5 | 30.0 | 32.5 |
| CO2 | mass%% | 1.2 | 1.2 | 1.2 | 1.2 | 1.2 | 1.2 | 1.2 | 1.2 |
| GWP | - | 297 | 280 | 247 | 230 | 213 | 180 | 314 | 297 |
| COP比 | % (relative to R410A) | 100.3 | 100.3 | 100.3 | 100.3 | 100.4 | 100.5 | 100.2 | 100.2 |
| Refrigerating capacity ratio | % (relative to R410A) | 95.7 | 94.1 | 90.9 | 89.3 | 87.5 | 84.0 | 98.4 | 96.9 |
| Condensation glide | °C | 2.9 | 3.2 | 3.8 | 4.1 | 4.4 | 5.2 | 2.5 | 2.7 |

| Item | Unit | Ex. 144 | Ex. 145 | Ex. 146 | Ex. 147 | Ex. 148 | Ex. 149 | Ex. 150 | Ex. 151 |
|---|---|---|---|---|---|---|---|---|---|
| HFO-1132 (E) | mass% | 22.5 | 22.5 | 22.5 | 22.5 | 22.5 | 22.5 | 22.5 | 22.5 |

(continued)

| Item | Unit | Ex. 144 | Ex. 145 | Ex. 146 | Ex. 147 | Ex. 148 | Ex. 149 | Ex. 150 | Ex. 151 |
|---|---|---|---|---|---|---|---|---|---|
| R32 | mass% | 41.3 | 38.8 | 36.3 | 33.8 | 31.3 | 28.8 | 26.3 | 23.8 |
| R1234yf | mass% | 35.0 | 37.5 | 40.0 | 42.5 | 45.0 | 47.5 | 50.0 | 52.5 |
| $CO_2$ | mass% | 1.2 | 1.2 | 1.2 | 1.2 | 1.2 | 1.2 | 1.2 | 1.2 |
| GWP | - | 280 | 264 | 247 | 230 | 213 | 197 | 180 | 163 |
| COP ratio | % (relative to R410A) | 100.2 | 100.2 | 100.2 | 100.2 | 100.2 | 100.3 | 100.3 | 100.4 |
| Refrigerating capacity ratio | % (relative to R410A) | 95.4 | 93.8 | 92.2 | 90.6 | 88.9 | 87.1 | 85.3 | 83.5 |
| Condensation glide | °C | 3.0 | 3.3 | 3.6 | 3.9 | 4.2 | 4.5 | 4.9 | 5.3 |

| Item | Unit | Ex. 152 | Ex. 153 | Ex. 154 | Ex. 155 | Ex. 156 | Ex. 157 | Ex. 158 | Ex. 159 |
|---|---|---|---|---|---|---|---|---|---|
| HFO-1132(E) | mass% | 25.0 | 25.0 | 25.0 | 25.0 | 25.0 | 25.0 | 27.5 | 27.5 |
| R32 | mass% | 33.8 | 31.3 | 28.8 | 26.3 | 23.8 | 21.3 | 21.9 | 21.9 |
| R1234yf | mass% | 40.0 | 42.5 | 45.0 | 47.5 | 50.0 | 52.5 | 45.0 | 47.5 |
| $CO_2$ | mass% | 1.2 | 1.2 | 1.2 | 1.2 | 1.2 | 1.2 | 1.2 | 1.2 |
| GWP | - | 230 | 213 | 196 | 180 | 163 | 146 | 150 | 150 |
| COP ratio | % (relative to R410A) | 100.0 | 100.0 | 100.1 | 100.1 | 100.2 | 100.3 | 100.0 | 100.1 |
| Refrigerating capacity ratio | % (relative to R410A) | 91.8 | 90.2 | 88.4 | 86.7 | 84.8 | 83.0 | 86.3 | 85.4 |
| Condensation glide | °C | 3.6 | 4.0 | 4.3 | 4.7 | 5.0 | 5.4 | 4.8 | 4.9 |

| Item | Unit | Ex. 160 | Ex. 161 | Ex. 162 | Ex. 163 | Ex. 164 |
|---|---|---|---|---|---|---|
| HFO-1132 (E) | mass% | 27.5 | 27.5 | 30.0 | 32.0 | 34.0 |
| R32 | mass% | 21.9 | 21.9 | 21.9 | 21.9 | 13.8 |
| R1234yf | mass% | 50.0 | 52.5 | 52.5 | 51.0 | 51.0 |
| $CO_2$ | mass% | 1.2 | 1.2 | 1.2 | 1.2 | 1.2 |
| GWP | - | 150 | 150 | 150 | 150 | 96 |
| COP ratio | % (relative to R410A) | 100.1 | 100.2 | 100.1 | 100.0 | 100.1 |
| Refrigerating capacity ratio | % (relative to R410A) | 84.5 | 83.7 | 84.2 | 85.1 | 82.0 |
| Condensation glide | °C | 5.1 | 5.2 | 5.0 | 4.9 | 5.5 |

Table 14

| Item | Unit | Comp. Ex. 125 | Comp. Ex. 126 | Comp. Ex. 127 | Ex. 166 | Ex. 167 | Ex. 168 | Comp. Ex. 128 | Comp. Ex. 129 |
|---|---|---|---|---|---|---|---|---|---|
| HFO-1132(E) | mass% | 10.0 | 10.0 | 10.0 | 10.0 | 10.0 | 10.0 | 10.0 | 10.0 |
| R32 | mass% | 77.5 | 67.5 | 57.5 | 47.5 | 37.5 | 27.5 | 17.5 | 7.5 |
| R1234yf | mass% | 10.0 | 20.0 | 30.0 | 40.0 | 50.0 | 60.0 | 70.0 | 80.0 |
| $CO_2$ | mass% | 2.5 | 2.5 | 2.5 | 2.5 | 2.5 | 2.5 | 2.5 | 2.5 |
| GWP | - | 524 | 457 | 389 | 322 | 255 | 188 | 121 | 54 |
| COP ratio | % (relative to R410A) | 100.9 | 100.8 | 100.6 | 100.5 | 100.5 | 100.9 | 101.6 | 102.4 |
| Refrigerating capacity ratio | % (relative to R410A) | 110.6 | 106.2 | 101.2 | 95.5 | 89.1 | 81.9 | 74.0 | 64.8 |
| Condensation glide | °C | 1.8 | 2.3 | 3.0 | 4.0 | 5.3 | 7.0 | 8.8 | 10.1 |

| Item | Unit | Comp. Ex. 130 | Comp. Ex. 131 | Ex. 169 | Ex. 170 | Ex. 171 | Comp. Ex. 132 | Comp. Ex. 133 | Comp. Ex. 134 |
|---|---|---|---|---|---|---|---|---|---|
| HFO-1132(E) | mass% | 20.0 | 20.0 | 20.0 | 20.0 | 20.0 | 20.0 | 20.0 | 30.0 |
| R32 | mass% | 67.5 | 57.5 | 47.5 | 37.5 | 27.5 | 17.5 | 7.5 | 57.5 |
| R1234yf | mass% | 10.0 | 20.0 | 30.0 | 40.0 | 50.0 | 60.0 | 70.0 | 10.0 |
| $CO_2$ | mass% | 2.5 | 2.5 | 2.5 | 2.5 | 2.5 | 2.5 | 2.5 | 2.5 |
| GWP | - | 456 | 389 | 322 | 255 | 188 | 121 | 54 | 389 |
| COP ratio | % (relative to R410A) | 100.1 | 100.0 | 99.9 | 99.8 | 100.0 | 100.5 | 101.3 | 99.5 |
| Refrigerating capacity ratio | % (relative to R410A) | 110.7 | 106.0 | 100.6 | 94.5 | 87.7 | 80.1 | 71.5 | 110.4 |
| Condensation glide | °C | 1.8 | 2.5 | 3.3 | 4.4 | 5.9 | 7.7 | 9.3 | 1.9 |

| Item | Unit | Ex. 172 | Ex. 173 | Ex. 174 | Ex. 175 | Comp. Ex.135 | Comp. Ex.136 | Comp. Ex.137 | Ex. 176 |
|---|---|---|---|---|---|---|---|---|---|
| HFO-1132(E) | mass% | 30.0 | 30.0 | 30.0 | 30.0 | 30.0 | 40.0 | 40.0 | 40.0 |
| R32 | mass% | 47.5 | 37.5 | 27.5 | 17.5 | 7.5 | 47.5 | 37.5 | 27.5 |
| R1234yf | mass% | 20.0 | 30.0 | 40.0 | 50.0 | 60.0 | 10.0 | 20.0 | 30.0 |
| $CO_2$ | mass% | 2.5 | 2.5 | 2.5 | 2.5 | 2.5 | 2.5 | 2.5 | 2.5 |
| GGΓP | - | 322 | 255 | 188 | 120 | 53 | 321 | 254 | 187 |

(continued)

| Item | Unit | Ex. 172 | Ex. 173 | Ex. 174 | Ex. 175 | Comp. Ex.135 | Comp. Ex.136 | Comp. Ex.137 | Ex. 176 |
|---|---|---|---|---|---|---|---|---|---|
| COP ratio | % (relative to R410A) | 99.3 | 99.2 | 99.3 | 99.6 | 100.3 | 98.9 | 98.8 | 98.7 |
| Refrigerating capacity ratio | % (relative to R410A) | 105.3 | 99.5 | 93.0 | 85.7 | 77.5 | 109.6 | 104.1 | 97.9 |
| Condensation glide | °C | 2.6 | 3.6 | 4.8 | 6.4 | 8.1 | 2.0 | 2.8 | 3.9 |

| Item | Unit | Ex. 177 | Ex. 178 | Comp. Ex.138 | Comp. Ex.139 | Comp. Ex.140 | Ex. 179 | Comp. Ex.141 | Comp. Ex.142 |
|---|---|---|---|---|---|---|---|---|---|
| HFO-1132(E) | mass% | 40.0 | 40.0 | 50.0 | 50.0 | 50.0 | 50.0 | 60.0 | 60.0 |
| R32 | mass% | 17.5 | 7.5 | 37.5 | 27.5 | 17.5 | 7.5 | 27.5 | 17.5 |
| R1234yf | mass% | 40.0 | 50.0 | 10.0 | 20.0 | 30.0 | 40.0 | 10.0 | 20.0 |
| $CO_2$ | mass% | 2.5 | 2.5 | 2.5 | 2.5 | 2.5 | 2.5 | 2.5 | 2.5 |
| GWP | - | 120 | 53 | 254 | 187 | 120 | 53 | 187 | 120 |
| COP ratio | % (relative to R410A) | 98.9 | 99.4 | 98.4 | 98.3 | 98.4 | 98.8 | 98.0 | 98.1 |
| Refrigerating capacity ratio | % (relative to R410A) | 91.0 | 83.1 | 108.4 | 102.5 | 95.9 | 88.4 | 106.8 | 100.4 |
| Condensation glide | °C | 5.3 | 6.8 | 2.2 | 3.1 | 4.3 | 5.6 | 2.4 | 3.4 |

| Item | Unit | Ex. 180 | Comp. Ex.143 | Comp. Ex.144 | Comp. Ex.145 | Ex. 181 | Ex. 182 | Ex. 183 | Ex. 184 |
|---|---|---|---|---|---|---|---|---|---|
| HFO-1132(E) | mass% | 60.0 | 70.0 | 70.0 | 80.0 | 15.0 | 15.0 | 15.0 | 15.0 |
| R32 | mass% | 7.5 | 17.5 | 7.5 | 7.5 | 50.0 | 47.5 | 45.0 | 42.5 |
| R1234yf | mass% | 30.0 | 10.0 | 20.0 | 10.0 | 32.5 | 35.0 | 37.5 | 40.0 |
| $CO_2$ | mass% | 2.5 | 2.5 | 2.5 | 2.5 | 2.5 | 2.5 | 2.5 | 2.5 |
| GWP | - | 52 | 119 | 52 | 52 | 339 | 322 | 305 | 289 |
| COP ratio | % (relative to R410A) | 98.4 | 97.9 | 98.1 | 98.0 | 100.2 | 100.2 | 100.2 | 100.2 |
| Refrigerating capacity ratio | % (relative to R410A) | 93.3 | 104.7 | 97.8 | 102.1 | 99.6 | 98.1 | 96.6 | 95.1 |
| Condensation glide | °C | 4.6 | 2.7 | 3.8 | 3.0 | 3.4 | 3.6 | 3.9 | 4.2 |

| Item | Unit | Ex. 185 | Ex. 186 | Ex. 187 | Ex. 188 | Ex. 189 | Ex. 190 | Ex. 191 | Ex. 192 |
|---|---|---|---|---|---|---|---|---|---|
| HFC7-1132(E) | mass% | 15.0 | 15.0 | 15.0 | 15.0 | 15.0 | 15.0 | 15.0 | 17.5 |
| R32 | mass% | 40.0 | 37.5 | 35.0 | 32.5 | 30.0 | 27.5 | 25.0 | 50.0 |
| R1234yf | mass% | 42.5 | 45.0 | 47.5 | 50.0 | 52.5 | 55.0 | 57.5 | 30.0 |
| $CO_2$ | mass% | 2.5 | 2.5 | 2.5 | 2.5 | 2.5 | 2.5 | 2.5 | 2.5 |
| GWP | - | 272 | 255 | 238 | 222 | 205 | 188 | 171 | 339 |
| COP ratio | % (relative to R410A) | 100.2 | 100.2 | 100.2 | 100.2 | 100.3 | 100.4 | 100.5 | 100.1 |
| Refrigerating capacity ratio | % (relative to R410A) | 93.5 | 91.9 | 90.2 | 88.5 | 86.7 | 84.9 | 83.0 | 100.8 |
| Condensation glide | °C | 4.5 | 4.8 | 5.2 | 5.6 | 6.0 | 6.4 | 6.9 | 3.2 |

Table 15

| Item | Unit | Ex. 193 | Ex. 194 | Ex. 195 | Ex. 196 | Ex. 197 | Ex. 198 | Ex. 199 | Ex. 200 |
|---|---|---|---|---|---|---|---|---|---|
| HFO-1132(E) | mass% | 17.5 | 17.5 | 17.5 | 17.5 | 17.5 | 17.5 | 17.5 | 17.5 |
| R32 | mass% | 47.5 | 45.0 | 42.5 | 40.0 | 37.5 | 35.0 | 32.5 | 30.0 |
| R1234yf | mass% | 32.5 | 35.0 | 37.5 | 40.0 | 42.5 | 45.0 | 47.5 | 50.0 |
| $CO_2$ | mass% | 2.5 | 2.5 | 2.5 | 2.5 | 2.5 | 2.5 | 2.5 | 2.5 |
| GWP | - | 322 | 305 | 289 | 272 | 255 | 238 | 221 | 205 |
| COP ratio | % (relative to R410A) | 100.0 | 100.0 | 100.0 | 100.0 | 100.0 | 100.0 | 100.0 | 100.1 |
| Refrigerating capacity ratio | % (relative to R410A) | 99.4 | 97.9 | 96.4 | 94.8 | 93.2 | 91.5 | 89.8 | 88.1 |
| Condensation glide | °C | 3.5 | 3.7 | 4.0 | 4.3 | 4.6 | 5.0 | 5.3 | 5.7 |

| Item | Unit | Ex.201 | Ex.202 | Ex.203 | Ex.204 | Ex. 205 | Ex. 206 | Ex. 207 | Ex. 208 |
|---|---|---|---|---|---|---|---|---|---|
| HFO-1132(E) | mass% | 17.5 | 17.5 | 17.5 | 20.0 | 20.0 | 20.0 | 20.0 | 20.0 |
| R32 | mass% | 27.5 | 25.0 | 22.5 | 50.0 | 45.0 | 42.5 | 40.0 | 35.0 |
| R1234yf | mass% | 52.5 | 55.0 | 57.5 | 27.5 | 32.5 | 35.0 | 37.5 | 42.5 |
| $CO_2$ | mass% | 2.5 | 2.5 | 2.5 | 2.5 | 2.5 | 2.5 | 2.5 | 2.5 |
| GWP | - | 188 | 171 | 154 | 339 | 305 | 289 | 272 | 238 |
| COP ratio | % (relative to R410A) | 100.2 | 100.3 | 100.4 | 99.9 | 99.9 | 99.8 | 99.8 | 99.8 |
| Refrigerating capacity ratio | % (relative to R410A) | 86.3 | 84.4 | 82.6 | 102.0 | 99.2 | 97.7 | 96.1 | 92.9 |

(continued)

| Item | Unit | Ex.201 | Ex.202 | Ex.203 | Ex.204 | Ex. 205 | Ex. 206 | Ex. 207 | Ex. 208 |
|---|---|---|---|---|---|---|---|---|---|
| Condensation glide | °C | 6.2 | 6.6 | 7.0 | 3.1 | 3.5 | 3.8 | 4.1 | 4.7 |

| Item | Unit | Ex. 209 | Ex. 210 | Ex. 211 | Ex. 212 | Ex. 213 | Ex. 214 | Ex. 215 | Ex. 216 |
|---|---|---|---|---|---|---|---|---|---|
| HFO-1132(E) | mass% | 20.0 | 20.0 | 20.0 | 20.0 | 20.0 | 22.5 | 22.5 | 22.5 |
| R32 | mass% | 32.5 | 30.0 | 25.0 | 22.5 | 20.0 | 50.0 | 47.5 | 45.0 |
| R1234yf | mass% | 45.0 | 47.5 | 52.5 | 55.0 | 57.5 | 25.0 | 27.5 | 30.0 |
| $CO_2$ | mass% | 2.5 | 2.5 | 2.5 | 2.5 | 2.5 | 2.5 | 2.5 | 2.5 |
| GWP | - | 221 | 205 | 171 | 154 | 138 | 339 | 322 | 305 |
| COP ratio | % (relative to R410A) | 99.8 | 99.9 | 100.0 | 100.2 | 100.3 | 99.8 | 99.7 | 99.7 |
| Refrigerating capacity ratio | % (relative to R410A) | 91.2 | 89.5 | 85.9 | 84.0 | 82.1 | 103.2 | 101.8 | 100.4 |
| Condensation glide | °C | 5.1 | 5.5 | 6.3 | 6.7 | 7.2 | 2.9 | 3.1 | 3.4 |

| Item | Unit | Ex. 217 | Ex. 218 | Ex. 219 | Ex. 220 | Ex. 221 | Ex. 222 | Ex. 223 | Ex. 224 |
|---|---|---|---|---|---|---|---|---|---|
| HFO-1132(E) | mass% | 22.5 | 22.5 | 22.5 | 22.5 | 22.5 | 22.5 | 22.5 | 22.5 |
| R32 | mass% | 42.5 | 40.0 | 37.5 | 35.0 | 32.5 | 30.0 | 27.5 | 25.0 |
| R1234yf | mass% | 32.5 | 35.0 | 37.5 | 40.0 | 42.5 | 45.0 | 47.5 | 50.0 |
| $CO_2$ | mass% | 2.5 | 2.5 | 2.5 | 2.5 | 2.5 | 2.5 | 2.5 | 2.5 |
| GWP | - | 288 | 272 | 255 | 238 | 221 | 205 | 188 | 171 |
| COP ratio | % (relative to R410A) | 99.7 | 99.7 | 99.7 | 99.7 | 99.7 | 99.7 | 99.8 | 99.8 |
| Refrigerating capacity ratio | % (relative to R410A) | 98.9 | 97.4 | 95.8 | 94.2 | 92.5 | 90.8 | 89.0 | 87.2 |
| Condensation glide | °C | 3.6 | 3.9 | 4.2 | 4.5 | 4.9 | 5.2 | 5.6 | 6.0 |

| Item | Unit | Ex. 225 | Ex. 226 | Ex. 227 | Ex. 228 | Ex. 229 | Ex. 230 | Ex. 231 | Ex. 232 |
|---|---|---|---|---|---|---|---|---|---|
| HFO-1132(E) | mass% | 22.5 | 22.5 | 22.5 | 25.0 | 25.0 | 25.0 | 25.0 | 25.0 |
| R32 | mass% | 22.5 | 20.0 | 17.5 | 40.0 | 37.5 | 35.0 | 32.5 | 30.0 |
| R1234yf | mass% | 52.5 | 55.0 | 57.5 | 32.5 | 35.0 | 37.5 | 40.0 | 42.5 |
| $CO_2$ | mass% | 2.5 | 2.5 | 2.5 | 2.5 | 2.5 | 2.5 | 2.5 | 2.5 |
| GWP | - | 154 | 137 | 121 | 272 | 255 | 238 | 221 | 204 |

(continued)

| Item | Unit | Ex. 225 | Ex. 226 | Ex. 227 | Ex. 228 | Ex. 229 | Ex. 230 | Ex. 231 | Ex. 232 |
|---|---|---|---|---|---|---|---|---|---|
| COP ratio | % (relative to R410A) | 99.9 | 100.1 | 100.2 | 99.5 | 99.5 | 99.5 | 99.5 | 99.5 |
| Refrigerating capacity ratio | % (relative to R410A) | 85.4 | 83.5 | 81.5 | 98.6 | 97.1 | 95.5 | 93.8 | 92.1 |
| Condensation glide | °C | 6.5 | 6.9 | 7.3 | 3.7 | 4.0 | 4.3 | 4.6 | 5.0 |

| Item | Unit | Ex. 233 | Ex. 234 | Ex. 235 | Ex. 236 | Ex. 237 | Ex. 238 | Ex. 239 | Ex. 240 |
|---|---|---|---|---|---|---|---|---|---|
| HFO-1132(E) | mass% | 25.0 | 25.0 | 25.0 | 25.0 | 25.0 | 27.5 | 27.5 | 27.5 |
| R32 | mass% | 27.5 | 25.0 | 22.5 | 20.0 | 17.5 | 32.5 | 30.0 | 27.5 |
| R1234yf | mass% | 45.0 | 47.5 | 50.0 | 52.5 | 55.0 | 37.5 | 40.0 | 42.5 |
| $CO_2$ | mass% | 2.5 | 2.5 | 2.5 | 2.5 | 2.5 | 2.5 | 2.5 | 2.5 |
| GWP | - | 188 | 171 | 154 | 137 | 121 | 221 | 204 | 188 |
| COP ratio | % (relative to R410A) | 99.6 | 99.6 | 99.7 | 99.9 | 100.0 | 99.4 | 99.4 | 99.4 |
| Refrigerating capacity ratio | % (relative to R410A) | 90.4 | 88.6 | 86.8 | 84.9 | 83.0 | 95.1 | 93.4 | 91.7 |
| Condensation glide | °C | 5.4 | 5.7 | 6.2 | 6.6 | 7.0 | 4.4 | 4.7 | 5.1 |

Table 16

| Item | Unit | Ex. 241 | Ex. 242 | Ex. 243 | Ex. 244 | Ex. 245 | Ex. 246 | Ex. 247 | Ex. 248 |
|---|---|---|---|---|---|---|---|---|---|
| HFO-1132 (E) | mass% | 27.5 | 27.5 | 27.5 | 27.5 | 27.5 | 30.0 | 30.0 | 30.0 |
| R32 | mass% | 25.0 | 22.5 | 20.0 | 17.5 | 15.0 | 25.0 | 22.5 | 20.0 |
| R1234yf | mass% | 45.0 | 47.5 | 50.0 | 52.5 | 55.0 | 42.5 | 45.0 | 47.5 |
| $CO_2$ | mass% | 2.5 | 2.5 | 2.5 | 2.5 | 2.5 | 2.5 | 2.5 | 2.5 |
| GWP | - | 171 | 154 | 137 | 121 | 104 | 171 | 154 | 137 |
| COP ratio | % (relative to R410A) | 99.5 | 99.5 | 99.6 | 99.8 | 99.9 | 99.3 | 99.4 | 99.5 |
| Refrigerating capacity ratio | % (relative to R410A) | 89.9 | 88.1 | 86.3 | 84.3 | 82.4 | 91.3 | 89.5 | 87.6 |
| Condensation glide | °C | 5.5 | 5.9 | 6.3 | 6.7 | 7.2 | 5.2 | 5.6 | 6.0 |

| Item | Unit | Ex. 249 | Ex. 250 | Ex. 251 | Ex. 252 | Ex. 253 | Ex. 254 | Ex. 255 | Ex. 256 |
|---|---|---|---|---|---|---|---|---|---|
| HFO-1132 (E) | mass% | 30.0 | 30.0 | 32.5 | 32.5 | 32.5 | 32.5 | 35.0 | 35.0 |

(continued)

| Item | Unit | Ex. 249 | Ex. 250 | Ex. 251 | Ex. 252 | Ex. 253 | Ex. 254 | Ex. 255 | Ex. 256 |
|---|---|---|---|---|---|---|---|---|---|
| R32 | mass% | 15.0 | 12.5 | 20.0 | 17.5 | 15.0 | 12.5 | 15.0 | 12.5 |
| R1234yf | mass% | 52.5 | 55.0 | 45.0 | 47.5 | 50.0 | 52.5 | 47.5 | 50.0 |
| $CO_2$ | mass% | 2.5 | 2.5 | 2.5 | 2.5 | 2.5 | 2.5 | 2.5 | 2.5 |
| GWP | - | 104 | 87 | 137 | 120 | 104 | 87 | 104 | 87 |
| COP ratio | % (relative to R410A) | 99.7 | 99.9 | 99.3 | 99.4 | 99.5 | 99.7 | 99.3 | 99.5 |
| Refrigerating capacity ratio | % (relative to R410A) | 83.8 | 81.8 | 88.9 | 87.1 | 85.1 | 83.1 | 86.5 | 84.5 |
| Condensation glide | °C | 6.8 | 7.3 | 5.7 | 6.1 | 6.5 | 7.0 | 6.2 | 6.6 |

| Item | Unit | Ex. 257 | Ex. 258 | Ex. 259 | Ex. 260 | Ex. 261 | Ex. 262 | Ex. 263 | Ex. 264 |
|---|---|---|---|---|---|---|---|---|---|
| HFO-1132(E) | mass% | 35.0 | 37.5 | 37.5 | 37.5 | 40.0 | 40.0 | 42.5 | 42.5 |
| R32 | mass% | 10.0 | 12.5 | 10.0 | 7.5 | 10.0 | 5.0 | 7.5 | 5.0 |
| R1234yf | mass% | 52.5 | 47.5 | 50.0 | 52.5 | 47.5 | 52.5 | 47.5 | 50.0 |
| $CO_2$ | mass% | 2.5 | 2.5 | 2.5 | 2.5 | 2.5 | 2.5 | 2.5 | 2.5 |
| GWP | - | 70 | 87 | 70 | 53 | 70 | 36 | 53 | 36 |
| COP ratio | % (relative to R410A) | 99.6 | 99.3 | 99.4 | 99.6 | 99.3 | 99.6 | 99.3 | 99.4 |
| Refrigerating capacity ratio | % (relative to R410A) | 82.5 | 85.8 | 83.8 | 81.8 | 85.2 | 81.0 | 84.5 | 82.4 |
| Condensation glide | °C | 7.1 | 6.3 | 6.7 | 7.1 | 6.4 | 7.2 | 6.5 | 6.9 |

| Item | Unit | Ex. 265 | Ex. 266 | Ex. 267 | Ex. 268 | Ex. 269 | Ex. 270 | Ex. 271 |
|---|---|---|---|---|---|---|---|---|
| HFO-1132(E) | mass% | 45.0 | 45.0 | 47.5 | 47.5 | 50.0 | 52.5 | 55.0 |
| R32 | mass% | 5.0 | 2.5 | 4.0 | 1.5 | 2.5 | 1.5 | 1.0 |
| R1234yf | mass% | 47.5 | 50.0 | 46.0 | 48.5 | 45.0 | 43.5 | 41.5 |
| $CO_2$ | mass% | 2.5 | 2.5 | 2.5 | 2.5 | 2.5 | 2.5 | 2.5 |
| GWP | - | 36 | 19 | 29 | 13 | 19 | 12 | 9 |
| COP ratio | % (relative to R410A) | 99.3 | 99.4 | 99.2 | 99.3 | 99.1 | 99.1 | 99.0 |
| Refrigerating capacity ratio | % (relative to R410A) | 83.7 | 81.6 | 84.2 | 82.0 | 84.2 | 84.7 | 85.6 |
| Condensation glide | °C | 6.6 | 6.9 | 6.4 | 6.7 | 6.3 | 6.2 | 5.9 |

Table 17

| Item | Unit | Comp. Ex. 146 | Comp. Ex. 147 | Comp. Ex. 148 | Ex. 272 | Ex. 273 | Ex. 274 | Comp. Ex. 149 | Comp. Ex. 150 |
|---|---|---|---|---|---|---|---|---|---|
| HFO-1132(E) | mass% | 10.0 | 10.0 | 10.0 | 10.0 | 10.0 | 10.0 | 10.0 | 10.0 |
| R32 | mass% | 76.0 | 66.0 | 56.0 | 46.0 | 36.0 | 26.0 | 16.0 | 6.0 |
| R1234yf | mass% | 10.0 | 20.0 | 30.0 | 40.0 | 50.0 | 60.0 | 70.0 | 80.0 |
| $CO_2$ | mass% | 4.0 | 4.0 | 4.0 | 4.0 | 4.0 | 4.0 | 4.0 | 4.0 |
| GWP | - | 514 | 446 | 379 | 312 | 245 | 178 | 111 | 44 |
| COP ratio | % (relative to R410A) | 100.3 | 100.2 | 100.1 | 100.0 | 100.0 | 100.4 | 101.2 | 102.0 |
| Refrigerating capacity ratio | % (relative to R410A) | 113.0 | 108.6 | 103.5 | 97.8 | 91.3 | 84.1 | 76.1 | 66.8 |
| Condensation glide | °C | 2.5 | 3.1 | 3.9 | 5.0 | 6.4 | 8.3 | 10.4 | 12.2 |

| Item | Unit | Comp. Ex. 146 | Comp. Ex. 147 | Ex. 275 | Ex. 276 | Ex. 277 | Ex. 278 | Comp. Ex. 153 | Comp. Ex. 154 |
|---|---|---|---|---|---|---|---|---|---|
| HFO-1132 (E) | mass% | 20.0 | 20.0 | 20.0 | 20.0 | 20.0 | 20.0 | 20.0 | 30.0 |
| R32 | mass% | 66.0 | 56.0 | 46.0 | 36.0 | 26.0 | 16.0 | 6.0 | 56.0 |
| R1234yf | mass% | 10.0 | 20.0 | 30.0 | 40.0 | 50.0 | 60.0 | 70.0 | 10.0 |
| $CO_2$ | mass% | 4.0 | 4.0 | 4.0 | 4.0 | 4.0 | 4.0 | 4.0 | 4.0 |
| GWP | - | 446 | 379 | 312 | 245 | 178 | 111 | 44 | 379 |
| COP ratio | % (relative to R410A) | 99.6 | 99.5 | 99.3 | 99.2 | 99.4 | 100.0 | 100.9 | 98.9 |
| Refrigerating capacity ratio | % (relative to R410A) | 113.1 | 108.4 | 103.0 | 96.8 | 89.9 | 82.3 | 73.7 | 112.9 |
| Condensation glide | °C | 2.6 | 3.3 | 4.2 | 5.5 | 7.1 | 9.2 | 11.2 | 2.7 |

| Item | Unit | Ex. 279 | Ex. 280 | Ex. 281 | Ex. 282 | Comp. Ex. 155 | Comp. Ex. 156 | Comp. Ex. 157 | Ex. 283 |
|---|---|---|---|---|---|---|---|---|---|
| HFO-1132(E) | mass% | 30.0 | 30.0 | 30.0 | 30.0 | 30.0 | 40.0 | 40.0 | 40.0 |
| R32 | mass% | 46.0 | 36.0 | 26.0 | 16.0 | 6.0 | 46.0 | 36.0 | 26.0 |
| R1234yf | mass% | 20.0 | 30.0 | 40.0 | 50.0 | 60.0 | 10.0 | 20.0 | 30.0 |
| $CO_2$ | mass% | 4.0 | 4.0 | 4.0 | 4.0 | 4.0 | 4.0 | 4.0 | 4.0 |
| GWP | - | 312 | 245 | 177 | 110 | 43 | 311 | 244 | 177 |

(continued)

| Item | Unit | Ex. 279 | Ex. 280 | Ex. 281 | Ex. 282 | Comp. Ex. 155 | Comp. Ex. 156 | Comp. Ex. 157 | Ex. 283 |
|---|---|---|---|---|---|---|---|---|---|
| COP ratio | % (relative to R410A) | 98.7 | 98.6 | 98.7 | 99.0 | 99.8 | 98.3 | 98.1 | 98.1 |
| Refrigerating capacity ratio | % (relative to R410A) | 107.7 | 101.9 | 95.4 | 88.0 | 79.9 | 112.1 | 106.6 | 100.4 |
| Condensation glide | °C | 3.5 | 4.6 | 6.0 | 7.8 | 9.8 | 2.8 | 3.8 | 5.0 |

| Item | Unit | Ex. 284 | Ex. 285 | Comp. Ex. 158 | Comp. Ex. 159 | Ex. 286 | Ex. 287 | Comp. Ex. 160 | Comp. Ex. 161 |
|---|---|---|---|---|---|---|---|---|---|
| HFO-1132(E) | mass% | 40.0 | 40.0 | 50.0 | 50.0 | 50.0 | 50.0 | 60.0 | 60.0 |
| R32 | mass% | 16.0 | 6.0 | 36.0 | 26.0 | 16.0 | 6.0 | 26.0 | 16.0 |
| R1234yf | mass% | 40.0 | 50.0 | 10.0 | 20.0 | 30.0 | 40.0 | 10.0 | 20.0 |
| $CO_2$ | mass% | 4.0 | 4.0 | 4.0 | 4.0 | 4.0 | 4.0 | 4.0 | 4.0 |
| GWP | - | 110 | 43 | 244 | 177 | 110 | 43 | 177 | 109 |
| COP ratio | % (relative to R410A) | 98.3 | 98.8 | 97.7 | 97.7 | 97.8 | 98.2 | 97.3 | 97.4 |
| Refrigerating capacity ratio | % (relative to R410A) | 93.4 | 85.6 | 110.9 | 105.0 | 98.4 | 90.9 | 109.3 | 103.0 |
| Condensation glide | °C | 6.6 | 8.4 | 3.1 | 4.1 | 5.5 | 7.1 | 3.4 | 4.6 |

| Item | Unit | Ex. 288 | Comp. Ex. 162 | Comp. Ex. 163 | Comp. Ex. 164 | Ex. 289 | Ex. 290 | Ex. 291 | Ex. 292 |
|---|---|---|---|---|---|---|---|---|---|
| HFO-1132(E) | mass% | 60.0 | 70.0 | 70.0 | 80.0 | 15.0 | 15.0 | 15.0 | 15.0 |
| R32 | mass% | 6.0 | 16.0 | 6.0 | 6.0 | 48.5 | 46.0 | 43.5 | 41.0 |
| R1234yf | mass% | 30.0 | 10.0 | 20.0 | 10.0 | 32.5 | 35.0 | 37.5 | 40.0 |
| $CO_2$ | mass% | 4.0 | 4.0 | 4.0 | 4.0 | 4.0 | 4.0 | 4.0 | 4.0 |
| GWP | - | 42 | 109 | 42 | 42 | 329 | 312 | 295 | 279 |
| COP ratio | % (relative to R410A) | 97.7 | 97.2 | 97.4 | 97.2 | 99.7 | 99.6 | 99.6 | 99.6 |
| Refrigerating capacity ratio | % (relative to R410A) | 95.9 | 107.3 | 100.5 | 104.9 | 101.9 | 100.4 | 98.9 | 97.4 |
| Condensation glide | °C | 6.0 | 3.8 | 5.1 | 4.3 | 4.3 | 4.6 | 4.9 | 5.2 |

| Item | Unit | Ex. 293 | Ex. 294 | Ex. 295 | Ex. 296 | Ex. 297 | Ex. 298 | Ex. 299 | Ex. 300 |
|---|---|---|---|---|---|---|---|---|---|
| HFO-1132(E) | mass% | 15.0 | 15.0 | 15.0 | 15.0 | 15.0 | 15.0 | 15.0 | 15.0 |
| R32 | mass% | 38.5 | 36.0 | 33.5 | 31.0 | 28.5 | 26.0 | 23.5 | 21.0 |
| R1234yf | mass% | 42.5 | 45.0 | 47.5 | 50.0 | 52.5 | 55.0 | 57.5 | 60.0 |
| $CO_2$ | mass% | 4.0 | 4.0 | 4.0 | 4.0 | 4.0 | 4.0 | 4.0 | 4.0 |
| GWP | - | 262 | 245 | 228 | 211 | 195 | 178 | 161 | 144 |
| COP ratio | % (relative to R410A) | 99.6 | 99.6 | 99.6 | 99.7 | 99.8 | 99.9 | 100.0 | 100.2 |
| Refrigerating capacity ratio | % (relative to R410A) | 95.8 | 94.1 | 92.4 | 90.7 | 88.9 | 87.1 | 85.2 | 83.3 |
| Condensation glide | °C | 5.6 | 5.9 | 6.3 | 6.8 | 7.2 | 7.7 | 8.2 | 8.7 |

Table 18

| Item | Unit | Ex. 301 | Ex. 302 | Ex. 303 | Ex. 304 | Ex. 305 | Ex. 306 | Ex. 307 | Ex. 308 |
|---|---|---|---|---|---|---|---|---|---|
| HFO-1132(E) | mass% | 15.0 | 17.5 | 17.5 | 17.5 | 17.5 | 17.5 | 17.5 | 17.5 |
| R32 | mass% | 18.5 | 48.5 | 46.0 | 43.5 | 41.0 | 38.5 | 36.0 | 33.5 |
| R1234yf | mass% | 62.5 | 30.0 | 32.5 | 35.0 | 37.5 | 40.0 | 42.5 | 45.0 |
| $CO_2$ | mass% | 4.0 | 4.0 | 4.0 | 4.0 | 4.0 | 4.0 | 4.0 | 4.0 |
| GWP | - | 128 | 329 | 312 | 295 | 278 | 262 | 245 | 228 |
| COP ratio | % (relative to R410A) | 100.4 | 99.5 | 99.5 | 99.4 | 99.4 | 99.4 | 99.4 | 99.4 |
| Refrigerating capacity ratio | % (relative to R410A) | 81.3 | 103.1 | 101.7 | 100.2 | 98.7 | 97.1 | 95.5 | 93.8 |
| Condensation glide | °C | 9.3 | 4.1 | 4.4 | 4.7 | 5.0 | 5.3 | 5.7 | 6.1 |

| Item | Unit | Ex. 309 | Ex. 310 | Ex. 311 | Ex. 312 | Ex. 313 | Ex.314 | Ex.315 | Ex.316 |
|---|---|---|---|---|---|---|---|---|---|
| HFO-1132(E) | mass% | 17.5 | 17.5 | 17.5 | 17.5 | 17.5 | 17.5 | 20.0 | 20.0 |
| R32 | mass% | 31.0 | 28.5 | 26.0 | 23.5 | 21.0 | 18.5 | 48.5 | 43.5 |
| R1234yf | mass% | 47.5 | 50.0 | 52.5 | 55.0 | 57.5 | 60.0 | 27.5 | 32.5 |
| $CO_2$ | mass% | 4.0 | 4.0 | 4.0 | 4.0 | 4.0 | 4.0 | 4.0 | 4.0 |
| GWP | - | 211 | 195 | 178 | 161 | 144 | 127 | 329 | 295 |
| COP ratio | % (relative to R410A) | 99.5 | 99.5 | 99.6 | 99.8 | 99.9 | 100.1 | 99.3 | 99.3 |
| Refrigerating capacity ratio | % (relative to R410A) | 92.1 | 90.3 | 88.5 | 86.7 | 84.8 | 82.8 | 104.4 | 101.5 |
| Condensation glide | °C | 6.5 | 7.0 | 7.4 | 7.9 | 8.4 | 9.0 | 4.0 | 4.5 |

| Item | Unit | Ex.317 | Ex. 318 | Ex. 319 | Ex. 320 | Ex. 321 | Ex. 322 | Ex. 323 | Ex. 324 |
|---|---|---|---|---|---|---|---|---|---|
| HFO-1132(E) | mass% | 20.0 | 20.0 | 20.0 | 20.0 | 20.0 | 20.0 | 20.0 | 20.0 |
| R32 | mass% | 41.0 | 38.5 | 33.5 | 31.0 | 28.5 | 23.5 | 21.0 | 18.5 |
| R1234yf | mass% | 35.0 | 37.5 | 42.5 | 45.0 | 47.5 | 52.5 | 55.0 | 57.5 |
| $CO_2$ | mass% | 4.0 | 4.0 | 4.0 | 4.0 | 4.0 | 4.0 | 4.0 | 4.0 |
| GWP | - | 278 | 262 | 228 | 211 | 195 | 161 | 144 | 127 |
| COP ratio | % (relative to R410A) | 99.3 | 99.2 | 99.3 | 99.3 | 99.3 | 99.5 | 99.6 | 99.8 |
| Refrigerating capacity ratio | % (relative to R410A) | 100.0 | 98.4 | 95.2 | 93.5 | 91.7 | 88.1 | 86.2 | 84.3 |
| Condensation glide | °C | 4.8 | 5.1 | 5.8 | 6.2 | 6.7 | 7.6 | 8.1 | 8.6 |

| Item | Unit | Ex.325 | Ex.326 | Ex.327 | Ex.328 | Ex. 329 | Ex. 330 | Ex. 331 | Ex. 332 |
|---|---|---|---|---|---|---|---|---|---|
| HFO-1132(E) | mass% | 22.5 | 22.5 | 22.5 | 22.5 | 22.5 | 22.5 | 22.5 | 22.5 |
| R32 | mass% | 48.5 | 46.0 | 43.5 | 41.0 | 38.5 | 36.0 | 33.5 | 31.0 |
| R1234yf | mass% | 25.0 | 27.5 | 30.0 | 32.5 | 35.0 | 37.5 | 40.0 | 42.5 |
| $CO_2$ | mass% | 4.0 | 4.0 | 4.0 | 4.0 | 4.0 | 4.0 | 4.0 | 4.0 |
| GWP | - | 329 | 312 | 295 | 278 | 262 | 245 | 228 | 211 |
| COP ratio | % (relative to R410A) | 99.2 | 99.2 | 99.1 | 99.1 | 99.1 | 99.1 | 99.1 | 99.1 |
| Refrigerating capacity ratio | % (relative to R410A) | 105.6 | 104.2 | 102.7 | 101.3 | 99.7 | 98.1 | 96.5 | 94.8 |
| Condensation glide | °C | 3.8 | 4.0 | 4.3 | 4.6 | 4.9 | 5.2 | 5.6 | 6.0 |

| Item | Unit | Ex. 333 | Ex. 334 | Ex. 335 | Ex. 336 | Ex. 337 | Ex. 338 | Ex. 339 | Ex.340 |
|---|---|---|---|---|---|---|---|---|---|
| HFO-1132(E) | mass% | 22.5 | 22.5 | 22.5 | 22.5 | 22.5 | 22.5 | 22.5 | 25.0 |
| R32 | mass% | 28.5 | 26.0 | 23.5 | 21.0 | 18.5 | 16.0 | 13.5 | 43.5 |
| R1234yf | mass% | 45.0 | 47.5 | 50.0 | 52.5 | 55.0 | 57.5 | 60.0 | 27.5 |
| $CO_2$ | mass% | 4.0 | 4.0 | 4.0 | 4.0 | 4.0 | 4.0 | 4.0 | 4.0 |
| GWP | - | 194 | 178 | 161 | 144 | 127 | 111 | 94 | 295 |
| COP ratio | % (relative to R410A) | 99.1 | 99.2 | 99.3 | 99.4 | 99.5 | 99.7 | 99.9 | 99.0 |
| Refrigerating capacity ratio | % (relative to R410A) | 93.1 | 91.3 | 89.5 | 87.7 | 85.8 | 83.8 | 81.8 | 104.0 |
| Condensation glide | °C | 6.4 | 6.8 | 7.3 | 7.8 | 8.3 | 8.8 | 9.3 | 4.1 |

| Item | Unit | Ex.341 | Ex.342 | Ex. 343 | Ex. 344 | Ex. 345 | Ex. 346 | Ex. 347 | Ex. 348 |
|------|------|--------|--------|---------|---------|---------|---------|---------|---------|
| HFO-1132(E) | mass% | 25.0 | 25.0 | 25.0 | 25.0 | 25.0 | 25.0 | 25.0 | 25.0 |
| R32 | mass% | 41.0 | 38.5 | 36.0 | 33.5 | 31.0 | 28.5 | 26.0 | 23.5 |
| R1234yf | mass% | 30.0 | 32.5 | 35.0 | 37.5 | 40.0 | 42.5 | 45.0 | 47.5 |
| $CO_2$ | mass% | 4.0 | 4.0 | 4.0 | 4.0 | 4.0 | 4.0 | 4.0 | 4.0 |
| GWP | - | 278 | 261 | 245 | 228 | 211 | 194 | 178 | 161 |
| COP ratio | % (relative to R410A) | 98.9 | 98.9 | 98.9 | 98.9 | 98.9 | 99.0 | 99.0 | 99.1 |
| Refrigerating capacity ratio | % (relative to R410A) | 102.5 | 101.0 | 99.4 | 97.8 | 96.1 | 94.4 | 92.7 | 90.9 |
| Condensation glide | °C | 4.4 | 4.7 | 5.0 | 5.4 | 5.7 | 6.1 | 6.5 | 7.0 |

Table 19

| Item | Unit | Ex. 349 | Ex. 350 | Ex. 351 | Ex. 352 | Ex. 353 | Ex. 354 | Ex. 355 | Ex. 356 |
|------|------|---------|---------|---------|---------|---------|---------|---------|---------|
| HFO-1132(E) | mass% | 25.0 | 25.0 | 25.0 | 25.0 | 27.5 | 27.5 | 27.5 | 27.5 |
| R32 | mass% | 21.0 | 18.5 | 16.0 | 13.5 | 35.0 | 31.0 | 28.5 | 26.0 |
| R1234yf | mass% | 50.0 | 52.5 | 55.0 | 57.5 | 35.0 | 37.5 | 40.0 | 42.5 |
| $CO_2$ | mass% | 4.0 | 4.0 | 4.0 | 4.0 | 4.0 | 4.0 | 4.0 | 4.0 |
| GWP | - | 144 | 127 | 110 | 94 | 238 | 211 | 194 | 178 |
| COP ratio | % (relative to R410A) | 99.2 | 99.3 | 99.5 | 99.7 | 98.8 | 98.8 | 98.8 | 98.8 |
| Refrigerating capacity ratio | % (relative to R410A) | 89.1 | 87.2 | 85.2 | 83.2 | 99.4 | 97.4 | 95.8 | 94.0 |
| Condensation glide | °C | 7.5 | 8.0 | 8.5 | 9.0 | 5.0 | 5.5 | 5.9 | 6.3 |

| Item | Unit | Ex. 357 | Ex. 358 | Ex. 359 | Ex. 360 | Ex. 361 | Ex. 362 | Ex. 363 | Ex. 364 |
|------|------|---------|---------|---------|---------|---------|---------|---------|---------|
| HFO-1132 (E) | mass% | 27.5 | 27.5 | 27.5 | 27.5 | 27.5 | 27.5 | 30.0 | 30.0 |
| R32 | mass% | 23.5 | 21.0 | 18.5 | 16.0 | 13.5 | 11.0 | 23.5 | 21.0 |
| R1234yf | mass% | 45.0 | 47.5 | 50.0 | 52.5 | 55.0 | 57.5 | 42.5 | 45.0 |
| $CO_2$ | mass% | 4.0 | 4.0 | 4.0 | 4.0 | 4.0 | 4.0 | 4.0 | 4.0 |
| GWP | - | 161 | 144 | 127 | 110 | 94 | 77 | 161 | 144 |
| COP ratio | % (relative to R410A) | 98.9 | 99.0 | 99.1 | 99.2 | 99.4 | 99.6 | 98.7 | 98.8 |
| Refrigerating capacity ratio | % (relative to R410A) | 92.3 | 90.4 | 88.6 | 86.7 | 84.7 | 82.6 | 93.6 | 91.8 |

(continued)

| Item | Unit | Ex. 357 | Ex. 358 | Ex. 359 | Ex. 360 | Ex. 361 | Ex. 362 | Ex. 363 | Ex. 364 |
|---|---|---|---|---|---|---|---|---|---|
| Condensation glide | °C | 6.7 | 7.2 | 7.6 | 8.1 | 8.7 | 9.2 | 6.4 | 6.9 |

| Item | Unit | Ex. 365 | Ex. 366 | Ex. 367 | Ex. 368 | Ex. 369 | Ex. 400 | Ex. 401 | Ex. 402 |
|---|---|---|---|---|---|---|---|---|---|
| HFO-1132 (E) | mass% | 30.0 | 30.0 | 30.0 | 30.0 | 32.5 | 32.5 | 32.5 | 32.5 |
| R32 | mass% | 18.5 | 13.5 | 11.0 | 8.5 | 21.0 | 18.5 | 16.0 | 35.0 |
| R1234yf | mass% | 47.5 | 52.5 | 55.0 | 57.5 | 42.5 | 45.0 | 47.5 | 50.0 |
| $CO_2$ | mass% | 4.0 | 4.0 | 4.0 | 4.0 | 4.0 | 4.0 | 4.0 | 4.0 |
| GWP | - | 127 | 94 | 77 | 60 | 144 | 127 | 110 | 239 |
| COP ratio | % (relative to R410A) | 98.9 | 99.2 | 99.3 | 99.5 | 98.6 | 98.7 | 98.8 | 99.1 |
| Refrigerating capacity ratio | % (relative to R410A) | 89.9 | 86.1 | 84.1 | 82.0 | 93.1 | 91.3 | 89.4 | 94.0 |
| Condensation glide | °C | 7.3 | 8.3 | 8.8 | 9.3 | 6.6 | 7.0 | 7.5 | 5.5 |

| Item | Unit | Ex. 403 | Ex. 404 | Ex. 405 | Ex. 406 | Ex. 407 | Ex. 408 | Ex. 409 | Ex. 410 |
|---|---|---|---|---|---|---|---|---|---|
| HFO-1132(E) | mass% | 32.5 | 32.5 | 32.5 | 35.0 | 35.0 | 35.0 | 35.0 | 35.0 |
| R32 | mass% | 11.0 | 8.5 | 6.0 | 16.0 | 13.5 | 11.0 | 8.5 | 6.0 |
| R1234yf | mass% | 52.5 | 55.0 | 57.5 | 45.0 | 47.5 | 50.0 | 52.5 | 55.0 |
| $CO_2$ | mass% | 4.0 | 4.0 | 4.0 | 4.0 | 4.0 | 4.0 | 4.0 | 4.0 |
| GWP | - | 77 | 60 | 43 | 110 | 93 | 77 | 60 | 43 |
| COP ratio | % (relative to R410A) | 99.1 | 99.3 | 99.5 | 98.6 | 98.7 | 98.9 | 99.1 | 99.3 |
| Refrigerating capacity ratio | % (relative to R410A) | 85.5 | 83.4 | 81.3 | 90.8 | 88.8 | 86.9 | 84.8 | 82.8 |
| Condensation glide | °C | 8.5 | 9.0 | 9.5 | 7.2 | 7.6 | 8.1 | 8.6 | 9.1 |

| Item | Unit | Ex. 411 | Ex. 412 | Ex. 413 | Ex. 414 | Ex. 415 | Ex. 416 | Ex. 417 | Ex. 418 |
|---|---|---|---|---|---|---|---|---|---|
| HFO-1132(E) | mass% | 37.5 | 37.5 | 37.5 | 37.5 | 37.5 | 40.0 | 40.0 | 40.0 |
| R32 | mass% | 13.5 | 11.0 | 8.5 | 6.0 | 3.5 | 11.0 | 8.5 | 3.5 |
| R1234yf | mass% | 45.0 | 47.5 | 50.0 | 52.5 | 55.0 | 45.0 | 47.5 | 52.5 |
| $CO_2$ | mass% | 4.0 | 4.0 | 4.0 | 4.0 | 4.0 | 4.0 | 4.0 | 4.0 |
| GWP | - | 93 | 77 | 60 | 43 | 26 | 76 | 60 | 26 |

(continued)

| Item | Unit | Ex. 411 | Ex. 412 | Ex. 413 | Ex. 414 | Ex. 415 | Ex. 416 | Ex. 417 | Ex. 418 |
|---|---|---|---|---|---|---|---|---|---|
| COP ratio | % (relative to R410A) | 98.6 | 98.7 | 98.9 | 99.0 | 99.2 | 98.5 | 98.7 | 99.0 |
| Refrigerating capacity ratio | % (relative to R410A) | 90.2 | 88.2 | 86.2 | 84.2 | 82.0 | 89.6 | 87.6 | 83.4 |
| Condensation glide | °C | 7.3 | 7.8 | 8.3 | 8.8 | 9.2 | 7.5 | 7.9 | 8.9 |

| Item | Unit | Ex. 419 | Ex. 420 | Ex. 421 | Ex. 422 | Ex. 423 | Ex. 424 | Ex. 425 | Ex. 426 |
|---|---|---|---|---|---|---|---|---|---|
| HFO-1132(E) | mass% | 40.0 | 42.5 | 42.5 | 42.5 | 42.5 | 45.0 | 45.0 | 45.0 |
| R32 | mass% | 1.0 | 8.5 | 35.0 | 3.5 | 1.0 | 6.0 | 3.5 | 1.0 |
| R1234yf | mass% | 55.0 | 45.0 | 47.5 | 50.0 | 52.5 | 45.0 | 47.5 | 50.0 |
| $CO_2$ | mass% | 4.0 | 4.0 | 4.0 | 4.0 | 4.0 | 4.0 | 4.0 | 4.0 |
| GWP | - | 9 | 60 | 239 | 26 | 9 | 43 | 26 | 9 |
| COP ratio | % (relative to R410A) | 99.2 | 98.5 | 98.8 | 98.8 | 99.0 | 98.5 | 98.6 | 98.8 |
| Refrigerating capacity ratio | % (relative to R410A) | 81.2 | 88.9 | 95.6 | 84.8 | 82.6 | 88.3 | 86.2 | 84.0 |
| Condensation glide | °C | 9.3 | 7.6 | 5.0 | 8.5 | 9.0 | 7.8 | 8.2 | 8.7 |

Table 20

| Item | Unit | Ex.427 | Ex.428 | Ex.429 | Ex.430 | Ex.431 | Ex.432 |
|---|---|---|---|---|---|---|---|
| HFO-1132 (E) | mass% | 47.5 | 47.5 | 50.0 | 50.0 | 52.5 | 55.0 |
| R32 | mass% | 4.5 | 2.0 | 3.5 | 1.0 | 2.0 | 1.0 |
| R1234yf | mass% | 44.0 | 46.5 | 42.5 | 45.0 | 41.5 | 40.0 |
| $CO_2$ | mass% | 4.0 | 4.0 | 4.0 | 4.0 | 4.0 | 4.0 |
| GWP | - | 33 | 16 | 26 | 9 | 16 | 9 |
| COP ratio | % (relative to R410A) | 98.4 | 98.6 | 98.3 | 98.5 | 98.3 | 98.2 |
| Refrigerating capacity ratio | % (relative to R410A) | 88.4 | 86.3 | 88.9 | 86.8 | 88.9 | 89.4 |
| Condensation glide | °C | 7.7 | 8.1 | 7.6 | 8.0 | 7.5 | 7.4 |

The results indicate that when the mass% of $CO_2$, R32, HFO-1132(E), and R1234yf based on their sum is respectively represented by w, x, y, and z, in the ternary composition diagrams of Figs. 2 to 9 in which the sum of R32, HFO-1132(E), and R1234yf is (100-w) mass%, when coordinates (x, y, z) are on the straight line A"B", the GWP of the mixed refrigerant is 350, and when the coordinates are on the right side of the straight line, the GWP of the mixed refrigerant is less than 350. The results also indicate that in the ternary composition diagrams of Figs. 2 to 9, when coordinates (x, y, z) are on the straight line A'B', the GWP of the mixed refrigerant is 250, and when the coordinates are on the right side of the straight line, the GWP of the mixed refrigerant is less than 250. The results further indicate that in the ternary composition diagrams of Figs. 2 to 9, when coordinates (x, y, z) are on the straight line AB, the GWP of the mixed refrigerant is 125, and when the coordinates are on the right side of the straight line, the GWP of the mixed refrigerant is less than 125.

It is found that the straight line connecting points D and C is positioned at the slightly left side of the curve connecting points at which the refrigerating capacity ratio relative to R410A is 80%. Accordingly, it is indicated that when the coordinates (x, y, z) are on the left side of the straight line connecting points D and C, the refrigerating capacity of the mixed refrigerant is 80% or more relative to R410A.

Coordinates of points A and B, A' and B', and A" and B" were determined by obtaining the approximate expression based on each of the points shown in the tables. Specifically, calculation was performed according to Table 11 (points A and B), Table 12 (points A' and B'), and Table 13 (points A" and B").

Table 21

| Point A | | | | | | | | | |
|---|---|---|---|---|---|---|---|---|---|
| Item | $1.2 \geq CO_2 > O$ | | | $4.0 \geq CO_2 \geq 1.2$ | | | $7.0 \geq CO_2 \geq 4.0$ | | |
| $CO_2$ | 0.0 | 0.6 | 1.2 | 1.2 | 2.5 | 4.0 | 4.0 | 5.5 | 7.0 |
| E-HFO-1132 | 81.6 | 81.0 | 80.4 | 80.4 | 79.1 | 77.6 | 77.6 | 76.1 | 74.6 |
| R32 | 18.4 | 18.4 | 18.4 | 18.4 | 18.4 | 18.4 | 18.4 | 18.4 | 18.4 |
| R1234yf | 0.0 | 0.0 | 0.0 | 0.0 | 0.0 | 0.0 | 0.0 | 0.0 | 0.0 |
| $CO_2$ | w | | | w | | | w | | |
| HFO-1132 (E) approximate expression | -w+81.6 | | | -w+81.6 | | | -w+81.6 | | |
| R32 approximate expression | 18.4 | | | 18.4 | | | 18.4 | | |
| R1234yf approximate expression | 0.0 | | | 0.0 | | | 0.0 | | |

Point B

| Item | $1.2 \geq CO_2 > O$ | | | $4.0 \geq CO_2 \geq 1.2$ | | | $7.0 \geq CO_2 \geq 4.0$ | | |
|---|---|---|---|---|---|---|---|---|---|
| $CO_2$ | 0.0 | 0.6 | 1.2 | 1.2 | 2.5 | 4.0 | 4.0 | 5.5 | 7.0 |
| E-HFO-1132 | 0.0 | 0.0 | 0.0 | 0.0 | 0.0 | 0.0 | 0.0 | 0.0 | 0.0 |
| R32 | 18.1 | 18.1 | 18.1 | 18.1 | 18.1 | 18.1 | 18.1 | 18.1 | 18.1 |
| R1234yf | 81.9 | 81.3 | 80.7 | 80.7 | 79.4 | 77.9 | 77.9 | 76.4 | 74.9 |
| $CO_2$ | w | | | w | | | w | | |
| HFO-1132 (E) approximate expression | 0.0 | | | 0.0 | | | 0.0 | | |
| R32 approximate expression | 18.1 | | | 18.1 | | | 18.1 | | |
| R1234yf approximate expression | -w+81.9 | | | -w+81.9 | | | -w+81.9 | | |

Table 22

| Point A' | | | | | | | | | |
|---|---|---|---|---|---|---|---|---|---|
| Item | $1.2 \geq CO_2 > O$ | | | $4.0 \geq CO_2 \geq 1.2$ | | | $7.0 \geq CO_2 \geq 4.0$ | | |
| $CO_2$ | 0.0 | 0.6 | 1.2 | 1.2 | 2.5 | 4.0 | 4.0 | 5.5 | 7.0 |
| E-HFO-1132 | 63.1 | 62.5 | 61.9 | 61.9 | 60.6 | 59.1 | 59.1 | 57.6 | 56.1 |
| R32 | 36.9 | 36.9 | 36.9 | 36.9 | 36.9 | 36.9 | 36.9 | 36.9 | 36.9 |
| R1234yf | 0.0 | 0.0 | 0.0 | 0.0 | 0.0 | 0.0 | 0.0 | 0.0 | 0.0 |

(continued)

| Point A' | | | |
|---|---|---|---|
| Item | $1.2 \geq CO_2 > O$ | $4.0 \geq CO_2 \geq 1.2$ | $7.0 \geq CO_2 \geq 4.0$ |
| $CO_2$ | w | w | w |
| HFO-1132 (E) approximate expression | -w+63.1 | -w+63.1 | -w+63.1 |
| R32 approximate expression | 36.9 | 36.9 | 36.9 |
| R1234yf approximate expression | 0.0 | 0.0 | 0.0 |

Point B'

| Item | $1.2 \geq CO_2 > O$ | | | $4.0 \geq CO_2 \geq 1.2$ | | | $7.0 \geq CO_2 \geq 4.0$ | | |
|---|---|---|---|---|---|---|---|---|---|
| $CO_2$ | 0.0 | 0.6 | 1.2 | 1.2 | 2.5 | 4.0 | 4.0 | 5.5 | 7.0 |
| E-HFO-1132 | 0.0 | 0.0 | 0.0 | 0.0 | 0.0 | 0.0 | 0.0 | 0.0 | 0.0 |
| R32 | 36.7 | 36.7 | 36.6 | 36.6 | 36.6 | 36.6 | 36.6 | 36.6 | 36.6 |
| R1234yf | 63.3 | 62.7 | 62.2 | 62.2 | 60.9 | 59.4 | 59.4 | 57.9 | 56.4 |
| $CO_2$ | w | | | w | | | w | | |
| HFO-1132(E) approximate expression | 0 | | | 0.0 | | | 0.0 | | |
| R32 approximate expression | -0.0833w+36.717 | | | 36.6 | | | 36.6 | | |
| R1234yf approximate expression | -0.9167w+63.283 | | | -w+63.4 | | | -w+63.4 | | |

Table 23

| Point A" | | | |
|---|---|---|---|
| Item | $1.2 \geq CO_2 > O$ | | | $4.0 \geq CO_2 \geq 1.2$ | | | $7.0 \geq CO_2 \geq 4.0$ | | |
| $CO_2$ | 0.0 | 0.6 | 1.2 | 1.2 | 2.5 | 4.0 | 4.0 | 5.5 | 7.0 |
| E-HFO-1132 | 48.2 | 47.6 | 47.0 | 47.0 | 45.7 | 44.2 | 44.2 | 42.7 | 41.2 |
| R32 | 51.8 | 51.8 | 51.8 | 51.8 | 51.8 | 51.8 | 51.8 | 51.8 | 51.8 |
| R1234yf | 0.0 | 0.0 | 0.0 | 0.0 | 0.0 | 0.0 | 0.0 | 0.0 | 0.0 |
| $CO_2$ | w | | | w | | | w | | |
| HFO-1132 (E) approximate expression | -w+48.2 | | | -w+48.2 | | | -w+48.2 | | |
| R32 approximate expression | 51.8 | | | 51.8 | | | 51.8 | | |
| R1234yf approximate expression | 0.0 | | | 0.0 | | | 0.0 | | |

Point B"

| Item | $1.2 \geq CO_2 > O$ | | | $4.0 \geq CO_2 \geq 1.2$ | | | $7.0 \geq CO_2 \geq 4.0$ | | |
|---|---|---|---|---|---|---|---|---|---|
| $CO_2$ | 0.0 | 0.6 | 1.2 | 1.2 | 2.5 | 4.0 | 4.0 | 5.5 | 7.0 |

(continued)

| Item | 1.2≥CO₂>O | | | 4.0≥CO₂≥1.2 | | | 7.0≥CO₂≥4.0 | | |
|---|---|---|---|---|---|---|---|---|---|
| E-HFO-1132 | 0.0 | 0.0 | 0.0 | 0.0 | 0.0 | 0.0 | 0.0 | 0.0 | 0.0 |
| R32 | 51.5 | 51.6 | 51.6 | 51.6 | 51.6 | 51.6 | 51.6 | 51.6 | 51.6 |
| R1234yf | 49.5 | 47.8 | 47.2 | 47.2 | 45.9 | 44.4 | 44.4 | 42.9 | 41.4 |
| CO₂ | w | | | w | | | w | | |
| HFO-1132 (E) approximate expression | 0.0 | | | 0.0 | | | 0.0 | | |
| R32 approximate expression | $-1.5278w^2+2.75w+50.5$ | | | 51.6 | | | 51.6 | | |
| R1234yf approximate expression | $1.5278w^2-3.75w+49.5$ | | | $-w+48.4$ | | | $-w+48.4$ | | |

Coordinates of points C to G were determined by obtaining the approximate expression based on each of the points shown in the above tables. Specifically, calculation was performed as shown in Table 14.

Table 24

| Point C | | | | | | | | | |
|---|---|---|---|---|---|---|---|---|---|
| Item | $1.2 \geq CO_2 > 0$ | | | $4.0 \geq CO_2 \geq 1.2$ | | | $7.0 \geq CO_2 \geq 4.0$ | | |
| $CO_2$ | 0.0 | 0.6 | 1.2 | 1.2 | 2.5 | 4.0 | 4.0 | 5.5 | 7.0 |
| E-HFO-1132 | 58.3 | 55.4 | 52.4 | 52.4 | 46.2 | 39.5 | 39.5 | 33.0 | 26.8 |
| R32 | 0.0 | 0.0 | 0.0 | 0.0 | 0.0 | 0.0 | 0.0 | 0.0 | 0.0 |
| R1234yf | 41.7 | 44.0 | 46.4 | 46.4 | 51.3 | 56.5 | 56.5 | 61.5 | 66.2 |
| $CO_2$ | w | | | w | | | w | | |
| HFO-1132 (E) approximate expression | $-4.9167w+58.317$ | | | $0.1081w^2-5.169w+58.447$ | | | $0.0667w^2-4.9667w+58.3$ | | |
| R32 approximate expression | 0.0 | | | 0.0 | | | 0.0 | | |
| R1234yf approximate expression | $3.9167w+41.683$ | | | $-0.1081w2+4.169w+41.553$ | | | $-0.0667w^2+3.9667w+41.7$ | | |

Point D

| Item | 1.2≥$CO_2$>O | | | 4.0≥$CO_2$≥1.2 | | | 7.0≥$CO_2$≥4.0 | | |
|---|---|---|---|---|---|---|---|---|---|
| $CO_2$ | 0.0 | 0.6 | 1.2 | 1.2 | 2.5 | 4.0 | 4.0 | 5.5 | 7.0 |
| E-HFO-1132 | 0.0 | 0.0 | 0.0 | 0.0 | 0.0 | 0.0 | 0.0 | 0.0 | 0.0 |
| R32 | 40.3 | 38.6 | 36.8 | 36.8 | 33.2 | 28.9 | 28.9 | 24.7 | 20.5 |
| R1234yf | 59.7 | 60.8 | 62.0 | 62.0 | 64.3 | 67.1 | 67.1 | 69.8 | 72.5 |
| $CO_2$ | w | | | w | | | w | | |
| HFO-1132(E) approximate expression | 0.0 | | | 0.0 | | | 0.0 | | |
| R32 approximate expression | -2.9167w+40.317 | | | -2.8226w+40.211 | | | -2.8w+40.1 | | |
| R1234yf approximate expression | 1.9167w+59.683 | | | 1.8226w+59.789 | | | 1.8w+59.9 | | |

Point E

| Item | 1.2≥CO₂>O | | | 4.0≥CO₂≥1.2 | | | 7.0≥CO₂≥4.0 | | |
|---|---|---|---|---|---|---|---|---|---|
| $CO_2$ | 0.0 | 0.6 | 1.2 | 1.2 | 2.5 | 4.0 | 4.0 | 5.5 | 7.0 |
| E-HFO-1132 | 31.9 | 29.6 | 26.5 | 26.5 | 20.9 | 14.7 | 14.7 | 8.8 | 3.1 |
| R32 | 18.2 | 18.2 | 18.2 | 18.2 | 18.2 | 18.1 | 18.1 | 18.1 | 18.1 |
| R1234yf | 49.9 | 51.6 | 54.1 | 54.1 | 58.4 | 63.2 | 63.2 | 67.6 | 71.8 |
| $CO_2$ | w | | | w | | | w | | |
| HFO-1132 (E) approximate expression | $-1.1111w^2-3.1667w+31.9$ | | | $0.0623w^2-4.5381w+31.856$ | | | $0.0444w^2-4.3556w+31.411$ | | |
| R32 approximate expression | 18.2 | | | $-0.0365w+18.26$ | | | 18.1 | | |
| R1234yf approximate expression | $1.1111w^2+2.1667w+49.9$ | | | $-0.0623w^2+3.5746w+49.884$ | | | $-0.0444w^2+3.3556w+50.489$ | | |

Point F

| Item | $1.2 \geq CO_2 > O$ | | | $1.3 \geq CO_2 > 1.2$ | |
|---|---|---|---|---|---|
| $CO_2$ | 0.0 | 0.6 | 1.2 | 1.2 | 1.3 |
| E-HFO-1132 | 5.2 | 2.7 | 0.3 | 0.3 | 0 |
| R32 | 36.7 | 36.7 | 36.6 | 36.6 | 36.6 |
| R1234yf | 58.1 | 60.0 | 61.9 | 61.9 | 62.1 |
| $CO_2$ | w | | | w | |
| HFO-1132(E) approximate expression | $-4.0833w+5.1833$ | | | $-3.0w+3.9$ | |
| R32 approximate expression | $-0.0833w+36.717$ | | | 36.6 | |
| R1234yf approximate expression | $3.1666w+58.0997$ | | | $2.0w+59.5$ | |

Point G

| Item | $1.2 \geq CO_2 > O$ | | |
|---|---|---|---|
| $CO_2$ | 0.0 | 0.6 | 1.2 |
| E-HFO-1132 | 26.2 | 29.6 | 38.1 |
| R32 | 22.2 | 18.2 | 10.0 |
| R1234yf | 51.6 | 51.6 | 50.7 |
| $CO_2$ | w | | |
| HFO-1132(E) approximate expression | $7.0833w^2+1.4167w+26.2$ | | |
| R32 approximate expression | $-5.8333w^2-3.1667w+22.2$ | | |
| R1234yf approximate expression | $-1.25w^2+0.75w+51.6$ | | |

Table 25

| Point M | | | | | | | | | |
|---|---|---|---|---|---|---|---|---|---|
| Item | $1.2 \geq CO_2 > O$ | | | $4.0 \geq CO_2 \geq 1.2$ | | | $7.0 \geq CO_2 \geq 4.0$ | | |
| $CO_2$ | 0.0 | 0.6 | 1.2 | 1.2 | 2.5 | 4.0 | 4.0 | 5.5 | 7.0 |
| E-HFO-1132 | 52.6 | 55.4 | 58.0 | 58.0 | 59.7 | 60.4 | 0.0 | 33.0 | 26.8 |
| R32 | 0.0 | 0.0 | 0.0 | 0.0 | 0.0 | 0.0 | 0.0 | 0.0 | 0.0 |
| R1234yf | 47.4 | 44.0 | 40.8 | 40.8 | 37.8 | 35.6 | 56.5 | 61.5 | 66.2 |
| $CO_2$ | w | | | w | | | w | | |
| HFO-1132 (E) approximate expression | $-0.2778w^2+4.333w+52.6$ | | | $-0.3004w^2+2.419w+55.53$ | | | $-0.0667w^2+0.8333w+58.133$ | | |
| R32 approximate expression | 0.0 | | | 0.0 | | | 0.0 | | |
| R1234yf approximate expression | $0.2778w^2-5.8333w+47.4$ | | | $0.3004w^2-3.419w+44.47$ | | | $0.0667w^2-1.8333w+41.867$ | | |

Point W

| Item | 1.2≥CO₂>O | | | 4.0≥CO₂≥1.2 | | | 7.0≥CO₂≥4.0 | | |
|---|---|---|---|---|---|---|---|---|---|
| $CO_2$ | 0.0 | 0.6 | 1.2 | 1.2 | 2.5 | 4.0 | 4.0 | 5.5 | 7.0 |
| E-HFO-1132 | 32.4 | 35.1 | 38.1 | 38.1 | 40.9 | 42.6 | 42.6 | 43.3 | 43.7 |
| R32 | 10.0 | 10.0 | 10.0 | 10.0 | 10.0 | 10.0 | 10.0 | 10.0 | 10.0 |
| R1234yf | 57.6 | 54.3 | 50.7 | 50.7 | 46.6 | 43.4 | 43.4 | 41.2 | 39.3 |
| $CO_2$ | w | | | w | | | w | | |
| HFO-1132 (E) approximate expression | $0.4167w^2+4.25w+32.4$ | | | $-0.3645w^2+3.5024w+34.422$ | | | $-0.0667w^2+1.1w+39.267$ | | |
| R32 approximate expression | 10.0 | | | 10.0 | | | 10.0 | | |
| R1234yf approximate expression | $-0.4167w^2-5.25w+57.6$ | | | $0.3645w^2-4.5024w+55.578$ | | | $0.0667w^2-2.1w+50.733$ | | |

Point N

| Item | $1.2 \geq CO_2 > O$ | | | $4.0 \geq CO_2 \geq 1.2$ | | | $7.0 \geq CO_2 \geq 4.0$ | | |
|---|---|---|---|---|---|---|---|---|---|
| $CO_2$ | 0.0 | 0.6 | 1.2 | 1.2 | 2.5 | 4.0 | 4.0 | 5.5 | 7.0 |
| E-HFO-1132 | 27.7 | 29.6 | 31.7 | 31.7 | 34.2 | 35.5 | 35.5 | 36.3 | 36.7 |
| R32 | 18.2 | 18.2 | 18.2 | 18.2 | 18.2 | 18.2 | 18.2 | 18.2 | 18.2 |
| R1234yf | 54.1 | 51.6 | 48.9 | 48.9 | 45.1 | 42.3 | 42.3 | 40.0 | 38.1 |
| $CO_2$ | w | | | w | | | w | | |
| HFO-1132 (E) approximate expression | $0.2778w^2+3.0w+27.7$ | | | $-0.3773w^2+3.319w+28.26$ | | | $-0.0889w^2+1.3778w+31.411$ | | |
| R32 approximate expression | 18.2 | | | 18.2 | | | 18.2 | | |
| R1234yf approximate expression | $-0.2778w^2-4.0w+54.1$ | | | $0.3773w^2-4.319w+53.54$ | | | $0.0889w^2-2.3778w+50.389$ | | |

Point O

Point O

| Item | $1.2 \geq CO_2 > O$ | | | $4.0 \geq CO_2 \geq 1.2$ | | | $7.0 \geq CO_2 \geq 4.0$ | | |
|---|---|---|---|---|---|---|---|---|---|
| $CO_2$ | 0.0 | 0.6 | 1.2 | 1.2 | 2.5 | 4.0 | 4.0 | 5.5 | 7.0 |
| E-HFO-1132 | 22.6 | 24.0 | 25.4 | 25.4 | 27.2 | 28.0 | 28.0 | 28.4 | 28.6 |
| R32 | 36.8 | 36.8 | 36.8 | 36.8 | 36.8 | 36.8 | 36.8 | 36.8 | 36.8 |
| R1234yf | 40.6 | 38.6 | 36.0 | 36.0 | 33.5 | 31.2 | 31.2 | 29.3 | 27.6 |
| $CO_2$ | w | | | w | | | w | | |
| HFO-1132 (E) approximate expression | $0.8333w^2+1.8333w+22.6$ | | | $-0.1392w^2+1.4381w+24.475$ | | | $-0.0444w2+0.6889w+25.956$ | | |
| R32 approximate expression | 36.8 | | | 36.8 | | | 36.8 | | |
| R1234yf approximate expression | $-0.8333w^2-2.8333w+40.6$ | | | $0.1392w^2-2.4381w+38.725$ | | | $0.0444w^2-1.6889w+37.244$ | | |

EP 3 957 700 B1

84

Point P

Point P

| Item | $1.2 \geq CO_2 > 0$ | | | $4.0 \geq CO_2 \geq 1.2$ | | | $7.0 \geq CO_2 \geq 4.0$ | | |
|---|---|---|---|---|---|---|---|---|---|
| $CO_2$ | 0.0 | 0.6 | 1.2 | 1.2 | 2.5 | 4.0 | 4.0 | 5.5 | 7.0 |
| E-HFO-1132 | 20.5 | 20.9 | 22.1 | 22.1 | 23.4 | 23.9 | 23.9 | 24.2 | 24.2 |
| R32 | 51.7 | 51.7 | 51.7 | 51.7 | 51.7 | 51.7 | 51.7 | 51.7 | 51.7 |
| R1234yf | 27.8 | 26.8 | 25.0 | 25.0 | 22.4 | 20.4 | 20.4 | 18.6 | 17.1 |
| $CO_2$ | w | | | w | | | w | | |
| HFO-1132 (E) approximate expression | $1.1111w^2 + 20.5$ | | | $-0.2381w^2 + 1.881w + 20.186$ | | | $-0.0667w^2 + 0.8333w + 21.633$ | | |
| R32 approximate expression | 51.7 | | | 51.7 | | | 51.7 | | |
| R1234yf approximate expression | $-1.1111w^2 - w + 27.8$ | | | $0.2381w^2 - 2.881w + 28.114$ | | | $0.0667w^2 - 1.8333w + 26.667$ | | |

Coordinates of points on the curves IJ, JK, and KL were determined by obtaining the approximate expression based on each of the points shown in the above tables. Specifically, calculation was performed as shown in Table 15.

Table 26

| | Kind of refrigerant | I | Example | J | J | Example | K | K | Example | L |
|---|---|---|---|---|---|---|---|---|---|---|
| $CO_2$ | R32 | 0.0 | 10.0 | 18.3 | 18.3 | 27.6 | 36.8 | 36.8 | 44.2 | 51.7 |
| 0.0 | E-HFO-1132 | 72.0 | 57.2 | 48.5 | 48.5 | 41.2 | 35.6 | 35.6 | 32.0 | 28.9 |
| | R1234yf | 28.0 | 32.8 | 33.2 | 33.2 | 31.2 | 27.6 | 27.6 | 23.8 | 19.4 |
| 0.6 | E-HFO-1132 | 72.0 | 57.2 | 48.5 | 48.5 | 41.2 | 35.6 | 35.6 | 32.0 | 28.9 |
| | R1234yf | 27.4 | 32.2 | 32.6 | 32.6 | 30.6 | 27.0 | 27.0 | 23.2 | 18.8 |
| 1.2 | E-HFO-1132 | 72.0 | 57.2 | 48.5 | 48.5 | 41.2 | 35.6 | 35.6 | 32.0 | 28.9 |
| | R1234yf | 26.8 | 31.6 | 32.0 | 32.0 | 30.0 | 26.4 | 26.4 | 22.6 | 18.2 |
| 2.5 | E-HFO-1132 | 72.0 | 57.2 | 48.5 | 48.5 | 41.2 | 35.6 | 35.6 | 32.0 | 28.9 |
| | R1234yf | 25.5 | 30.3 | 30.7 | 30.7 | 28.7 | 25.1 | 25.1 | 21.3 | 16.9 |
| 4.0 | E-HFO-1132 | 72.0 | 57.2 | 48.5 | 48.5 | 41.2 | 35.6 | 35.6 | 32.0 | 28.9 |
| | R1234yf | 24.0 | 28.8 | 29.2 | 29.2 | 27.2 | 23.6 | 23.6 | 19.8 | 15.4 |
| 5.5 | E-HFO-1132 | 72.0 | 57.2 | 48.5 | 48.5 | 41.2 | 35.6 | 35.6 | 32.0 | 28.9 |
| | R1234yf | 22.5 | 27.3 | 27.7 | 27.7 | 25.7 | 22.1 | 22.1 | 18.3 | 13.9 |
| 7.0 | E-HFO-1132 | 72.0 | 57.2 | 48.5 | 48.5 | 41.2 | 35.6 | 35.6 | 32.0 | 28.9 |
| | R1234yf | 21.0 | 25.8 | 26.2 | 26.2 | 24.2 | 20.6 | 20.6 | 16.8 | 12.4 |
| w= $CO_2$ | E-HFO-1132 approximate expression When x=R32, | $0.0236x^2-1.716x+72.0$ | | | $0.0095x^2-1.2222x+67.676$ | | | $0.0049x^2-0.8842x+61.488$ | | |
| | R1234yf | $-0.0236x^2+0.716x+28.0-w$ | | | $-0.0095x^2+0.2222x+32.324-w$ | | | $-0.0049x^2-0.1158x+38.512-w$ | | |

Coordinates of points on the curves MW and WM were determined by obtaining the approximate expression based on each of the points shown in the above tables. Specifically, calculation was performed as shown in Table 16 (when 0 mass% < $CO_2$ concentration < 1.2 mass%), Table 17 (when 1.2 mass% < $CO_2$ concentration < 4.0 mass%), and Table 18 (4.0 mass% < $CO_2$ concentration < 7.0 mass%).

Table 27

| 1.2≥$CO_2$>0 | | | | | | |
|---|---|---|---|---|---|---|
| Item | M | Ex. | W | W | Ex. | N |
| | 0.0 | 5.0 | 10.0 | 10.0 | 14.5 | 18.2 |
| $CO_2$=0 mass% | 52.6 | 39.2 | 32.4 | 32.4 | 29.3 | 27.7 |
| When x=R32, E-HFO-1132 approximate expression | $0.132x^2-3.34x+52.6$ | | | $0.0313x^2-1.4551x+43.824$ | | |
| $CO_2$=0.6 mass% | 55.4 | 42.4 | 35.1 | 35.1 | 31.6 | 29.6 |
| When x=R32, E-HFO-1132 approximate expression | $0.114x^2-3.17x+55.4$ | | | $0.0289x^2-1.4866x+47.073$ | | |
| $CO_2$=1.2 mass% | 58.0 | 45.2 | 38.1 | 38.1 | 34.0 | 31.7 |
| When x=R32, E-HFO-1132 approximate expression | $0.114x^2-3.13x+58.0$ | | | $0.0353x^2-1.776x+52.330$ | | |
| Approximate expression of coefficients a, b, and c when w=$CO_2$ concentration in E-HFO-1132 approximate expression $ax^2+bx+c$ | | | | | | |
| Coefficient a approximate expression | $0.025w^2-0.045w+0.132$ | | | $0.0122w^2-0.0113w+0.0313$ | | |
| Coefficient b approximate expression | $-0.1806w^2+0.3917w-3.34$ | | | $-0.3582w^2+0.1624w-1.4551$ | | |
| Coefficient c approximate expression | $-0.2778w^2+4.8333w+52.6$ | | | $2.7889w^2+3.7417w+43.824$ | | |
| x=R32, w=$CO_2$ 1.2≥w>0 E-HFO-1132 approximate expression | $(0.025w^2-0.045w+0.132)x^2 +(-0.1806w^2+0.3917w-3.34)x +(-0.2778w^2+4.8333w+52.6)$ | | | $(0.0122w^2-0.0113w+0.0313)x^2 +(-0.3582w^2+0.1624w-1.4551)x + (2.7889w^2+3.7417w+43.824)$ | | |
| R1234yf | | 100-w-x-y | | | 100-w-x-y | |

Table 28

| 4.0≥$CO_2$≥1.2 | | | | | | |
|---|---|---|---|---|---|---|
| Item | M | Ex. | W | W | Ex. | N |
| | 0.0 | 5.0 | 10.0 | 10.0 | 14.5 | 18.2 |
| $CO_2$=1.2 mass% | 58 | 45.2 | 38.1 | 38.1 | 34 | 31.7 |
| When x=R32, E-HFO-1132 approximate expression | $0.114x^2-3.13x+58.0$ | | | $0.0353x^2-1.776x+52.330$ | | |
| $CO_2$=2.5 mass% | 59.7 | 48.1 | 40.9 | 40.9 | 36.9 | 34.2 |

(continued)

| $4.0 \geq CO_2 \geq 1.2$ | | | | | | |
|---|---|---|---|---|---|---|
| Item | M | Ex. | W | W | Ex. | N |
| | 0.0 | 5.0 | 10.0 | 10.0 | 14.5 | 18.2 |
| When x=R32, E-HFO-1132 approximate expression | $0.088x^2-2.76x+59.7$ | | | $0.0194x^2-1.3644x+52.603$ | | |
| $CO_2=4.0$ mass% | 60.4 | 49.6 | 42.6 | 42.6 | 38.3 | 35.5 |
| When x=R32, E-HFO-1132 approximate expression | $0.076x^2-2.54x160.4$ | | | $0.0242X^2-1.5495x+55.671$ | | |
| Approximate expression of coefficients a, b, and c when w=$CO_2$ concentration in E-HFO-1132 approximate expression $ax^2+bx+c$ | | | | | | |
| Coefficient approximate expression a | $0.0043w^2-0.0359w+0.1509$ | | | $0.0055w^2-0.0326w+0.0665$ | | |
| Coefficient approximate expression b | $-0.0493w^210.4669w-3.6193$ | | | $-0.1571w^2+0.8981w-2.6274$ | | |
| Coefficient approximate expression c | $-0.3004w^2+2.419w+55.53$ | | | $0.6555w^2-2.2153w+54.044$ | | |
| x=R32, w=$CO_2$ $4.0 \geq w \geq 1.2$ E-HFO-1132 approximate expression | $(0.0043w^2-0.0359w+0.1509)x^2 +(-0.0493w^2+0.4669w-3.6193)x +(-0.3004w^2+2.419w+55.53)$ | | | $(0.0055w^2-0.0326w+0.0665)x^2 +(-0.1571w^2+0.8981w-2.6274)x + (0.6555w^2-2.2153w+54.044)$ | | |
| R1234yf | 100-w-x-y | | | 100-w-x-y | | |

Table 29

| $7.0 \geq CO_2 \geq 4.0$ | | | | | | |
|---|---|---|---|---|---|---|
| Item | M | Example | W | W | Example | N |
| | 0.0 | 5.0 | 10.0 | 10.0 | 14.5 | 18.2 |
| $CO_2=4.0$ mass% | 60.4 | 49.6 | 42.6 | 42.6 | 38.3 | 35.5 |
| When x=R32, E-HFO-1132 approximate expression | $0.076x^2-2.54x+60.4$ | | | $0.0242x^2-1.5495x+55.671$ | | |
| $CO_2=5.5$ mass% | 60.7 | 50.3 | 43.3 | 43.3 | 39 | 36.3 |
| When x=R32, E-HFO-1132 approximate expression | $0.068x^2-2.42x+60.7$ | | | $0.0275x^2-1.6303x+56.849$ | | |
| $CO_2=7.0$ mass% | 60.7 | 50.3 | 43.7 | 43.7 | 39.5 | 36.7 |
| When x=R32, E-HFO-1132 approximate expression | $0.076x^2-2.46x+60.7$ | | | $0.0215x^2-1.4609x+56.156$ | | |

(continued)

| 7.0≥$CO_2$≥4.0 | | | | | | |
|---|---|---|---|---|---|---|
| Item | M | Example | W | W | Example | N |
| | 0.0 | 5.0 | 10.0 | 10.0 | 14.5 | 18.2 |
| Approximate expression of coefficients a, b, and c when w=$CO_2$ concentration in E-HFO-1132 approximate expression $ax^2+bx+c$ | | | | | | |
| Coefficient approximate expression a | $0.00357w^2-0.0391w+0.1756$ | | | $-0.002061w^2+0.0218w-0.0301$ | | |
| Coefficient approximate expression b | $-0.0356w^2+0.4178w-3.6422$ | | | $0.0556w^2-0.5821w-0.1108$ | | |
| Coefficient approximate expression c | $-0.0667w^2+0.8333w+58.103$ | | | $-0.4158w^2+4.7352w+43.383$ | | |
| x=R32, w=$CO_2$ 7.0≥w≥4.0 E-HFO-1132 approximate expression | $(0.00357w^2-0.0391w+0.1756)x^2 +(-0.0356w^2+0.4178w-3.6422)x +(-0.0667w^2+0.8333w+58.103)$ | | | $(-0.002061w^2+0.0218w-0.0301)x^2 + (0.0556w^2-0.5821w-0.1108)x +(-0.4158w^2+4.7352w+43.383)$ | | |
| R1234yf | 100-w-x-y | | | 100-w-x-y | | |

Coordinates of points on the curves NO and OP were determined by obtaining the approximate expression based on each of the points shown in the above tables. Specifically, calculation was performed as shown in Table 19 (when 0 mass% < $CO_2$ concentration < 1.2 mass%), Table 20 (when 1.2 mass% < $CO_2$ concentration < 4.0 mass%), and Table 21 (4.0 mass% < $CO_2$ concentration < 7.0 mass%).

Table 30

| 1.2≥$CO_2$>0 | | | | | | |
|---|---|---|---|---|---|---|
| Item | N | Example | O | O | Example | P |
| | 18.2 | 27.6 | 36.8 | 36.8 | 44.2 | 51.7 |
| $CO_2$=0 mass% | 27.7 | 24.5 | 22.6 | 22.6 | 21.2 | 20.5 |
| When x=R32, E-HFO-1132 approximate expression | $0.0072x^2-0.6701x+37.512$ | | | $0.0064x^2-0.7103x+40.07$ | | |
| $CO_2$=0.6 mass% | 29.6 | 26.3 | 24 | 24 | 22.4 | 20.9 |
| When x=R32, E-HFO-1132 approximate expression | $0.0054x^2-0.5999x+38.719$ | | | $0.0011x^2-0.3044x+33.727$ | | |
| COz=1.2 mass% | 31.7 | 27.9 | 25.4 | 25.4 | 23.7 | 22.1 |
| When x=R32, E-HFO-1132 approximate expression | $0.0071x^2-0.7306x+42.636$ | | | $0.0011x^2-0.3189x+35.644$ | | |
| Approximate expression of coefficients a, b, and c when w=$CO_2$ concentration in E-HFO-1132 approximate expression $ax^2+bx+c$ | | | | | | |

(continued)

| 1.2≥CO₂>0 | | | | | | |
|---|---|---|---|---|---|---|
| Item | N | Example | O | O | Example | P |
| | 18.2 | 27.6 | 36.8 | 36.8 | 44.2 | 51.7 |
| Coefficient approximate a expression | 0.00487w²-0.0059w+0.0072 | | | 0.0074w²-0.0133w+0.0064 | | |
| Coefficient approximate b expression | -0.279w²+0.2844w-0.6701 | | | -0.5839w²+1.0268w-0.7103 | | |
| Coefficient approximate c expression | 3.7639w²-0.2467w+37.512 | | | 11.472w²-17.455w+40.07 | | |
| x=R32, w=CO₂ 1.2≥w>0 E-HFO-1132 approximate expression | (0.00487w²-0.0059w+0.0072)x² +(-0.279w²+0.2844w-0.6701)x +(3.7639w²-0.2467w+37.512) | | | (0.0074w²-0.0133w+0.0064)x² +(-0.5839w2+1.0268w-0.7103)x + (11.472w²-17.455w+40.07) | | |
| R1234yf | 100-w-x-y | | | 100-w-x-y | | |

Table 31

| 4.0≥CO₂≥1.2 | | | | | | |
|---|---|---|---|---|---|---|
| Item | N | Ex. | O | O | Ex. | P |
| | 18.2 | 27.6 | 36.8 | 36.8 | 44.2 | 51.7 |
| CO₂=1.2 mass% | 31.7 | 27.9 | 25.4 | 25.4 | 23.7 | 22.1 |
| When x=R32, E-HFO-1132 approximate expression | 0.0071x²-0.7306x+42.636 | | | 0.0011x²-0.3189x+35.644 | | |
| CO₂=2.5 mass% | 34.2 | 29.9 | 27.2 | 27.2 | 25.2 | 23.4 |
| When x=R32, E-HFO-1132 approximate expression | 0.0088x²-0.8612x+46.954 | | | 0.002x²-0.4348x+40.5 | | |
| CO₂=4.0 mass% | 35.5 | 31 | 28 | 28 | 25.9 | 23.9 |
| When x=R32, E-HFO-1132 approximate expression | 0.0082x²-0.8546x+48.335 | | | 0.0011x²-0.3768x+40.412 | | |
| Approximate expressions of coefficients a, b, and c when W-CO₂ concentration in E-HFO-1132 approximate expression ax²+bx+c | | | | | | |
| Coefficient approximate a expression | -0.00062w²+0.0036w+0.0037 | | | -0.000463w²+0.0024w-0.0011 | | |
| Coefficient approximate b expression | 0.0375w²-0.239w-0.4977 | | | 0.0457w²-0.2581w-0.075 | | |
| Coefficient approximate c expression | -0.8575w²+6.4941w+36.078 | | | -1.355w²+8.749w+27.096 | | |

(continued)

| 4.0≥$CO_2$≥1.2 | | | | | | |
|---|---|---|---|---|---|---|
| Item | N | Ex. | O | O | Ex. | P |
| | 18.2 | 27.6 | 36.8 | 36.8 | 44.2 | 51.7 |
| x=R32, w=$CO_2$ 4.0≥w≥1.2 E-HFO-1132 approximate expression | (-0.00062$w^2$+0.0036w+0.0037)$x^2$ + (0.0375$w^2$-0.239w-0.4977)x +(-0.8575$w^2$+6.4941w+36.078) | | | (-0.000463$w^2$+0.0024w-0.0011)$x^2$ + (0.0457$w^2$-0.2581w-0.075)x +(-1.355$w^2$+8.749w+27.096) | | |
| R1234yf | 100-w-x-y | | | 100-w-x-y | | |

Table 32

| 7.0≥$CO_2$≥4.0 | | | | | | |
|---|---|---|---|---|---|---|
| Item | N | Ex. | O | O | Ex. | P |
| | 18.2 | 27.6 | 36.8 | 36.8 | 44.2 | 51.7 |
| $CO_2$=4.0 mass% | 35.5 | 31.0 | 28.0 | 28.0 | 25.9 | 23.9 |
| When x=R32, E-HFO-1132 approximate expression | 0.0082$x^2$-0.8546x+48.335 | | | 0.0011$x^2$-0.3768x+40.412 | | |
| $CO_z$=5.5 mass% | 36.3 | 31.6 | 28.4 | 28.4 | 26.2 | 24.2 |
| When x=R32, E-HFO-1132 approximate expression | 0.0082$x^2$-0.8747x+49.51 | | | 0.0021$x^2$-0.4638x+42.584 | | |
| $CO_z$=7.0 mass% | 36.7 | 31.9 | 28.6 | 28.6 | 26.4 | 24.2 |
| When x=R32, E-HFO-1132 approximate expression | 0.0082$x^2$-0.8848x+50.097 | | | 0.0003$x^2$-0.3188x+39.923 | | |
| Approximate expression of Coefficients a, b, and c when w=$CO_2$ concentration In E-HFO-1132 approximate expression a$x^2$+bx+c | | | | | | |
| Coefficient approximate expression a | 0.0082 | | | -0.0006258$w^2$+0.0066w-0.0153 | | |
| Coefficient approximate expression b | 0.0022$w^2$-0.0345w-0.7521 | | | 0.0516$w^2$-0.5478w+0.9894 | | |
| Coefficient approximate expression c | -0.1307$w^2$+2.0247w+42.327 | | | -1.074$w^2$+11.651w+10.992 | | |
| x=R32, w=$CO_2$ 7.0≥w≥4.0 E-HFO-1132 approximate expression | 0.0082$x^2$ +(0.0022$w^2$-0.0345w-0.7521)x +(-0.1307$w^2$+2.0247w+42.327) | | | (-0.0006258$w^2$+0.0066w-0.0153)$x^2$ + (0.0516$w^2$-0.5478w+0.9894)x +(-1.074$w^2$+11.651w+10.992) | | |
| R1234yf | 100-w-x-y | | | 100-w-x-y | | |

Description of Reference Numerals

1:    Sample cell

2:    High-speed camera

3:    Xenon lamp

4:    Collimating lens

5:    Collimating lens

6:    Ring filter

**Claims**

1.  A composition comprising a refrigerant comprising $CO_2$, trans-1,2-difluoroethylene (HFO-1132(E)), difluoromethane (R32), and 2,3,3,3-tetrafluoro-1-propene (R1234yf),
    wherein, when the mass% of $CO_2$, R32, HFO-1132(E), and R1234yf based on their sum is respectively represented by w, x, y, and z, in a ternary composition diagram wherein the sum of R32, HFO-1132(E), and R1234yf is (100-w) mass% the coordinates (x,y,z) are within the range of a figure surrounded by curves IJ, JK, and KL, and straight lines LB", B"D, DC and CI that connect the points I, J, K, L, B", D and C, or on the above line segments (excluding points on the straight lines B"D and CI):

    I        (0.0, 72.0, 28.0-w),
    J        (18.3, 48.5, 33.2-w),
    K        (36.8, 35.6, 27.6-w),
    L        (51.7, 28.9, 19.4-w); and

    if $0 < w \leq 1.2$:

    B"    $(-1.5278w^2+2.75w+50.5, 0.0, 1.5278w^2-3.75w+49.5)$,
    D     $(-2.9167w+40.317, 0.0, 1.9167w+59.683)$,
    C     $(0.0, -4.9167w+58.317, 3.9167w+41.683)$;

    if $1.2 < w \leq 4.0$:

    B"    $(51.6, 0.0, 48.4-w)$,
    D     $(-2.8226w+40.211, 0.0, 1.8226w+59.789)$,
    C     $(0.0, 0.1081w^2-5.169w+58.447, -0.1081w^2+4.169w+41.553)$;

    if $4.0 < w \leq 7.0$:

    B"    $(51.6, 0.0, 48.4-w)$,
    D     $(-2.8w+40.1, 0.0, 1.8w+59.9)$,
    C     $(0.0, 0.0667w^2-4.9667w+58.3, -0.0667w^2+3.9667w+41.7)$;

    the curves IJ, JK and KL being represented by the following coordinates:

    IJ    $(x, 0.0236x^2-1.716x+72, -0.0236x^2+0.716x+28-w)$,
    JK    $(x, 0.009Sx^2-1.2222x+67.676, -0.0095x^2+0.2222x+32.324-w)$,
    KL    $(x, 0.0049x^2-0.8842x+61.488, -0.0049x^2-0.1158x+38.512-w)$.

2.  A composition comprising a refrigerant comprising $CO_2$, trans-1,2-difluoroethylene (HFO-1132(E)), difluoromethane (R32), and 2,3,3,3-tetrafluoro-1-propene (R1234yf),

wherein, when the mass% of $CO_2$, R32, HFO-1132(E), and R1234yf based on their sum is respectively represented by w, x, y, and z, in a ternary composition diagram wherein the sum of R32, HFO-1132(E), and R1234yf is (100-w) mass% the coordinates (x,y,z) are

within the range of a figure surrounded by curves IJ and JK, and straight lines KF, FC and CI that connect the points I, J, K, L, F and C, or on the above line segments (excluding points on the straight line CI):

| | |
|---|---|
| I | (0.0, 72.0, 28.0-w), |
| J | (18.3, 48.5, 33.2-w), |
| K | (36.8, 35.6, 27.6-w), and |

if $0 < w \leq 1.2$:

| | |
|---|---|
| F | (-0.0833w+36.717, -4.0833w+5.1833, 3.1666w+58.0997), |
| C | (0.0, -4.9167w+58.317, 3.9167w+41.683); |

if $1.2 < w \leq 1.3$:

| | |
|---|---|
| F | (36.6, -3w+3.9, 2w+59.5), |
| C | (0.0, $0.1081w^2$-5.169w+58.447, $-0.1081w^2$+4.169w+41.553); |

or within the range of a figure surrounded by curves IJ and JK, and straight lines KB', B'D, DC and CI that connect the points I, J, K, B', D and C, or on the above line segments (excluding points on the straight line CI):

| | |
|---|---|
| I | (0.0, 72.0, 28.0-w), |
| J | (18.3, 48.5, 33.2-w), |
| K | (36.8, 35.6, 27.6-w), |
| B' | (36.6, 0.0, -w+63.4), and |

if $1.3 < w \leq 4.0$:

| | |
|---|---|
| D | (-2.8226w+40.211, 0.0, 1.8226w+59.789), |
| C | (0.0, $0.1081w^2$-5.169w+58.447, $-0.1081w^2$+4.169w+41.553); |

if $4.0 < w \leq 7.0$:

| | |
|---|---|
| D | (-2.8w+40.1, 0.0, 1.8w+59.9), |
| C | (0.0, $0.0667w^2$-4.9667w+58.3, $-0.0667w^2$+3.9667w+41.7); |

the curves IJ and JK being represented by the following coordinates:

| | |
|---|---|
| IJ | (x, $0.0236x^2$-1.716x+72, $-0.0236x^2$+0.716x+28-w); |
| JK | (x, $0.0095x^2$-1.2222x+67.676, $-0.0095x^2$+0.2222x+32.324-w). |

3. A composition comprising a refrigerant comprising $CO_2$, R32, HFO-1132(E), and R1234yf, wherein, when the mass% of $CO_2$, R32, HFO-1132(E), and R1234yf based on their sum is respectively represented by w, x, y, and z, in a ternary composition diagram wherein the sum of R32, HFO-1132(E), and R1234yf is (100-w) mass% the coordinates (x,y,z) are within the range of a figure surrounded by curve IJ, and straight lines JE, EC and CI that connect the points I, J, E and C, or on the above line segments (excluding points on the straight line CI):

| | |
|---|---|
| I | (0.0, 72.0, 28.0-w), |
| J | (18.3, 48.5, 33.2-w), and |

if 0 < w ≤ 1.2:

E  (18.2, -1.1111$w^2$-3.1667w+31.9, 1.1111$w^2$+2.1667w+49.9),

C  (0.0, -4.9167w+58.317, 3.9167w+41.683);

if 1.2 < w ≤ 4.0:

E  (-0.0365w+18.26, 0.0623$w^2$-4.5381w+31.856, -0.0623$w^2$+3.5746w+49.884),

C  (0.0, 0.1081$w^2$-5.169w+58.447, -0.1081$w^2$+4.169w+41.553); or

if 4.0 < w ≤ 7.0:

E  (18.1, 0.0444$w^2$-4.3556w+31.411, -0.0444$w^2$+3.3556w+50.489),

C  (0.0, 0.0667$w^2$-4.9667w+58.3, -0.0667$w^2$+3.9667w+41.7);

the curve IJ being represented by the coordinates (x, 0.0236$x^2$-1.716x+72, -0.0236$x^2$+0.716x+28-w).

4.  A composition comprising a refrigerant comprising $CO_2$, R32, HFO-1132(E), and R1234yf,

wherein, when the mass% of $CO_2$, R32, HFO-1132(E), and R1234yf based on their sum is respectively represented by w, x, y, and z, in a ternary composition diagram wherein the sum of R32, HFO-1132(E), and R1234yf
is (100-w) mass% the coordinates (x,y,z) are
if 0 < w ≤ 0.6:
within the range of a figure surrounded by curves GO and OP, and straight lines PB", B"D and DG that connect
the points G, O, P, B", and D, or on the above line segments (excluding points on the straight line B"D):

G  (-5.8333$w^2$-3.1667w+22.2, 7.0833$w^2$+1.4167w+26.2, -1.25$w^2$+0.75w+51.6),

O  (36.8, 0.8333$w^2$+1.8333w+22.6, -0.8333$w^2$-2.8333w+40.6),

P  (51.7, 1.1111$w^2$+20.5, -1.1111$w^2$-w+27.8),

B"  (-1.5278$w^2$+2.75w+50.5, 0.0, 1.5278$w^2$-3.75w+49.5),

D  (-2.9167w+40.317, 0.0, 1.9167w+59.683);

the curves GO and OP being represented by the following coordinates:

GO  (x, (0.00487$w^2$-0.0059w+0.0072)$x^2$+(-0.279$w^2$+0.2844w-0.6701)x+3.7639$w^2$-0.2467w+37.512, 100-w-x-y);

OP  (x, (0.0074$w^2$-0.0133w+0.0064)$x^2$+(-0.5839$w^2$+1.0268w-0.7103)x+11.472$w^2$-17.455w+40.07, 100-w-x-y);

if 0.6 < w ≤ 1.2:
within the range of a figure surrounded by curves GN, NO and OP, and straight lines PB", B"D and DG that
connect the points G, N, O, P, B" and D, or on the above line segments (excluding points on the straight line B"D):

points G, O, P, B" and D being as defined above, and N being (18.2, 0.2778$w^2$+3w+27.7, -0.2778$w^2$-
4w+54.1);
the curve OP being as defined above, and the curves GN and NO being represented by the following
coordinates:

GN  (x, (0.0122$w^2$-0.0113w+0.0313)$x^2$+(-0.3582$w^2$+0.1624w-1.4551)x+2.7889$w^2$+3.7417w+43.824 , 100-w-x-y);

NO  (x, (0.00487$w^2$-0.0059w+0. 0072)$x^2$+(-0.279$w^2$+0.2844w-0.6701)x+3.7639$w^2$-0.2467w+37.512, 100-w-x-y);

if 1.2 < w ≤ 4.0:
within the range of a figure surrounded by curves MW, WN, NO, and OP, and straight lines PB", B"D, DC, and
CM that connect the points M, W, N, O, P, B", D and C, or on the above line segments (excluding points on the straight line B"D and CM):

| M | $(0.0, -0.3004w^2+2.419w+55.53, 0.3004w^2-3.419w+44.47)$, |
|---|---|
| W | $(10.0, -0.3645w^2+3.5024w+34.422, 0.3645w^2-4.5024w+55.578)$, |
| N | $(18.2, -0.3773w^2+3.319w+28.26, 0.3773w^2-4.319w+53.54)$, |
| O | $(36.8, -0.1392w^2+1.4381w+24.475, 0.1392w^2-2.4381w+38.725)$, |
| P | $(51.7, -0.2381w^2+1.881w+20.186, 0.2381w^2-2.881w+28.114)$, |
| B" | $(51.6, 0.0, -w+48.4)$, |
| D | $(-2.8226w+40.211, 0.0, 1.8226w+59.789)$, |
| C | $(0.0, 0.1081w^2-5.169w+58.447, -0.1081w^2+4.169w+41.553)$; |

the curves MW, WN, NO, and OP being represented by the following coordinates:

| MW | $(x, (0.0043w^2-0.0359w+0.1509)x^2+(-0.0493w^2+0.4669w-3.6193)x-0.3004w^2+2.419w+55.53, 100-w-x-y)$, |
|---|---|
| WN | $(x, (0.0055w^2-0.0326w+0.0665)x^2+(-0.1571w^2+0.8981w-2.6274)x+0.6555w^2-2.2153w+54.044, 100-w-x-y)$, |
| NO | $(x, (-0.00062w^2+0.0036w+0.0037)x^2+(0.0375w^2-0.239w-0.4977)x-0.8575w^2+6.4941w+36.078, 100-w-x-y)$, |
| OP | $(x, (-0.000463w^2+0.0024w-0.0011)x^2+(0.0457w^2-0.2581w-0.075)x-1.355w^2+8.749w+27.096, 100-w-x-y)$; and |

if $4.0 < w \leq 7.0$:
within the range of a figure surrounded by curves MW, WN, NO, and OP, and straight lines PB", B"D, DC, and CM that connect the points M, W, N, O, P, B", D and C, or on the above line segments (excluding points on the straight line B"D and CM):

| M | $(0.0, -0.0667w^2+0.8333w+58.133, 0.0667w^2-1.8333w+41.867)$, |
|---|---|
| W | $(10.0, -0.0667w^2+1.1w+39.267, 0.0667w^2-2.1w+50.733)$, |
| N | $(18.2, -0.0889w^2+1.3778w+31.411, 0.0889w^2-2.3778w+50.389)$, |
| O | $(36.8, -0.0444w^2+0.6889w+25.956, 0.0444w^2-1.6889w+37.244)$, |
| P | $(51.7, -0.0667w^2+0.8333w+21.633, 0.0667w^2-1.8333w+26.667)$, |
| B" | $(51.6, 0.0, -w+48.4)$, |
| D | $(-2.8w+40.1, 0.0, 1.8w+59.9)$, |
| C | $(0.0, 0.0667w^2-4.9667w+58.3, -0.0667w^2+3.9667w+41.7)$; |

the curves MW, WN, NO, and OP being represented by the following coordinates:

| MW | $(x, (0.00357w^2-0.0391w+0.1756)x^2+(-0.0356w^2+0.4178w-3.6422)x-0.0667w^2+0.8333w+58.103, 100-w-x-y)$, |
|---|---|
| WN | $(x, (-0.002061w^2+0.0218w-0.0301)x^2+(0.0556w^2-0.5821w-0.1108)x-0.4158w^2+4.7352w+43.383, 100-w-x-y)$, |
| NO | $(x, 0.0082x^2+(0.0022w^2-0.0345w-0.7521)x-0.1307w^2+2.0247w+42.327, 100-w-x-y)$, |
| OP | $(x, (-0.0006258w^2+0.0066w-0.0153)x^2+(0.0516w^2-0.5478w+0.9894)x-1.074w^2+11.651w+10.992, 100-w-x-y)$. |

**5.** A composition comprising a refrigerant comprising $CO_2$, R32, HFO-1132(E), and R1234yf,

wherein, when the mass% of $CO_2$, R32, HFO-1132(E), and R1234yf based on their sum is respectively represented by w, x, y, and z, in a ternary composition diagram wherein the sum of R32, HFO-1132(E), and R1234yf is (100-w) mass% the coordinates (x,y,z) are
if $0 < w < 0.6$:
within the range of a figure surrounded by curve GO, and straight lines OF and FG that connect the points G, O and F, or on the above line segments:

G   (-5.8333w$^2$-3.1667w+22.2, 7.0833w$^2$+1.4167w+26.2, - 1.25w$^2$+0.75w+51.6),
O   (36.8, 0.8333w$^2$+1.8333w+22.6, -0.8333w$^2$-2.8333w+40.6),
F   (-0.0833w+36.717, -4.0833w+5.1833, 3.1666w+58.0997), or the above line segments;

the curve GO being represented by the coordinates (x, (0.00487w$^2$-0.0059w+0.0072)x$^2$+(-0.279w$^2$+0.2844w-0.6701)x+3.7639w$^2$-0.2467w+37.512, 100-w-x-y);
if 0.6 < w ≤ 1.2:
within the range of a figure surrounded by curves GN and NO, and straight lines OF and FG that connect the points G, N, O and F, or on the above line segments:

points G, O and F being as defined above, and N being (18.2, 0.2778w$^2$+3.0w+27.7, -0.2778w$^2$-4.0w+54.1);
the curves GN and NO being represented by the following coordinates:

GN   (x, (0.0122w$^2$-0.0113w+0.0313)x$^2$+(-0.3582w$^2$+0.1624w-1.4551)x+2.7889w$^2$+3.7417w+43.824, 100-w-x-y);
NO   (x, (0.00487w$^2$-0.0059w+0.0072)x$^2$+(-0.279w$^2$+0.2844w-0.6701)x+3.7639w$^2$-0.2467w+37.512, 100-w-x-y);

if 1.2 < w ≤ 1.3:
within the range of a figure surrounded by curves MW, WN, and NO, and straight lines OF, FC, and CM that connect the points M, W, N, O, F and C, or on the above line segments (excluding points on the straight line CM):

M   (0.0, -0.3004w$^2$+2.419w+55.53, 0.3004w$^2$-3.419w+44.47),
W   (10.0, -0.3645w$^2$+3.5024w+34.422, 0.3645w$^2$-4.5024w+55.578),
N   (18.2, -0.3773w$^2$+3.319w+28.26, 0.3773w$^2$-4.319w+53.54),
O   (36.8, -0.1392w$^2$+1.4381w+24.475, 0.1392w$^2$-2.4381w+38.725),
F   (36.6, -3w+3.9, 2w+59.5),
C   (0.0, 0.1081w$^2$-5.169w+58.447, -0.1081w$^2$+4.169w+41.553);

the curves MW, WN and NO being represented by the following coordinates:

MW   (x, (0.0043w$^2$-0.0359w+0.1509)x$^2$+(-0.0493w$^2$+0.4669w-3.6193)x-0.3004w$^2$+2.419w+55.53, 100-w-x-y),
WN   (x, (0.0055w$^2$-0.0326w+0.0665)x$^2$+(-0.1571w$^2$+0.8981w-2.6274)x+0.6555w$^2$-2.2153w+54.044, 100-w-x-y),
NO   (x, (-0.00062w$^2$+0.0036w+0.0037)x$^2$+(0.0375w$^2$-0.239w-0.4977)x-0.8575w$^2$+6.4941w+36.078, 100-w-x-y);

if 1.3 < w ≤ 4.0: within the range of a figure surrounded by curves MW, WN, and NO, and straight lines OB', B'D, DC, and CM that connect the points M, W, N, O, B', D and C, or on the above line segments (excluding points on the straight line CM):

points M, W, N, O and C being defined as in the case of (1.2 < w ≤ 1.3), and

B'   ( 36.6, 0.0, -w+63.4),
D    (-2.8226w+40.211, 0.0, 1.8226w+59.789), and

the curves MW, WN and NO being represented by the coordinates as in the case of (1.2 < w ≤ 1.3); and

if 4.0<w≤7.0:
within the range of a figure surrounded by curves MW, WN, and NO, and straight lines OB', B'D, DC, and CM that connect the points M, W, N, O, F and C, or on the above line segments (excluding points on the straight line CM):

M   (0.0, -0.0667w$^2$+0.8333w+58.133, 0.0667w$^2$-1.8333w+41.867),
W   (10.0, -0.0667w$^2$+1.1w+39.267, 0.0667w$^2$-2.1w+50.733),

(continued)

| N | $(18.2, -0.0889w^2+1.3778w+31.411, 0.0889w^2-2.3778w+50.389)$, |
|---|---|
| O | $(36.8, -0.0444w^2+0.6889w+25.956, 0.0444w^2-1.6889w+37.244)$, |
| B' | $(36.6, 0.0, -w+63.4)$, |
| D | $(-2.8w+40.1, 0.0, 1.8w+59.9)$, |
| C | $(0.0, 0.0667w^2-4.9667w+58.3, -0.0667w^2+3.9667w+41.7)$; |

the curves MW, WN and NO being represented by the following coordinates:

| MW | $(x, (0.00357w^2-0.0391w+0.1756)x^2+(-0.0356w^2+0.4178w-3.6422)x-0.0667w^2+0.8333w+58.103, 100-w-x-y)$, |
|---|---|
| WN | $(x, (-0.002061w^2+0.0218w-0.0301)x^2+(0.0556w^2-0.5821w-0.1108)x-0.4158w^2+4.7352w+43.383, 100-w-x-y)$, |
| NO | $(x, (0.0082x^2+(0.0022w^2-0.0345w-0.7521)x-0.1307w^2+2.0247w+42.327, 100-w-x-y)$. |

6. A composition comprising a refrigerant comprising $CO_2$, R32, HFO-1132(E), and R1234yf,

wherein, when the mass% of $CO_2$, R32, HFO-1132(E), and R1234yf based on their sum is respectively represented by w, x, y, and z, in a ternary composition diagram wherein the sum of R32, HFO-1132(E), and R1234yf is (100-w) mass% the coordinates (x,y,z) are

if $1.2 < w \le 4.0$:
within the range of a figure surrounded by curves MW and WN, and straight lines NE, EC, and CM that connect the points M, W, N, E and C, or on the above line segments (excluding points on the straight line CM):

| M | $(0.0, -0.3004w^2+2.419w+55.53, 0.3004w^2-3.419w+44.47)$, |
|---|---|
| W | $(10.0, -0.3645w^2+3.5024w+34.422, 0.3645w^2-4.5024w+55.578)$, |
| N | $(18.2, -0.3773w^2+3.319w+28.26, 0.3773w^2-4.319w+53.54)$, |
| E | $(-0.0365w+18.26, 0.0623w^2-4.5381w+31.856, -0.0623w^2+3.5746w+49.884)$, |
| C | $(0.0, 0.1081w^2-5.169w+58.447, -0.1081w^2+4.169w+41.553)$; |

the curves MW and WN being represented by the following coordinates:

| MW | $(x, (0.0043w^2-0.0359w+0.1509)x^2+(-0.0493w^2+0.4669w-3.6193)x-0.3004w^2+2.419w+55.53, 100-w-x-y)$, |
|---|---|
| WN | $(x, (0.0055w^2-0.0326w+0.0665)x^2+(-0.1571w^2+0.8981w-2.6274)x+0.6555w^2-2.2153w+54.044, 100-w-x-y)$; or |

if $4.0 < w \le 7.0$:
within the range of a figure surrounded by curves MW and WN, and straight lines NE, EC, and CM that connect the points M, W, N, E and C, or on the above line segments (excluding points on the straight line CM):

| M | $(0.0, -0.0667w^2+0.8333w+58.133, 0.0667w^2-1.8333w+41.867)$, |
|---|---|
| W | $(10.0, -0.0667w^2+1.1w+39.267, 0.0667w^2-2.1w+50.733)$, |
| N | $18.2, -0.0889w^2+1.3778w+31.411, 0.0889w^2-2.3778w+50.389)$, |
| E | $(18.1, 0.0444w^2-4.3556w+31.411, -0.0444w^2+3.3556w+50.489)$, |
| C | $(0.0, 0.0667w^2-4.9667w+58.3, -0.0667w^2+3.9667w+41.7)$; |

the curves MW and WN being represented by the following coordinates:

MW (x, (0.00357w$^2$-0.0391w+0.1756)x$^2$+(-0.0356w$^2$+0.4178w-3.6422)x-0.0667w$^2$+0.8333w+58.103, 100-w-x-y), and

WN (x, (-0.002061w$^2$+0.0218w-0.0301)x$^2$+(0.0556w$^2$-0.5821w-0.1108)x-0.4158w$^2$+4.7352w+43.383, 100-w-x-y).

7. The composition of any of claims 1-6, which further comprises a refrigeration oil.

8. Use of the composition of any of claims 1-7 as an alternative refrigerant for R410A.

9. A refrigerating machine comprising the composition of any of claims 1-7 as a working fluid.

10. A method for operating a refrigerating machine, comprising circulating the composition of any of claims 1-7 as a working fluid in a refrigerating machine.

**Patentansprüche**

1. Zusammensetzung, umfassend ein Kältemittel, das $CO_2$, trans-1,2-Difluorethylen (HFO-1132(E)), Difluormethan (R32) und 2,3,3,3-Tetrafluor-1-propen (R1234yf) umfasst,
worin, wenn die Massen-% von $CO_2$, R32, HFO-1132(E) und R1234yf basierend auf ihrer Summe jeweils durch w, x, y und z dargestellt sind, in einem ternären Zusammensetzungsdiagramm, in dem die Summe von R32, HFO-1132 (E) und R1234yf (100-w) Massen-% beträgt, die Koordinaten (x,y,z) innerhalb des Bereichs einer Figur, die von den Kurven IJ, JK und KL und den geraden Linien LB", B"D, DC und CI umgeben ist, die die Punkte I, J, K, L, B", D und C verbinden, oder auf den obigen Liniensegmenten (mit Ausnahme der Punkte auf den geraden Linien B"D und CI) liegen:

| I | (0, 0, 72, 0, 28, 0-w), |
|---|---|
| J | (18, 3, 48, 5, 33, 2-w), |
| K | (36, 8, 35, 6, 27, 6-w), |
| L | (51, 7, 28, 9, 19, 4-w) ; und |

falls 0 < w ≤ 1,2:

| B" | (-1,5278w$^2$+2, 75w+50, 5, 0, 0, 1, 5278w$^2$-3, 75w+49, 5), |
|---|---|
| D | (-2,9167w+40, 317, 0, 0, 1, 9167w+59, 683), |
| C | (0, 0, -4, 9167w+58, 317, 3, 9167w+41, 683); |

falls 1,2 < w ≤ 4,0:

| B" | (51, 6, 0, 0, 48, 4-w), |
|---|---|
| D | (-2, 8226w+40, 211, 0, 0, 1, 8226w+59, 789), |
| C | (0, 0, 0,1081w$^2$-5, 169w+58,447, - 0,1081w$^2$+4, 169w+41,553); |

falls 4,0 < w ≤ 7,0:

| B" | (51, 6, 0, 0, 48, 4-w), |
|---|---|
| D | (-2,8w+40,1, 0, 0, 1,8w+59, 9), |
| C | (0, 0, 0, 0667w$^2$-4,9667w+58, 3, -0, 0667w$^2$+3,9667w+41, 7); |

wobei die Kurven IJ, JK und KL durch die folgenden Koordinaten dargestellt sind:

IJ      $(x, 0{,}0236x^2{-}1{,}716x{+}72, -0{,}0236x^2{+}0{,}716x{+}28{-}w)$,

JK      $(x, 0{,}0095x^2{-}1, 2222x{+}67{,}676, -0{,}0095x^2{+}0{,}2222x{+}32{,}324{-}w)$,

KL      $(x, 0{,}0049x^2{-}0{,}8842x{+}61{,}488, -0{,}0049x^2{-}0{,}1158x{+}38{,}512{-}w)$.

**2.** Zusammensetzung, umfassend ein Kältemittel, das $CO_2$, trans-1,2-Difluorethylen (HFO-1132(E)), Difluormethan (R32) und 2,3,3,3-Tetrafluor-1-propen (R1234yf) umfasst,

worin, wenn die Massen-% von $CO_2$, R32, HFO-1132(E) und R1234yf basierend auf ihrer Summe jeweils durch w, x, y und z dargestellt sind, in einem ternären Zusammensetzungsdiagramm, in dem die Summe von R32, HFO-1132 (E) und R1234yf (100-w) Massen-% beträgt, die Koordinaten (x,y,z) innerhalb des Bereichs einer Figur, die von den Kurven IJ und JK und den geraden Linien KF, FC und CI umgeben ist, die die Punkte I, J, K, L, F und C verbinden, oder auf den obigen Liniensegmenten (mit Ausnahme der Punkte auf der geraden Linie CI) liegen:

I      (0, 0, 72, 0, 28, 0-w),

J      (18, 3, 48, 5, 33, 2-w),

K      (36, 8, 35, 6, 27, 6-w) und

falls $0 < w \leq 1{,}2$:

F      $(-0{,}0833w{+}36, 717, -4, 0833w{+}5, 1833, 3, 1666w{+}58, 0997)$,

C      $(0, 0, -4, 9167w{+}58, 317, 3, 9167w{+}41, 683)$;

falls $1{,}2 < w \leq 1{,}3$:

F      (36, 6, -3w+3, 9, 2w+59, 5),

C      $(0, 0, 0, 1081w^2{-}5, 169w{+}58, 447, -0, 1081w^2{+}4, 169w{+}41, 553)$;

oder innerhalb des Bereichs einer Figur, die von den Kurven IJ und JK und den geraden Linien KB', B'D, DC und CI umgeben ist, die die Punkte I, J, K, B', D und C verbinden, oder auf den oben genannten Liniensegmenten (mit Ausnahme der Punkte auf der geraden Linie CI) liegen:

I      (0, 0, 72, 0, 28, 0-w),

J      (18, 3, 48, 5, 33, 2-w),

K      (36, 8, 35, 6, 27, 6-w),

B'      (36, 6, 0, 0, -w+63, 4) und

falls $1{,}3 < w \leq 4{,}0$:

D      (-2, 8226w+40, 211, 0, 0, 1, 8226w+59, 789),

C      $(0, 0, 0, 1081w^2{-}5, 169w{+}58, 447, -0, 1081w^2{+}4, 169w{+}41, 553)$;

falls $4{,}0 < w \leq 7{,}0$:

D      (-2, 8w+40, 1, 0, 0, 1, 8w+59, 9),

C      $(0, 0, 0{,}0667w^2{-}4, 9667w{+}58, 3, -0{,}0667w^2{+}3{,}9667w{+}41, 7)$;

wobei die Kurven IJ und JK durch die folgenden Koordinaten dargestellt sind:

IJ      $(x, 0, 0236x^2{-}1{,}716x{+}72, -0, 0236x^2{+}0, 716x{+}28{-}w)$;

JK      $(x, 0, 0095x^2{-}1{,}2222x{+}67, 676, -0, 0095x^2{+}0, 2222x{+}32, 324{-}w)$.

3.  Zusammensetzung, umfassend ein Kältemittel, das $CO_2$, R32, HFO-1132(E) und R1234yf umfasst, worin, wenn die Massen-% von $CO_2$, R32, HFO-1132(E) und R1234yf basierend auf ihrer Summe jeweils durch w, x, y und z dargestellt sind, in einem ternären Zusammensetzungsdiagramm, in dem die Summe von R32, HFO-1132 (E) und R1234yf (100-w) Massen-% beträgt, die Koordinaten (x,y,z) innerhalb des Bereichs einer Figur, die von der Kurve IJ und den geraden Linien JE, EC und CI umgeben ist, die die Punkte I, J, E und C verbinden, oder auf den oben genannten Liniensegmenten (mit Ausnahme der Punkte auf der geraden Linie CI) liegen:

> I      (0,0, 72,0, 28,0-w),
> J      (18,3, 48,5, 33,2-w) und

falls $0 < w \leq 1,2$:

> E    (18,2, $-1,1111w^2-3,1667w+31,9$, $1,1111w^2+2,1667w+49,9$),
> C    (0,0, $-4, 9167w+58, 317$, $3,9167w+41, 683$);

falls $1,2 < w \leq 4,0$:

> E    ($-0,0365w+18,26$, $0,0623w^2-4,5381w+31,856$, $-0,0623w^2+3,5746w+49,884$),
> C    (0,0, $0,1081w^2-5, 169w+58, 447$, $-0,1081w^2+4,169w+41, 553$);

oder
falls $4,0 < w < 7,0$:

> E    (18,1, $0,0444w^2-4,3556w+31,411$, $-0,0444w^2+3,3556w+50,489$),
> C    (0,0, $0,0667w^2-4,9667w+58,3$, $-0,0667w^2+3,9667w+41,7$);

wobei die Kurve IJ durch die folgenden Koordinaten dargestellt ist (x, $0,0236x^2-1,716x+72$, $-0,0236x^2+0,716x+28-w$).

4.  Zusammensetzung, umfassend ein Kältemittel, das $CO_2$, R32, HFO-1132(E) und R1234yf umfasst, worin, wenn die Massen-% von $CO_2$, R32, HFO-1132(E) und R1234yf basierend auf ihrer Summe jeweils durch w, x, y und z dargestellt sind, in einem ternären Zusammensetzungsdiagramm, in dem die Summe von R32, HFO-1132 (E) und R1234yf (100-w) Massen-% beträgt, die Koordinaten (x,y,z) wie folgt sind:

falls $0 < w \leq 0,6$:
innerhalb des Bereichs einer Figur, die von den Kurven GO und OP und den geraden Linien PB", B"D und DG umgeben ist, die die Punkte G, O, P, B" und D verbinden, oder auf den obigen Liniensegmenten (mit Ausnahme der geraden Linie B"D) liegen:

> G     ($-5,8333w^2-3,1667w+22,2$, $7,0833w^2+1,4167w+26,2$, $-1,25w^2+0,75w+51,6$),
> O     (36, 8, $0,8333w^2+1,8333w+22,6$, $-0,8333w^2-2,8333w+40,6$),
> P     (51,7, $1,1111w^2+20,5$, $-1,1111w^2-w+27,8$),
> B"    ($-1,5278w^2+2,75w+50,5$, 0,0, $1,5278w^2-3,75w+49,5$),
> D     ($-2,9167w+40,317$, 0,0, $1,9167w+59,683$);

wobei die Kurven GO und OP durch die folgenden Koordinaten dargestellt sind:

GO    (x, $(0,00487w^2-0,0059w+0,0072)x^2+(-0,279w^2+0,2844w-0,6701)x+3,7639w^2-0,2467w+37,512$, 100-w-x-y);
OP    (x, $(0,0074w^2-0,0133w+0,0064)x^2+(-0,5839w^2+1,0268w-0,7103)x+11,472w^2-17,455w+40,07$, 100-w-x-y) ;

falls $0,6 < w \leq 1,2$:
innerhalb des Bereichs einer Figur, die von den Kurven GN, NO und OP und den geraden Linien PB", B"D und DG umgeben ist, die die Punkte G, N, O, P, B" und D verbinden, oder auf den obigen Liniensegmenten (mit Ausnahme der geraden Linie B"D) liegen:

wobei die Punkte G, O, P, B" und D wie oben definiert sind und N (18,2, 0,2778w$^2$+3w+27,7, -0,2778w$^2$-4w+54,1) ist;

die Kurve OP wie oben definiert ist und die Kurven GN und NO durch die folgenden Koordinaten dargestellt sind:

GN  (x, (0,0122w$^2$-0,0113w+0,0313)x$^2$+(-0,3582w$^2$+0,1624w-1,4551)x+2,7889w$^2$+3,7417w+43,824 , 100-w-x-y);

NO  (x, (0,00487w$^2$-0,0059w+0,0072)x$^2$+(-0,279w$^2$+0,2844w-0,6701)x+3,7639w$^2$-0,2467w+37,512, 100-w-x-y) ;

falls 1,2 < w ≤ 4,0:

innerhalb des Bereichs einer Figur, die von den Kurven MW, WN, NO und OP und den geraden Linien PB", B"D, DC und CM umgeben ist, die die Punkte M, W, N, O, P, B", D und C verbinden, oder auf den obigen Liniensegmenten (mit Ausnahme der geraden Linie B"D und CM) liegen:

M  (0,0, -0,3004w$^2$+2, 419w+55, 53, 0,3004w$^2$-3,419w+44, 47),

W  (10,0, -0,3645w$^2$+3,5024w+34, 422, 0,3645w$^2$-4,5024w+55,578),

N  (18,2, -0,3773w$^2$+3,319w+28, 26, 0,3773w$^2$-4,319w+53, 54),

O  (36, 8, -0,1392w$^2$+1,4381w+24, 475, 0,1392w$^2$-2,4381w+38,725),

P  (51,7, -0,2381w$^2$+1, 881w+20, 186, 0,2381w$^2$-2,881w+28,114),

B"  (51,6, 0,0, -w+48,4),

D  (-2, 8226w+40, 211, 0,0, 1, 8226w+59,789),

C  (0,0, 0,1081w$^2$-5,169w+58,447, - 0,1081w$^2$+4,169w+41,553);

wobei die Kurven MW, WN, NO und OP durch die folgenden Koordinaten dargestellt sind:

MW  (x, (0,0043w$^2$-0,0359w+0,1509)x$^2$+(-0,0493w$^2$+0,4669w-3,6193)x-0,3004w$^2$+2,419w+55,53, 100-w-x-y),

WN  (x, (0,0055w$^2$-0,0326w+0,0665)x$^2$+(-0,1571w$^2$+0,8981w-2,6274)x+0,6555w$^2$-2,2153w+54,044, 100-w-x-y),

NO  (x, (-0,00062w$^2$+0, 0036w+0,0037)x$^2$+(0,0375w$^2$-0,239w-0,4977)x-0,8575w$^2$+6,4941w+36,078, 100-w-x-y),

OP  (x, (-0,000463w$^2$+0, 0024w-0,0011)x$^2$+(0,0457w$^2$-0,2581w-0,075)x-1,355w$^2$+8,749w+27,096, 100-w-x-y);

und

falls 4,0 < w ≤ 7,0:

innerhalb des Bereichs einer Figur, die von den Kurven MW, WN, NO und OP und den geraden Linien PB", B"D, DC, und CM umgeben ist, die die Punkte M, W, N, O, P, B", D und C verbinden, oder auf den obigen Liniensegmenten (mit Ausnahme der Punkte auf der geraden Linie B"D und CM) liegen:

M  (0, 0, -0,0667w$^2$+0,8333w+58,133, 0,0667w$^2$-1,8333w+41,867),

W  (10,0, -0,0667w$^2$+1,1w+39,267, 0,0667w$^2$-2,1w+50,733),

N  (18,2, -0,0889w$^2$+1,3778w+31,411, 0,0889w$^2$-2,3778w+50,389),

O  (36, 8, -0,0444w$^2$+0,6889w+25,956, 0,0444w$^2$-1,6889w+37,244),

P  (51,7, -0,0667w$^2$+0,8333w+21,633, 0,0667w$^2$-1,8333w+26,667),

B"  (51,6, 0,0, -w+48,4),

D  (-2,8w+40,1, 0,0, 1,8w+59,9),

C  (0,0, 0,0667w$^2$-4,9667w+58,3, -0,0667w$^2$+3,9667w+41, 7);

wobei die Kurven MW, WN, NO und OP durch die folgenden Koordinaten dargestellt sind:

MW  (x, (0,00357w$^2$-0,0391w+0,1756)x$^2$+(-0,0356w$^2$+0,4178w-3,6422)x-0,0667w$^2$+0,8333w+58,103, 100-w-x-y),

WN  (x, (-0,002061w$^2$+0,0218w-0,0301)x$^2$+(0,0556w$^2$-0,5821w-0,1108)x-0,4158w$^2$+4,7352w+43,383, 100-w-x-y),

NO    (x, 0,0082x$^2$+(0,0022w$^2$-0,0345w-0,7521)x-0,1307w$^2$+2,0247w+42,327, 100-w-x-y),

OP    (x, (-0,0006258w$^2$+0,0066w-0,0153)x$^2$+(0,0516w$^2$-0,5478w+0,9894)x-1,074w$^2$+11,651w+10,992, 100-w-x-y).

**5.** Zusammensetzung, umfassend ein Kältemittel, das $CO_2$, R32, HFO-1132(E) und R1234yf umfasst, worin, wenn die Massen-% von $CO_2$, R32, HFO-1132(E) und R1234yf basierend auf ihrer Summe jeweils durch w, x, y, und z dargestellt sind, in einem ternären Zusammensetzungsdiagramm, in dem die Summe von R32, HFO-1132 (E) und R1234yf (100-w) Massen-% beträgt, die Koordinaten (x,y,z) wie folgt sind:

falls $0 < w \leq 0,6$:
innerhalb des Bereichs einer Figur, die von den Kurven GO und den geraden Linien OF und FG umgeben ist, die die Punkte G, O und F verbinden, oder auf den obigen Liniensegmenten liegen:

G    (-5,8333w$^2$-3,1667w+22,2, 7,0833w$^2$+1,4167w+26, 2, - 1,25w$^2$+0,75w+51,6),

O    (36,8, 0,8333w$^2$+1,8333w+22,6, -0,8333w$^2$-2,8333w+40,6),

F    (-0,0833w+36,717, -4, 0833w+5,1833, 3, 1666w+58, 0997), oder auf den obigen Liniensegmenten;

wobei die Kurve GO durch die Koordinaten (x, (0,00487w$^2$-0,0059w+0,0072)x$^2$+(-0,279w$^2$+0,2844w-0,6701)x+3,7639w$^2$-0,2467w+37,512, 100-w-x-y) dargestellt ist;
falls $0,6 < w \leq 1,2$:
innerhalb des Bereichs einer Figur, die von den Kurven GN und NO und den geraden Linien OF FG umgeben ist, die die Punkte G, N, O und F verbinden, und oder auf den obigen Liniensegmenten liegen:

wobei die Punkte G, O und F wie oben definiert sind und N (18,2, 0,2778w$^2$+3,0w+27,7, -0,2778w$^2$-4,0w+54,1) ist;
die Kurven GN und NO durch die folgenden Koordinaten dargestellt sind:

GN    (x, (0, 0122w$^2$-0, 0113w+0, 0313)x$^2$+(-0, 3582w$^2$+0, 1624w-1,4551)x+2, 7889w$^2$+3, 7417w+43, 824, 100-w-x-y);

NO    (x, (0, 00487w$^2$-0, 0059w+0, 0072)x$^2$+(-0, 279w$^2$+0, 2844w-0, 6701)x+3, 7639w$^2$-0, 2467w+37, 512, 100-w-x-y) ;

falls $1,2 < w \leq 1,3$:
innerhalb des Bereichs einer Figur, die von den Kurven MW, WN und NO und den geraden Linien OF, FC und CM umgeben ist, die die Punkte M, W, N, O, F und C verbinden, oder auf den obigen Liniensegmenten (mit Ausnahme der geraden Linie CM) liegen:

M    (0,0, -0, 3004w$^2$+2, 419w+55, 53, 0,3004w$^2$-3,419w+44,47),

W    (10,0, -0,3645w$^2$+3,5024w+34,422, 0,3645w$^2$-4,5024w+55,578),

N    (18,2, -0,3773w$^2$+3,319w+28, 26, 0,3773w$^2$-4,319w+53,54),

O    (36, 8, -0,1392w$^2$+1,4381w+24,475, 0,1392w$^2$-2,4381w+38,725),

F    (36, 6, -3w+3, 9, 2w+59,5),

C    (0,0, 0,1081w$^2$-5,169w+58,447, - 0,1081w$^2$+4,169w+41,553);

wobei die Kurven MW, WN und NO durch die folgenden Koordinaten dargestellt sind:

MW    (x, (0,0043w$^2$-0,0359w+0,1509)x$^2$+(-0,0493w$^2$+0,4669w-3,6193)x-0,3004w$^2$+2,419w+55,53, 100-w-x-y),

WN    (x, (0,0055w$^2$-0,0326w+0,0665)x$^2$+(-0,1571w$^2$+0,8981w-2,6274)x+0,6555w$^2$-2,2153w+54,044, 100-w-x-y),

NO    (x, (-0,00062w$^2$+0,0036w+0,0037)x$^2$+(0,0375w$^2$-0,239w-0,4977)x-0,8575w$^2$+6,4941w+36,078, 100-w-x-y) ;

falls 1,3 < w ≤ 4,0:

innerhalb des Bereichs einer Figur, die von den Kurven MW, WN und NO und den geraden Linien OB', B'D, DC und CM umgeben ist, die die Punkte M, W, N, O, B', D und C verbinden, oder auf den obigen Liniensegmenten (mit Ausnahme der Punkte auf der geraden Linie CM) liegen:

wobei die Punkte M, W, N, O und C wie im Fall von (1,2 < w ≤ 1,3) definiert sind und

| | |
|---|---|
| B' | ( 36, 6, 0, 0, -w+63,4), |
| D | (-2, 8226w+40, 211, 0,0, 1, 8226w+59, 789) und |

die Kurven MW, WN und NO durch die Koordinaten wie im Fall von (1,2 < w ≤ 1,3) definiert sind; und

falls 4,0<w≤7,0:

innerhalb des Bereichs einer Figur, die von den Kurven MW, WN und NO und den geraden Linien OB', B'D, DC und CM umgeben ist, die die Punkte M, W, N, O, F und C verbinden, oder auf den obigen Liniensegmenten (mit Ausnahme der Punkte auf der geraden Linie CM) liegen:

| | |
|---|---|
| M | $(0,0, -0,0667w^2+0, 8333w+58,133, 0,0667w^2-1,8333w+41,867)$, |
| W | $(10,0, -0,0667w^2+1, 1w+39,267, 0,0667w^2-2,1w+50,733)$, |
| N | $(18, 2, -0,0889w^2+1,3778w+31,411, 0,0889w^2-2,3778w+50,389)$, |
| O | $(36,8, -0,0444w^2+0,6889w+25,956, 0,0444w^2-1,6889w+37,244)$, |
| B' | $(36,6, 0,0, -w+63,4)$, |
| D | $(-2,8w+40, 1, 0,0, 1,8w+59,9)$, |
| C | $(0,0, 0,0667w^2-4, 9667w+58,3, -0,0667w^2+3,9667w+41,7)$; |

wobei die Kurven MW, WN und NO durch die folgenden Koordinaten dargestellt sind:

| | |
|---|---|
| MW | $(x, (0,00357w^2-0,0391w+0,1756)x^2+(-0,0356w^2+0,4178w-3,6422)x-0,0667w^2+0,8333w+58,103, 100-w-x-y)$, |
| WN | $(x, (-0,002061w^2+0,0218w-0,0301)x^2+(0,0556w^2-0,5821w-0,1108)x-0,4158w^2+4,7352w+43,383, 100-w-x-y)$, |
| NO | $(x, (0,0082x^2+(0,0022w^2-0,0345w-0,7521)x-0,1307w^2+2,0247w+42,327, 100-w-x-y)$. |

6. Zusammensetzung, umfassend ein Kältemittel, das $CO_2$, R32, HFO-1132(E) und R1234yf umfasst:

worin, wenn die Massen-% von $CO_2$, R32, HFO-1132(E) und R1234yf basierend auf ihrer Summe jeweils durch w, x, y, und z dargestellt sind, in einem ternären Zusammensetzungsdiagramm, in dem die Summe von R32, HFO-1132(E) und R1234yf (100-w) Massen-% beträgt, die Koordinaten (x,y,z) wie folgt sind

falls 1,2 < w ≤ 4,0:

innerhalb des Bereichs einer Figur, die von den Kurven MW und WN und den geraden Linien NE, EC und CM umgeben ist, die die Punkte M, W, N, E und C verbinden, oder auf den obigen Liniensegmenten (mit Ausnahme der geraden Linie CM) liegen:

| | |
|---|---|
| M | $(0,0, -0,3004w^2+2,419w+55, 53, 0, 3004w^2-3,419w+44, 47)$, |
| W | $(10,0, -0,3645w^2+3,5024w+34,422, 0,3645w^2-4,5024w+55,578)$, |
| N | $(18,2, -0,3773w^2+3,319w+28, 26, 0, 3773w^2-4,319w+53,54)$, |
| E | $(-0,0365w+18,26, 0,0623w^2-4,5381w+31,856, -0,0623w^2+3,5746w+49,884)$, |
| C | $(0,0, 0,1081w^2-5,169w+58,447, - 0,1081w^2+4,169w+41,553)$; |

wobei die Kurven MW und WN durch die folgenden Koordinaten dargestellt sind:

| | |
|---|---|
| MW | $(x, (0,0043w^2-0,0359w+0,1509)x^2+(-0,0493w^2+0,4669w-3,6193)x-0,3004w^2+2,419w+55,53, 100-w-x-y)$, |

(fortgesetzt)

WN  (x, (0,0055w$^2$-0,0326w+0, 0665)x$^2$+(-0,1571w$^2$+0,8981w-2,6274)x+0,6555w$^2$-2,2153w+54,044, 100-w-x-y); oder

falls 4.0<w≤7.0:
innerhalb des Bereichs einer Figur, die von den Kurven MW und WN und den geraden Linien NE, EC und CM umgeben ist, die die Punkte M, W, N, E und C verbinden, oder auf den obigen Liniensegmenten (mit Ausnahme der geraden Linie CM) liegen:

M  (0,0, -0,0667w$^2$+0, 8333w+58,133, 0,0667w$^2$-1,8333w+41,867),
W  (10,0, -0,0667w$^2$+1,1w+39,267, 0,0667w$^2$-2,1w+50,733),
N  18,2, -0,0889w$^2$+1,3778w+31,411, 0,0889w$^2$-2,3778w+50,389),
E  (18,1, 0,0444w$^2$-4,3556w+31,411, - 0,0444w$^2$+3,3556w+50,489),
C  (0,0, 0,0667w$^2$-4,9667w+58,3, -0,0667w$^2$+3,9667w+41,7);

wobei die Kurven MW und WN durch die folgenden Koordinaten dargestellt sind:

MW  (x, (0,00357w$^2$-0,0391w+0,1756)x$^2$+(-0,0356w$^2$+0,4178w-3,6422)x-0,0667w$^2$+0, 8333w+58,103, 100-w-x-y) und

WN  (x, (-0,002061w$^2$+0,0218w-0,0301)x$^2$+(0,0556w$^2$-0,5821w-0,1108)x-0,4158w$^2$+4,7352w+43,383, 100-w-x-y).

7. Zusammensetzung gemäß einem der Ansprüche 1-6, die ferner ein Kältemittelöl umfasst.

8. Verwendung der Zusammensetzung gemäß einem der Ansprüche 1-7 als alternatives Kältemittel zu R410A.

9. Kältemaschine, umfassend die Zusammensetzung gemäß einem der Ansprüche 1-7 als Arbeitsflüssigkeit.

10. Verfahren zum Betreiben einer Kältemaschine, umfassend das Zirkulieren der Zusammensetzung gemäß einem der Ansprüche 1-7 als Arbeitsflüssigkeit in einer Kältemaschine.

**Revendications**

1. Composition comprenant un réfrigérant comprenant du $CO_2$, du trans-1,2-difluoroéthylène (HFO-1132(E)), du difluorométhane (R32) et du 2,3,3,3-tétrafluoro-1-propène (R1234yf),
dans laquelle, lorsque le % en masse de $CO_2$, R32, HFO-1132(E) et R1234yf sur la base de leur somme est respectivement représenté par w, x, y, et z, dans un diagramme de composition ternaire dans lequel la somme de R32, HFO-1132(E) et R1234yf est (100-w) % en masse les coordonnées (x, y, z) sont au sein de la plage d'une figure entourée par des courbes IJ, JK et KL, et les lignes droites LB", B"D, DC et CI qui relient les points I, J, K, L, B", D et C, ou sur les segments de ligne ci-dessus (à l'exclusion des points sur les lignes droites B"D et CI) :

I  (0,0, 72,0, 28,0-w),
J  (18,3, 48,5, 33,2-w),
K  (36,8, 35,6, 27,6-w),
L  (51,7, 28,9, 19,4-w) ; et

si 0 < w ≤ 1,2 :

B"  (-1,5278w$^2$+2,75w+50,5, 0,0, 1,5278w$^2$-3,75w+49,5),
D  (-2,9167w+40,317, 0,0, 1,9167w+59,683),
C  (0,0, -4,9167w+58,317, 3,9167w+41,683) ;

si $1,2 < w \leq 4,0$ :

    B"    (51,6, 0,0, 48,4-w),

    D    (-2,8226w+40,211, 0,0, 1,8226w+59,789),

    C    (0,0, $0,1081w^2$-5,169w+58,447, $-0,1081w^2$+4,169w+41,553);

si $4,0 < w \leq 7,0$ :

    B"    (51,6, 0,0, 48,4-w),

    D    (-2,8w+40,1, 0,0, 1,8w+59,9),

    C    (0,0, $0,0667w^2$-4,9667w+58,3, $-0,0667w^2$+3,9667w+41,7) ;

les courbes IJ, JK et KL étant représentées par les coordonnées suivantes :

    IJ    (x, $0,0236x^2$-1,716x+72, $-0,0236x^2$+0,716x+28-w),

    JK    (x, $0,0095x^2$-1,2222x+67,676, $-0,0095x^2$+0,2222x+32,324-w),

    KL    (x, $0,0049x^2$-0,8842x-61,488, $-0,0049x^2$-0,1158x+38,512-w).

2.  Composition comprenant un réfrigérant comprenant du $CO_2$, du trans-1,2-difluoroéthylène (HFO-1132(E)), du difluorométhane (R32) et du 2,3,3,3-tétrafluoro-1-propène (R1234yf),

dans laquelle, lorsque le % en masse de $CO_2$, R32, HFO-1132(E) et R1234yf sur la base de leur somme est respectivement représenté par w, x, y, et z, dans un diagramme de composition ternaire dans lequel la somme de R32, HFO-1132(E) et R1234yf est (100-w) % en masse les coordonnées (x,y,z) sont
au sein de la plage d'une figure entourée par les courbes IJ et JK, et les lignes droites KF, FC et CI qui relient les points I, J, K, L, F et C, ou sur les segments de ligne ci-dessus (à l'exclusion des points sur la ligne droite CI) :

    I    (0,0, 72,0, 28,0-w),

    J    (18,3, 48,5, 33,2-w),

    K    (36,8, 35,6, 27,6-w), et

si $0 < w \leq 1,2$ :

    F    (-0,0833w+36,717, -4,0833w+5,1833, 3,1666w+58,0997),

    C    (0,0, -4,9167w+58,317, 3,9167w+41,683) ;

si $1,2 < w \leq 1,3$ :

    F    (36,6, -3w+3,9, 2w+59,5),

    C    (0,0, $0,1081w^2$-5,169w+58,447, $-0,1081w^2$+4,169w+41,553) ;

ou au sein de la plage d'une figure entourée par les courbes IJ et JK, et les lignes droites KB', B'D, DC et CI qui relient les points I, J, K, B', D et C, ou sur les segments de ligne ci-dessus (à l'exclusion des points sur la ligne droite CI) :

    I    (0,0, 72,0, 28,0-w),

    J    (18,3, 48,5, 33,2-w),

    K    (36,8, 35,6, 27,6-w),

    B'    (36,6, 0,0, -w+63,4), et

si $1,3 < w \leq 4,0$ :

D    $(-2,8226w+40,211, 0,0, 1,8226w+59,789)$,

C    $(0,0, 0,1081w^2-5,169w+58,447, -0,1081w^2+4,169w+41,553)$;

si $4,0 < w \leq 7,0$ :

D    $(-2,8W+40,1, 0,0, 1,8w+59,9)$,

C    $(0,0, 0,0667w^2-4,9667w+58,3, -0,0667w^2+3,9667w+41,7)$ ;

les courbes IJ et JK étant représentées par les coordonnées suivantes :

IJ    $(x, 0,0236x^2-1,716x-72, -0,0236x^2+0,716x+28-w)$ ;

JK    $(x, 0,0095x^2-1,2222x+67,676, -0,0095x^2+0,2222x+32,324-w)$.

3.  Composition comprenant un réfrigérant comprenant du $CO_2$, du R32, du HFO-1132(E) et du R1234yf, dans laquelle, lorsque le % en masse de $CO_2$, R32, HFO-1132(E) et R1234yf sur la base de leur somme est respectivement représenté par w, x, y, et z, dans un diagramme de composition ternaire dans lequel la somme de R32, HFO-1132(E) et R1234yf est (100-w) % en masse les coordonnées (x,y,z) sont au sein de la plage d'une figure entourée par la courbe IJ, et les lignes droites JE, EC et CI qui relient les points I, J, E et C, ou sur les segments de ligne ci-dessus (à l'exclusion des points sur la ligne droite CI) :

I        $(0,0, 72,0, 28,0-w)$,

J        $(18,3, 48,5, 33,2-w)$, et

si $0 < w \leq 1,2$ :

E    $(18,2, -1,1111w^2-3,1667w+31,9, 1,1111w^2+2,1667w+49,9)$,

C    $(0,0, -4,9167w+58,317, 3,9167w+41,683)$ ;

si $1,2 < w \leq 4,0$ :

E    $(-0,0365w+18,26, 0,0623w^2-4,5381w+31,856, -0,0623w^2+3,5746w+49,884)$,

C    $(0,0, 0,1081w^2-5,169w+58,447, -0,1081w^2+4,169w+41,553)$ ; ou

si $4,0 < w \leq 7,0$ :

E    $(18, 1, 0,0444w^2-4,3556w+31,411, -0,0444w^2+3,3556w+50,489)$,

C    $(0,0, 0,0667w^2-4,9667w+58,3, -0,0667w^2+3,9667w+41,7)$ ;

la courbe IJ étant représentée par les coordonnées $(x, 0,0236x^2-1,716x+72, -0,0236x^2+0,716x+28-w)$.

4.  Composition comprenant un réfrigérant comprenant du $CO_2$, du R32, du HFO-1132(E) et du R1234yf,

dans laquelle, lorsque le % en masse de $CO_2$, R32, HFO-1132(E) et R1234yf sur la base de leur somme est respectivement représenté par w, x, y, et z, dans un diagramme de composition ternaire dans lequel la somme de R32, HFO-1132(E) et R1234yf est (100-w) % en masse les coordonnées (x,y,z) sont
si $0 < w \leq 0,6$ :
au sein de la plage d'une figure entourée par les courbes GO et OP, et les lignes droites PB", B"D et DG qui relient les points G, O, P, B", et D, ou sur les segments de ligne ci-dessus (à l'exclusion des points sur la ligne droite B"D) :

G    $(-5,8333w^2-3,1667w+22,2, 7,0833w^2+1,4167w+26,2, -1,25w^2+0,75w+51,6)$,

(suite)

|   |   |
|---|---|
| O | $(36,8,\ 0,8333w^2+1,8333w+22,6,\ -0,8333w^2-2,8333w+40,6)$, |
| P | $(51,7,\ 1,1111w^2+20,5,\ -1,1111w^2-w+27,8)$, |
| B" | $(-1,5278w^2+2,75w+50,5,\ 0,0,\ 1,5278w^2-3,75w+49,5)$, |
| D | $(-2,9167w+40,317,\ 0,0,\ 1,9167w+59,683)$ ; |

les courbes GO et OP étant représentées par les coordonnées suivantes :

| GO | $(x,\ (0,00487w^2-0,0059w+0,0072)x^2+(-0,279w^2+0,2844w-0,6701)x+3,7639w^2-0,2467w+37,512,\ 100-w-x-y)$ ; |
|---|---|
| OP | $(x,\ (0,0074w^2-0,0133w+0,0064)x^2+(-0,5839w^2+1,0268w-0,7103)x+11,472w^2-17,455w+40,07,\ 100-w-x-y)$ ; |

si $0,6 < w \leq 1,2$ :
au sein de la plage d'une figure entourée par les courbes GN, NO et OP, et les lignes droites PB", B"D et DG qui relient les points G, N, O, P, B" et D, ou sur les segments de ligne ci-dessus (à l'exclusion des points sur la ligne droite B"D) :

les points G, O, P, B" et D étant tels que définis ci-dessus, et N étant $(18,2,\ 0,2778w^2+3w+27,7,\ -0,2778w^2-4w+54,1)$ ;
la courbe OP étant telle que définie ci-dessus, et les courbes GN et NO étant représentées par les coordonnées suivantes :

| GN | $(x,\ (0,0122w^2-0,0113w+0,0313)x^2+(-0,3582w^2+0,1624w-1,4551)x+2,7889w^2+3,7417w+43,824,\ 100-w-x-y)$ ; |
|---|---|
| NO | $(x,\ (0,00487w^2-0,0059w+0,0072)x^2+(-0,279w^2+0,2844w-0,6701)x+3,7639w^2-0,2467w+37,512,\ 100-w-x-y)$ ; |

si $1,2 < w \leq 4,0$ :
au sein de la plage d'une figure entourée par les courbes MW, WN, NO et OP, et les lignes droites PB", B"D, DC et CM qui relient les points M, W, N, O, P, B", D et C, ou sur les segments de ligne ci-dessus (à l'exclusion des points sur la ligne droite B"D et CM) :

|   |   |
|---|---|
| M | $(0,0,\ -0,3004w^2+2,419w+55,53,\ 0,3004w^2-3,419w+44,47)$, |
| W | $(10,0,\ -0,3645w^2+3,5024w+34,422,\ 0,3645w^2-4,5024w+55,578)$, |
| N | $(18,2,\ -0,3773w^2+3,319w+28,26,\ 0,3773w^2-4,319w+53,54)$, |
| O | $(36,8,\ -0,1392w^2+1,4381w+24,475,\ 0,1392w^2-2,4381w+38,725)$, |
| P | $(51,7,\ -0,2381w^2+1,881W+20,186,\ 0,2381w^2-2,881w+28,114)$, |
| B" | $(51,6,\ 0,0,\ -w+48,4)$, |
| D | $(-2,8226w+40,211,\ 0,0,\ 1,8226w+59,789)$, |
| C | $(0,0,\ 0,1081w^2-5,169w+58,447,\ -0,1081w^2+4,169w+41,553)$; |

les courbes MW, WN, NO et OP étant représentées par les coordonnées suivantes :

| MW | $(x,\ (0,0043w^2-0,0359w+0,1509)x^2+(-0,0493w^2+0,4669w-3,6193)x-0,3004w^2+2,419w+55,53,\ 100-w-x-y)$, |
|---|---|
| WN | $(x,\ (0,0055w^2-0,0326w+0,0665)x^2+(-0,1571w^2+0,8981w-2,6274)x+0,6555w^2-2,2153w+54,044,\ 100-w-x-y)$, |
| NO | $(x,\ (-0,00062w^2+0,0036w+0,0037)x^2+(0,0375w^2-0,239w-0,4977)x-0,8575w^2+6,4941w+36,078,\ 100-w-x-y)$, |
| OP | $(x,\ (-0,000463w^2+0,0024w-0,0011)x^2+(0,0457w^2-0,2581w-0,075)x-1,355w^2+8,749w+27,096,\ 100-w-x-y)$ ; et |

si $4,0 < w \leq 7,0$ :
au sein de la plage d'une figure entourée par les courbes MW, WN, NO et OP, et les lignes droites PB", B"D, DC et CM qui relient les points M, W, N, O, P, B", D et C, ou sur les segments de ligne ci-dessus (à l'exclusion des points sur la ligne droite B"D et CM) :

M      $(0,0, -0,0667w^2+0,8333w+58,133, 0,0667w^2-1,8333w+41,867)$,

W      $(10,0, -0,0667w^2+1,1w+39,267, 0,0667w^2-2,1w+50,733)$,

N      $(18,2, -0,0889w^2+1,3778w+31,411, 0,0889w^2-2,3778w+50,389)$,

O      $(36,8, -0,0444w^2+0,6889w+25,956, 0,0444w^2-1,6889w+37,244)$,

P      $(51,7, -0,0667w^2+0,8333w+21,633, 0,0667w^2-1,8333w+26,667)$,

B"      $(51,6, 0,0, -w+48,4)$,

D      $(-2,8W+40,1, 0,0, 1,8w+59,9)$,

C      $(0,0, 0,0667w^2-4,9667w+58,3, -0,0667w^2+3,9667w+41,7)$ ;

les courbes MW, WN, NO et OP étant représentées par les coordonnées suivantes :

MW      $(x, (0,00357w^2-0,0391w+0,1756)x^2+(-0,0356w^2+0,4178w-3,6422)x-0,0667w^2+0,8333w+58,103, 100-w-x-y)$,

WN      $(x, (-0,002061w^2+0,0218w-0,0301)x^2+(0,0556w^2-0,5821w-0,1108)x-0,4158w^2+4,7352w+43,383, 100-w-x-y)$,

NO      $(x, 0,0082x^2+ (0,0022w^2-0,0345w-0,7521)x-0,1307w^2+2,0247w+42,327, 100-w-x-y)$,

OP      $(x, (-0,0006258w^2+0,0066w-0,0153)x^2+(0,0516w^2-0,5478w+0,9894)x-1,074w^2+11,651w+10,992, 100-w-x-y)$.

**5.** Composition comprenant un réfrigérant comprenant du $CO_2$, du R32, du HFO-1132(E) et du R1234yf,

dans laquelle, lorsque le % en masse de $CO_2$, R32, HFO-1132(E) et R1234yf sur la base de leur somme est respectivement représenté par w, x, y, et z, dans un diagramme de composition ternaire dans lequel la somme de R32, HFO-1132(E) et R1234yf est (100-w) % en masse les coordonnées (x,y,z) sont
si $0 < w \leq 0,6$ :
au sein de la plage d'une figure entourée par la courbe GO, et les lignes droites OF et FG qui relient les points G, O et F, ou sur les segments de ligne ci-dessus :

G      $(-5,8333w^2-3,1667w+22,2, 7,0833w^2+1,4167w+26,2, - 1,25w^2+0,75w+51,6)$,

O      $(36,8, 0,8333w^2+1,8333w+22,6, -0,8333w^2-2,8333w+40,6)$,

F      $(-0,0833w+36,717, -4,0833w+5,1833, 3,1666w+58,0997)$, ou les segments de ligne ci-dessus ;

la courbe GO étant représentée par les coordonnées $(x, (0,00487w^2-0,0059w+0,0072)x^2+(-0,279w^2+0,2844w-0,6701)x+3,7639w^2-0,2467w+37,512, 100-w-x-y)$ ;
si $0,6 < w \leq 1,2$ :
au sein de la plage d'une figure entourée par les courbes GN et NO, et les lignes droites OF et FG qui relient les points G, N, O et F, ou sur les segments de ligne ci-dessus :

les points G, O et F étant tels que définis ci-dessus, et N étant $(18,2, 0,2778w^2+3,0w+27,7, -0,2778w^2-4,0w+54,1)$ ;
les courbes GN et NO étant représentées par les coordonnées suivantes :

GN      $(x, (0,0122w^2-0,0113w+0,0313)x^2+(-0,3582w^2+0,1624w-1,4551)x+2,7889w^2+3,7417w+43,824, 100-w-x-y)$ ;

NO      $(x, (0,00487w^2-0,0059w+0,0072)x^2+(-0,279w^2+0,2844w-0,6701)x+3,7639w^2-0,2467w+37,512, 100-w-x-y)$ ;

si $1,2 < w \leq 1,3$ :
au sein de la plage d'une figure entourée par les courbes MW, WN et NO, et les lignes droites OF, FC et CM qui relient les points M, W, N, O, F et C, ou sur les segments de ligne ci-dessus (à l'exclusion des points sur la ligne droite CM) :

M      $(0,0, -0,3004w^2+2,419w+55,53, 0,3004w^2-3,419w+44,47)$,

(suite)

| | |
|---|---|
| W | $(10,0, -0,3645w^2+3,5024w+34,422, 0,3645w^2-4,5024w+55,578)$, |
| N | $(18,2, -0,3773w^2+3,319w+28,26, 0,3773w^2-4,319w+53,54)$, |
| O | $(36,8, -0,1392w^2+1,4381w+24,475, 0,1392w^2-2,4381w+38,725)$, |
| F | $(36,6, -3w+3,9, 2w+59,5)$, |
| C | $(0,0, 0,1081w^2-5,169w+58,447, -0,1081w^2+4,169w+41,553)$; |

les courbes MW, WN et NO étant représentées par les coordonnées suivantes :

| | |
|---|---|
| MW | $(x, (0,0043w^2-0,0359w+0,1509)x^2+(-0,0493w^2+0,4669w-3,6193)x-0,3004w^2+2,419w+55,53, 100-w-x-y)$, |
| WN | $(x, (0,0055w^2-0,0326w+0,0665)x^2+(-0,1571w^2+0,8981w-2,6274)x+0,6555w^2-2,2153w+54,044, 100-w-x-y)$, |
| NO | $(x, (-0,00062w^2+0,0036w+0,0037)x^2+(0,0375w^2-0,239w-0,4977)x-0,8575w^2+6,4941w+36,078, 100-w-x-y)$ ; |

si $1,3 < w \leq 4,0$ :
au sein de la plage d'une figure entourée par les courbes MW, WN et NO, et les lignes droites OB', B'D, DC et CM qui relient les points M, W, N, O, B', D et C, ou sur les segments de ligne ci-dessus (à l'exclusion des points sur la ligne droite CM) :

les points M, W, N, O et C étant définis comme dans le cas de $(1,2 < w \leq 1,3)$, et

| | |
|---|---|
| B' | $(36,6, 0,0, -w+63,4)$, |
| D | $(-2,8226w+40,211, 0,0, 1,8226w+59,789)$, et |

les courbes MW, WN et NO étant représentées par les coordonnées comme dans le cas de $(1,2 < w \leq 1,3)$ ; et

si $4,0<w\leq7,0$ :
au sein de la plage d'une figure entourée par les courbes MW, WN et NO, et les lignes droites OB', B'D, DC et CM qui relient les points M, W, N, O, F et C, ou sur les segments de ligne ci-dessus (à l'exclusion des points sur la ligne droite CM) :

| | |
|---|---|
| M | $(0,0, -0,0667w^2+0,8333w+58,133, 0,0667w^2-1,8333w+41,867)$, |
| W | $(10,0, -0,0667w^2+1,1w+39,267, 0,0667w^2-2,1w+50,733)$, |
| N | $(18, 2, -0,0889w^2+1,3778w+31,411, 0,0889w^2-2,3778w+50,389)$, |
| O | $(36,8, -0,0444w^2+0,6889w+25,956, 0,0444w^2-1,6889w+37,244)$, |
| B' | $(36,6, 0,0, -w+63,4)$, |
| D | $(-2,8W+40, 1, 0,0, 1,8w+59,9)$, |
| C | $(0,0, 0,0667w^2-4,9667w+58,3, -0,0667w^2+3,9667w+41,7)$ ; |

les courbes MW, WN et NO étant représentées par les coordonnées suivantes :

| | |
|---|---|
| MW | $(x, (0,00357w^2-0,0391w+0,1756)x^2+(-0,0356w^2+0,4178w-3,6422)x-0,0667w^2+0,8333w+58,103, 100-w-x-y)$, |
| WN | $(x, (-0,002061w^2+0,0218w-0,0301)x^2+(0,0556w^2-0,5821w-0,1108)x-0,4158w^2+4,7352w+43,383, 100-w-x-y)$, |
| NO | $(x, (0,0082x^2+(0,0022w^2-0,0345w-0,7521)x-0,1307w^2+2,0247w+42,327, 100-w-x-y)$. |

6. Composition comprenant un réfrigérant comprenant du $CO_2$, du R32, du HFO-1132(E) et du R1234yf,

dans laquelle, lorsque le % en masse de $CO_2$, R32, HFO-1132(E) et R1234yf sur la base de leur somme est respectivement représenté par w, x, y, et z, dans un diagramme de composition ternaire dans lequel la somme de R32, HFO-1132(E) et R1234yf est (100-w) % en masse les coordonnées (x,y,z) sont

si $1,2 < w \leq 4,0$ :

au sein de la plage d'une figure entourée par les courbes MW et WN, et les lignes droites NE, EC et CM qui relient les points M, W, N, E et C, ou sur les segments de ligne ci-dessus (à l'exclusion des points sur la ligne droite CM) :

| M | $(0,0, -0,3004w^2+2,419w+55,53, 0,3004w^2-3,419w+44,47)$, |
|---|---|
| W | $(10,0, -0,3645w^2+3,5024w+34,422, 0,3645w^2-4,5024w+55,578)$, |
| N | $(18,2, -0,3773w^2+3,319w+28,26, 0,3773w^2-4,319w+53,54)$, |
| E | $(-0,0365w+18,26, 0,0623w^2-4,5381w+31,856, -0,0623w^2+3,5746w+49,884)$, |
| C | $(0,0, 0,1081w^2-5,169w+58,447, -0,1081w^2+4,169w+41,553)$; |

les courbes MW et WN étant représentées par les coordonnées suivantes :

| MW | $(x, (0,0043w^2-0,0359w+0,1509)x^2+(-0,0493w^2+0,4669w-3,6193) x-0,3004w^2+2,419w+55,53, 100-w-x-y)$, |
|---|---|
| WN | $(x, (0,0055w^2-0,0326w+0,0665)x^2+(-0,1571w^2+0,8981w-2,6274)x+0,6555w^2-2,2153w+54,044, 100-w-x-y)$ ; ou |

si $4,0<w \leq 7,0$ :

au sein de la plage d'une figure entourée par les courbes MW et WN, et les lignes droites NE, EC et CM qui relient les points M, W, N, E et C, ou sur les segments de ligne ci-dessus (à l'exclusion des points sur la ligne droite CM) :

| M | $(0,0, -0,0667w^2+0,8333w+58,133, 0,0667w^2-1,8333w+41,867)$, |
|---|---|
| W | $(10,0, -0,0667w^2+1,1w+39,267, 0,0667w^2-2,1w+50,733)$, |
| N | $18,2, -0,0889w^2+1,3778w+31,411, 0,0889w^2-2,3778w+50,389)$, |
| E | $(18,1, 0,0444w^2-4,3556w+31,411, -0,0444w^2+3,3556w+50,489)$, |
| C | $(0,0, 0,0667w^2-4,9667w+58,3, -0,0667w^2+3,9667w+41,7)$ ; |

les courbes MW et WN étant représentées par les coordonnées suivantes :

| MW | $(x, (0,00357w^2-0,0391w+0,1756)x^2+(-0,0356w^2+0,4178w-3,6422)x-0,0667w^2+0,8333w+58,103, 100-w-x-y)$, et |
|---|---|
| WN | $(x, (-0,002061w^2+0,0218w-0,0301)x^2+(0,0556w^2-0,5821w-0,1108)x-0,4158w^2+4,7352w+43,383, 100-w-x-y)$. |

**7.** Composition selon l'une quelconque des revendications 1 à 6, qui comprend en outre une huile de réfrigération.

**8.** Utilisation de la composition selon l'une quelconque des revendications 1 à 7 en tant que réfrigérant alternatif au R410A.

**9.** Machine de réfrigération comprenant la composition selon l'une quelconque des revendications 1 à 7 en tant que fluide de travail.

**10.** Procédé de fonctionnement d'une machine de réfrigération, comprenant la mise en circulation de la composition selon l'une quelconque des revendications 1 à 7 en tant que fluide de travail dans une machine de réfrigération.

Fig. 1

Fig. 2

Fig. 3

Fig. 4

Fig. 5

Fig. 6

Fig. 7

Fig. 8

Fig. 9

HFO1132(E)

Ternary composition diagram (7% CO₂)
GWP=125
GWP=250
GWP=350
WCF lower flammability
ASHRAE lower flammability (WCF and WCFF)
80% cap. (relative to R410A)

R32

R1234yf

**EP 3 957 700 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015186557 A